(19) **Europäisches Patentamt**
**European Patent Office**
**Office européen des brevets**

(11) **EP 4 716 310 A1**

(12) **EUROPEAN PATENT APPLICATION**
published in accordance with Art. 153(4) EPC

(43) Date of publication:
25.03.2026 Bulletin 2026/13

(21) Application number: 24807633.3

(22) Date of filing: 17.05.2024

(51) International Patent Classification (IPC):
H04W 52/02 (2009.01)     H04W 72/044 (2023.01)
H04W 72/23 (2023.01)     H04W 52/52 (2009.01)
H04W 76/28 (2018.01)     H04W 84/04 (2009.01)

(52) Cooperative Patent Classification (CPC):
H04W 52/02; H04W 52/52; H04W 72/044;
H04W 72/23; H04W 76/28; H04W 84/04

(86) International application number:
PCT/KR2024/095785

(87) International publication number:
WO 2024/237763 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.05.2023 KR 20230064509

(71) Applicant: LG Electronics Inc.
Yeongdeungpo-gu
Seoul 07336 (KR)

(72) Inventors:
• KIM, Seonwook
Seoul 06772 (KR)
• LEE, Youngdae
Seoul 06772 (KR)
• YANG, Suckchel
Seoul 06772 (KR)
• YOU, Hyangsun
Seoul 06772 (KR)
• KO, Hyunsoo
Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **APPARATUS AND METHOD FOR SUPPORTING NETWORK ENERGY SAVING OPERATION IN WIRELESS COMMUNICATION SYSTEM**

(57) The purpose of the present disclosure is to support a network energy saving (NES) operation in a wireless communication system, and a method performed by an apparatus may comprise the steps of: receiving first configuration information related to cell discontinuous transmission (DTX) or cell discontinuous reception (DRX) from a base station; receiving second configuration information related to DTX or DRX of the apparatus from the base station; identifying an active period and a non-active period according to a pattern of the DTX or DRX; and controlling a communication operation on the basis of the active period and the non-active period.

FIG. 29

Base station (2920) — NCR-Fwd (2934)

Configure beam index #n for a slot (S2901)

Configure/activate cell DTX/DRX for which non-active period includes the slot (S2903)

S2905 — NCR-Fwd assumes that beam index #n is invalid for the slot

Description

## TECHNICAL FIELD

The following description relates to a wireless communication system, and to a device and method for supporting network energy saving (NES) operation in a wireless communication system.

## BACKGROUND ART

The 5G mobile communications system, the successor to long-term evolution (LTE), is a new, clean-slate mobile communications system characterized by high performance, low latency, and high availability. 5G NR may utilize all available spectrum resources, from low-frequency bands below 1 GHz, to mid-frequency bands between 1 GHz and 10 GHz, and to high-frequency bands (e.g., millimeter wave) above 24 GHz. 6G systems are being developed based on the underlying technologies of 5G mobile communications.

The 6G system aims to achieve (i) extremely high data rates per device, (ii) a very large number of connected devices, (iii) global connectivity, (iv) ultra-low latency, (v) reduced energy consumption for battery-free Internet of Things (IoT) devices, (vi) ultra-reliable connectivity, and (vii) connected intelligence with machine learning capability. The vision of the 6G system may include four aspects: intelligent connectivity, deep connectivity, holographic connectivity, and ubiquitous connectivity.

## DISCLOSURE

## TECHNICAL PROBLEM

The present disclosure relates to a device and a method for effectively supporting a network energy saving (NES) operation of a base station in a wireless communication system.

The present disclosure relates to a device and a method for effectively operating a node for assisting communication between a base station and a UE in response to a NES operation of the base station in a wireless communication system.

The present disclosure relates to a device and a method for effectively operating a network controlled repeater (NCR) node or an integrated access and backhaul (IAB) node according to a spatial domain adaptation operation of a base station in a wireless communication system.

The present disclosure relates to a device and a method for controlling a beam used in an NCR node or an IAB node according to a spatial domain adaptation operation of a base station in a wireless communication system.

The present disclosure relates to a device and a method for effectively operating an NCR node or an IAB node according to a power domain adaptation operation of a base station in a wireless communication system.

The present disclosure relates to a device and a method for controlling a signal processing gain value of an NCR node or an IAB node according to a power domain adaptation operation of a base station in a wireless communication system.

The present disclosure relates to a device and a method for controlling a beam used in an NCR node or an IAB node according to a power domain adaptation operation of a base station in a wireless communication system.

The present disclosure relates to a device and a method for effectively operating an NCR node or an IAB node according to a cell discontinuous transmission (DTX) or cell discontinuous reception (DRX) operation of a base station in a wireless communication system.

The present disclosure relates to a device and a method for controlling a beam used in an NCR node or an IAB node according to a cell DTX or cell DRX operation of a base station in a wireless communication system.

The present disclosure relates to a device and a method for controlling available resources of an NCR node or an IAB node according to a cell DTX or cell DRX operation of a base station in a wireless communication system.

The present disclosure relates to a device and a method for performing control signaling related to a NES operation of a base station in a wireless communication system.

The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

## TECHNICAL SOLUTION

In one example of the present disclosure, a method performed by a UE in a wireless communication system may comprise: receiving, from the base station, first configuration information related to a cell discontinuous transmission (DTX) or a cell discontinuous reception (DRX); receiving, from the base station, second configuration information related to a DTX or a DRX of the device; checking an active duration and an inactive duration according to a pattern of the DTX or the DRX; and controlling a communication operation based on the active duration and the inactive duration. Here, the inactive duration according to the pattern of the DTX or the DRX is configured to include an inactive duration according to a pattern of the cell DTX or the cell DRX.

In one example of the present disclosure, a method performed by a UE in a wireless communication system may comprise a transceiver and a processor connected to the transceiver, wherein the processor may be configured to: receive, from the base station, first configuration information related to a cell discontinuous transmission (DTX) or a cell discontinuous reception (DRX); receive, from the base station, second configuration information related to a DTX or a DRX of the device; check an active duration and an inactive duration according to a pattern of the DTX or the DRX; and control a communication operation based on the active duration and the inactive duration. Here, the inactive duration according to the pattern of the DTX or the DRX is configured to include an inactive duration according to a pattern of the cell DTX or the cell DRX.

In one example of the present disclosure, a communication device may comprise at least one processor, and at least one computer memory connected to the at least one processor and storing instructions that direct operations when executed by the at least one processor, the operations comprising: receiving, from the base station, first configuration information related to a cell discontinuous transmission (DTX) or a cell discontinuous reception (DRX); receiving, from the base station, second configuration information related to a DTX or a DRX of the device; checking an active duration and an inactive duration according to a pattern of the DTX or the DRX; and controlling a communication operation based on the active duration and the inactive duration. Here, the inactive duration according to the pattern of the DTX or the DRX is configured to include an inactive duration according to a pattern of the cell DTX or the cell DRX.

In one example of the present disclosure, a non-transitory computer-readable medium storing at least one instruction may comprise the at least one instruction executable by a processor, wherein the at least one instruction causing a device, the processor, to: receive, from the base station, first configuration information related to a cell discontinuous transmission (DTX) or a cell discontinuous reception (DRX); receive, from the base station, second configuration information related to a DTX or a DRX of the device; check an active duration and an inactive duration according to a pattern of the DTX or the DRX; and control a communication operation based on the active duration and the inactive duration. Here, the inactive duration according to the pattern of the DTX or the DRX is configured to include an inactive duration according to a pattern of the cell DTX or the cell DRX.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

ADVANTAGEOUS EFFECTS

According to embodiments based on the present disclosure, the following effects may be obtained.

According to the present disclosure, appropriate system operation corresponding to a network energy saving (NES) operation may be enabled.

The effects obtainable from the embodiments of the present disclosure are not limited to those mentioned above, and other effects not explicitly described may be clearly derived and understood by those skilled in the art to which the technical features of the present disclosure are applied, based on the description of the embodiments of the present disclosure below. That is, unintended effects resulting from implementing the configurations described in the present disclosure may also be derived by those skilled in the art from the embodiments of the present disclosure.

BRIEF DESCRIPTION OF THE DRAWINGS

FIG. 1 illustrates an example of a flexible network topology applicable to the present disclosure.
FIG. 2 illustrates an example of a structure of a wireless communication system applicable to the present disclosure.
FIG. 3 illustrates an example of a wireless device applicable to the present disclosure.
FIG. 4 illustrates an example of a communication procedure between a first node and a second node applicable to the present disclosure.
FIG. 5 illustrates an example of a general functional architecture related to both functionality-based life cycle management (LCM) and model-based LCM.
FIG. 6 illustrates an example of an operation procedure based on an AI/ML model applicable to the present disclosure.
FIG. 7 illustrates an example of an electromagnetic spectrum applicable to the present disclosure.

FIG. 8 illustrates an example of a procedure for transmitting system information for THz communication applicable to the present disclosure.

FIG. 9 illustrates an example of a beam management procedure applicable to the present disclosure.

FIG. 10a illustrates an example of a general NTN scenario based on a transparent payload applicable to the present disclosure.

FIG. 10b illustrates an example of a general NTN scenario based on a regenerative payload applicable to the present disclosure.

FIG. 11a illustrates examples of components of an orbital parameter ephemeris (OPE) format.

FIG. 11b illustrates examples of offsets in a link related to a satellite.

FIG. 11c illustrates examples of timing advance (TA) values in a link related to a satellite.

FIG. 12a and FIG. 12b illustrate examples of sensing operations applicable to the present disclosure.

FIG. 13 illustrates an example of time/frequency resources for sensing operation applicable to the present disclosure.

FIG. 14 illustrates an example of a procedure related to sensing operation applicable to the present disclosure.

FIG. 15 illustrates an example of an operation procedure of a base station supporting a network energy saving (NES) technology applicable to the present disclosure.

FIG. 16 illustrates an example of a procedure for cell discontinuous transmission (DTX)/discontinuous reception (DRX) operation applicable to the present disclosure.

FIG. 17 illustrates an example of a procedure for channel state information (CSI) measurement and reporting applicable to the present disclosure.

FIG. 18 illustrates examples of a cell DTX pattern and/or a cell DRX pattern according to an embodiment of the present disclosure.

FIG. 19 illustrates an example of a structure of a network controlled repeater (NCR) applicable to the present disclosure.

FIG. 20 illustrates an example of a structure of an integrated access and backhaul (IAB) node applicable to the present disclosure.

FIG. 21 illustrates an example of a procedure for receiving a signal based on a spatial domain adaptation pattern of a base station according to an embodiment of the present disclosure.

FIG. 22 illustrates an example of a procedure for transmitting a signal based on a spatial domain adaptation pattern of a base station according to an embodiment of the present disclosure.

FIG. 23 illustrates an example of a procedure for applying a restriction on a beam based on a spatial domain adaptation pattern of a base station according to an embodiment of the present disclosure.

FIG. 24 illustrates an example of a procedure for transferring a signal based on a power domain adaptation pattern of a base station according to an embodiment of the present disclosure.

FIG. 25 illustrates an example of a procedure for processing a downlink signal based on a power domain adaptation pattern of a base station according to an embodiment of the present disclosure.

FIG. 26 illustrates an example of a procedure for configuring a DTX/DRX pattern of a device controlled by a base station based on a cell DTX/DRX pattern of the base station according to an embodiment of the present disclosure.

FIG. 27 illustrates an example of a procedure for applying a configured beam based on a cell DTX/DRX pattern of a base station according to an embodiment of the present disclosure.

FIG. 28 illustrates an example of a procedure for determining resource availability based on a cell DTX/DRX pattern of a base station according to an embodiment of the present disclosure.

FIG. 29 illustrates an example of a procedure for beam management between a base station and an NCR according to an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, parentheses used in the present disclosure may indicate "for example". Specifically, when expressed as "control information (ABC)", "ABC" may be described as an example of the "control information". For example, "control information" may also include DEF as another example. In other words, the "control information" of the present disclosure is not limited to "ABC", and "ABC" may be described merely as an example of the "control information". In addition, even when expressed as "control information (i.e., ABC)" "ABC" may be described as an example of the "control information".

In addition, the terms "first", "second", and the like used in the present disclosure are only for the purpose of distinguishing one component from another and are not used to limit the components, and unless otherwise specified, do not limit the order, importance, or the like among the components. Therefore, the first component in one embodiment of the present disclosure may be referred to as the second component in another embodiment, and likewise, the second component in one embodiment may be referred to as the first component in another embodiment.

In the following description, 'when, if, or in case of' may be replaced with 'based on'.

A technical feature described individually in one figure in the present disclosure may be individually implemented, or may be simultaneously implemented.

In the present disclosure, a terminal refers to a user-side device (user equipment, UE) or a consumer-side device, and may also be referred to as a first node that receives or transmits a signal from or to a base station/a second node/an integrated access and backhaul (IAB) node, or a transmission-reception point (TRP). The terminal may correspond to a physical node or a logical node. The terminal may correspond to a user-side endpoint or to an intermediate point between other endpoints. In communication between two points that are not limited to endpoints (including one-to-one, many-to-one, one-to-many, and many-to-many communication), the terminal may correspond to a served node. The terminal may be a node with a fixed location or a node whose location is not fixed (i.e., a mobile node).

In the present disclosure, a base station (BS) refers to a network-side device and may also be referred to as a second node, an IAB node, an x-nodeB (x-NodeB, where x may be an abbreviation related to a radio access technology (RAT)), or a transmission-reception point (TRP). The base station may correspond to a physical node or a logical node. The base station may correspond to a network-side endpoint or to an intermediate point between other endpoints. In communication between two points that are not limited to endpoints (including one-to-one, many-to-one, one-to-many, and many-to-many communication), the base station may correspond to a serving node. The base station may be a node with a fixed location or a node whose location is not fixed.

In the present disclosure, a higher layer parameter may be configured for, pre-configured for, or predefined for a UE. For example, a base station may transmit a higher layer parameter to the UE. For example, the UE may transmit a parameter such as capability to the base station as a higher layer parameter. For example, the higher layer parameter may be transmitted through radio resource control (RRC) signaling or medium access control (MAC) signaling.

In the present disclosure, when information/state/parameter is "configured or pre-configured", it may be interpreted as information/state/parameter being provided or pre-provided to the UE through predefined signaling (e.g., SIB, MAC, RRC) from the base station. In the present disclosure, when information/state/parameter is "defined or pre-defined", it may be interpreted as information/state/parameter being already known or stored in advance at both the base station and the UE without signaling between the base station and the UE.

The technology described in the present disclosure may be used in various wireless communication systems such as code division multiple access (CDMA), frequency division multiple access (FDMA), time division multiple access (TDMA), orthogonal frequency division multiple access (OFDMA), and single carrier frequency division multiple access (SC-FDMA), and so on. The CDMA may be implemented with a radio technology such as universal terrestrial radio access (UTRA) or CDMA2000. The TDMA may be implemented with a radio technology such as global system for mobile communications (GSM)/general packet radio service (GPRS)/enhanced data rates for GSM evolution (EDGE). The OFDMA may be implemented with a radio technology such as Institute of Electrical and Electronics Engineers (IEEE) 802.11 (Wi-Fi), IEEE 802.16 (WiMAX), IEEE 802.20, evolved UTRA (E-UTRA), long term evolution (LTE), or 5G new radio (NR).

The technology described in the present disclosure may be implemented as 6G wireless technology and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, tactile internet, high throughput, high network capacity, high energy efficiency, low backhaul and access network congestion, and enhanced data security.

A. 6G network architecture

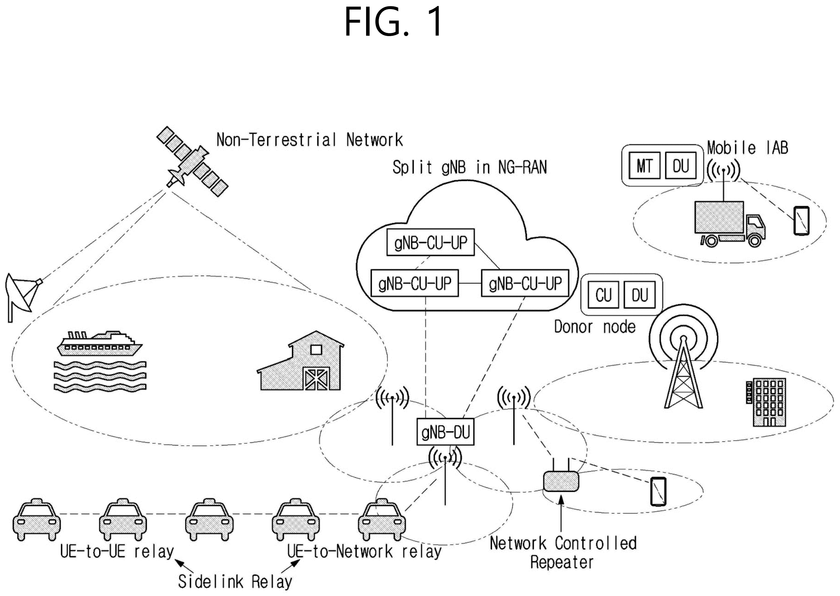

FIG. 1 illustrates an example of a flexible network topology applicable to the present disclosure.

To compensate for incomplete areas of network coverage, a split radio access network (RAN) topology that is more flexible and resilient may be considered. For this purpose, various nodes such as IAB nodes, relays, and RF repeaters as illustrated in FIG. 1 may be applied, and NTN may also be integrated. For example, an IAB node may correspond to a node providing a wireless backhaul. For example, a relay may refer to any intermediate point, and in the case of a sidelink relay in which a UE functions as a relay, it may collectively refer to a UE-to-network (U2N) relay and a UE-to-UE (U2U) relay. For example, an RF repeater may correspond to a node that performs simple signal amplification and forwarding, and in the case of a network-controlled repeater, it may not only perform signal amplification and forwarding but also adjust transmission and reception configuration based on information provided from the network. For example, an NTN node may correspond to a satellite or aerial vehicle that provides NTN coverage difficult to be provided by a terrestrial network. In addition to these examples, various other intermediate points may be introduced to improve the network topology.

Referring to FIG. 1, the split RAN may support division of a base station into one centralized unit (CU) and one or more distributed units (DUs). The CU and DU may correspond to logical units. The CU may be further divided into a control plane (CP) part and one or more user plane (UP) parts. A failure in the CU-CP may affect not only the CU-UP but also the DU, and therefore, various intermediate points may be introduced to compensate for this.

An intermediate point may correspond to a UE or a base station depending on its relative relationship with other nodes. For example, an IAB node may include a mobile termination (MT) part and a DU. The MT may connect the IAB node to a donor node. The DU of the IAB node may serve other UEs or connect to another IAB node to provide multi-hop wireless backhaul to UEs. That is, the IAB node may correspond to a base station in relation to a user-side node, and may correspond to a UE in relation to a network-side node.

In some examples of the present disclosure, the description of a UE may be equally applied not only to a user-side endpoint but also to an intermediate point that corresponds to a UE in relation to a network-side endpoint. Similarly, in some examples of the present disclosure, the description of a base station may be equally applied not only to a network-side endpoint but also to an intermediate point that corresponds to a base station in relation to a user-side endpoint. However, in most cases where no additional explanation is provided for operations among three or more entities, the communication entities in the present disclosure are briefly described by the terms UE and/or base station (or first node and/or second node), where the terms UE and/or base station (or first node and/or second node) are interpreted as including or substituting any endpoint or intermediate point depending on the relationship with other nodes.

That is, in some examples of the present disclosure, for the sake of simplicity of description, the subject of an operation may be referred to as a base station and/or a UE (or a first node and/or a second node). In addition, the terms base station and/or UE (or first node and/or second node) may be interpreted or substituted as follows: for example, the base station (or first node) and the UE (or second node) may respectively correspond to a first endpoint and a second endpoint; may respectively correspond to an endpoint and an intermediate point; may respectively correspond to an intermediate point and an endpoint; or may respectively correspond to a first intermediate point and a second intermediate point.

In the present disclosure, there may be no intermediate point or one or more intermediate points between the base station and the UE. When an intermediate point exists, the intermediate point may correspond to an IAB node, a relay, an RF repeater, a non-terrestrial network (NTN) node, or a node supporting other functions. The intermediate point may be a node with a fixed location or a node whose location is not fixed.

Systems applicable to this disclosure

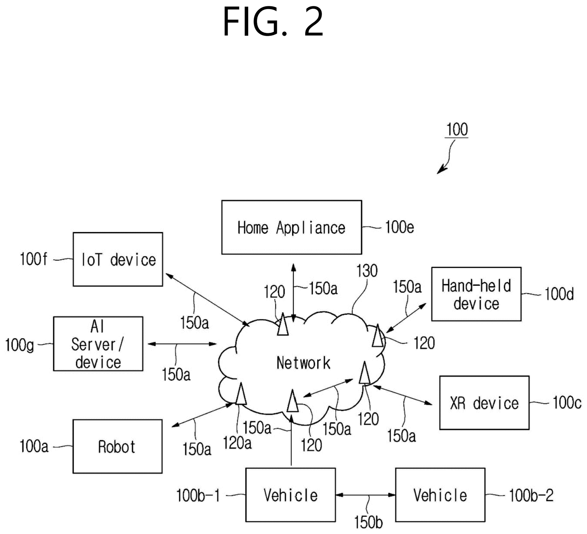

FIG. 2 illustrates an example of a structure of a wireless communication system applicable to the present disclosure. The communication system 100 of FIG. 2, to which the present disclosure is applied, includes a wireless device 110, a network device 120, and a network 130. Here, the wireless device 110 refers to a device that performs communication using a radio access technology (e.g., LTE, LTE-A, LTE-A Pro, NR, 5G, 5G-A, 6G) and may be referred to as a communication/radio/5G/6G device. Without being limited thereto, the wireless device 110 may include a robot 110a, vehicles 110b-1 and 110b-2, an extended reality (XR) device 110c, a hand-held device 110d, a home appliance 110e, an Internet of Things (IoT) device 110f, and an artificial intelligence (AI) device/server 110g. For example, the vehicles may include vehicles equipped with wireless communication capability, autonomous vehicles, or vehicles capable of performing vehicle-to-vehicle communication, and the vehicles 110b-1 and 110b-2 may include unmanned aerial vehicles (UAVs) such as drones. The XR device 110c may include augmented reality (AR), virtual reality (VR), or mixed reality (MR) devices and may be implemented in the form of a head-mounted device (HMD), a head-up display (HUD) mounted in a vehicle, a television, a smartphone, a computer, a wearable device, a home appliance, digital signage, a vehicle, or a robot. The hand-held device 110d may include a smartphone, a smart pad, a wearable device (e.g., smart watch, smart glasses), or a computer (e.g., laptop, etc.). The home appliance 110e may include a TV, refrigerator, or washing machine. The IoT device 110f may include sensors or smart meters. The wireless device 110 may correspond to a UE (or a first node) or an intermediate point. The network device 120 may correspond to a base station (or a second node) or another intermediate point. For example, the network device 120 may also be implemented as a wireless device 110, and a specific wireless device 120a may operate as the network device 120 for another wireless device 110.

The wireless devices 110a to 110f may be connected to the network 130 through the network device 120. AI technology may be applied to the wireless devices 110a to 110f, and the wireless devices 110a to 110f may be connected to an AI server 110g through the network 130. The network 130 may be configured using a 3G network, a 4G (e.g., LTE) network, a 5G (e.g., NR) network, or a 6G network. The wireless devices 110a to 110f may communicate with each other through the network device 120/the network 130, but may also communicate directly (e.g., through sidelink communication) without passing through the network device 120/the network 130. For example, the vehicles 110b-1 and 110b-2 may perform direct communication (e.g., vehicle-to-vehicle (V2V) or vehicle-to-everything (V2X) communication). In addition, the IoT device 110f (e.g., a sensor) may perform direct communication with another IoT device (e.g., another sensor) or with another wireless device 110a to 110f.

Wireless communication/connection 150a, 150b, 150c may be established between wireless devices 110a to 110f and a network device 120, and between network devices 120. Here, the wireless communication/connection may be established through various wireless access technologies such as uplink/downlink communication 150a, sidelink communication 150b (or D2D communication), and communication between network devices 150c (e.g., relay, integrated access backhaul (IAB)). Through the wireless communication/connection 150a, 150b, 150c, the wireless device and the network device/wireless device, and the network device and the network device may transmit and receive wireless signals with each other. For example, the wireless communication/connection 150a, 150b, 150c may transmit and receive signals through various physical channels. To this end, based on various descriptions of the present disclosure, at least a part of various configuration information configuring processes for transmitting/receiving wireless signals, various signal processing processes (e.g., channel encoding/decoding, modulation/demodulation, resource mapping/demapping, etc.), and resource allocation processes may be performed.

Device applicable to the present disclosure

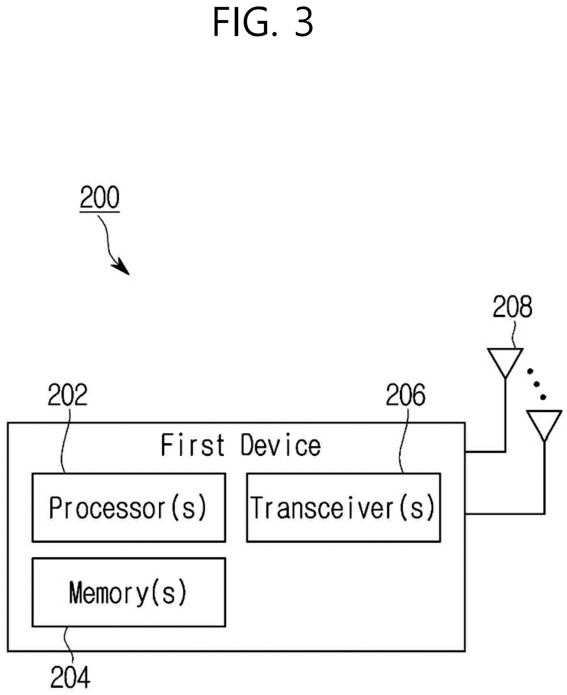

FIG. 3 illustrates an example of a wireless device applicable to the present disclosure.

Referring to FIG. 3, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 3, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device described with reference to FIG. 3 may be understood as at least a part of the structure of various devices. For example, the structure of the wireless device illustrated in FIG. 3 may correspond to at least a part of the various devices described with reference to FIG. 2 (e.g., a robot 110a, vehicles 110b-1 and 110b-2, an XR device 110c, a portable device 110d, a home appliance 110e, an IoT device 110f, and an AI device/server 110g). Furthermore, depending on various embodiments, the device may further include other components in addition to those illustrated in FIG. 3.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks.

The structure of the wireless device illustrated in FIG. 3 may be understood as being a part of a UE (or a first node), a part of an intermediate point, or a part of a base station (or a second node). When the device illustrated in FIG. 3 is the base station (or the second node), the device may further include a wired transceiver for front haul and/or back haul communication. However, when the front haul and/or back haul communication is based on wireless communication, at least one transceiver 206 illustrated in FIG. 3 may be used for the front haul and/or back haul communication, and the wired transceiver may not be included.

### B. Communication Procedures

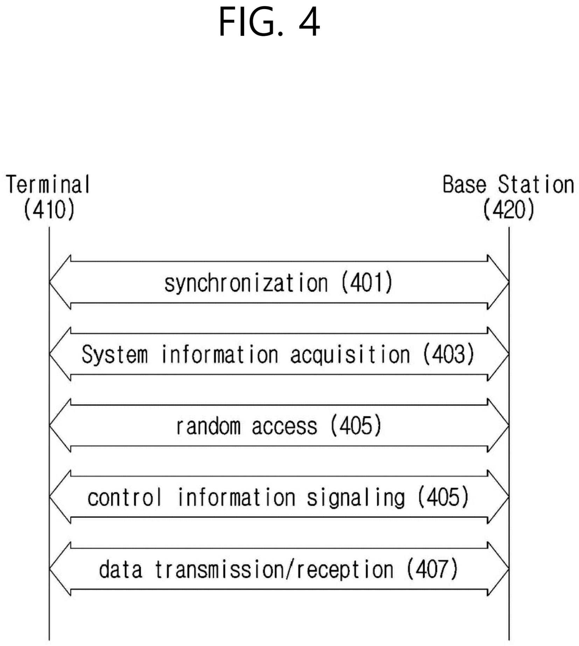

FIG. 4 illustrates an example of a communication procedure between a first node (e.g., a UE) and a second node (e.g., a base station) applicable to the present disclosure. The second node of FIG. 1 may support dynamic spectrum sharing (DSS) and may provide connection not only to nodes where 6G technology is implemented but also to nodes where pre-6G wireless communication (e.g., 5G, 4G) technology is implemented. That is, the first node of FIG. 1 may implement 6G technology or may implement pre-6G wireless communication (e.g., 5G, 4G) technology. In addition, the first node and/or the second node may support not only a non-overlapping full duplex mode but also a full duplex mode.

In FIG. 4, for simplicity of description, the first node and the second node are assumed to be a UE and a base station, respectively, and operations in which the UE 440 and the base station 420 transmit and/or receive data and operations performed prior thereto are illustrated. However, the operation of FIG. 1 is not limited to the operation between the UE and the base station, and may be interpreted as the operation between the first node and the second node. In addition, although FIG. 1 illustrates a direct wireless signal transmission/reception operation between the UE 440 and the base station 420, one or more intermediate points may exist between the UE 440 and the base station 420, and the wireless signal may be transmitted and received through one or more intermediate points.

Referring to FIG. 4, in step 401, the UE 440 and the base station 420 perform synchronization. For example, the UE 440 may perform an initial cell search operation. Specifically, the UE 440 may detect at least one synchronization signal for base station connection, which is transmitted from the base station 420 according to a predefined rule. Here, the synchronization signal may include a plurality of synchronization signals (e.g., a first synchronization signal (for example, a primary synchronization signal), a second synchronization signal (for example, a secondary synchronization signal), etc.) classified according to structure or purpose. Through this, the UE 440 may identify a boundary of a unit (e.g., a frame, subframe, slot, and/or symbol) configuring wireless signal transmission of the base station 420, and may obtain information related to the base station 420 (e.g., a cell identifier).

In step 403, the UE 440 obtains system information transmitted from the base station 420. The system information is information related to attributes, characteristics, and/or capabilities of the base station 420, which are required for the UE to access the base station 420 and use services, and may be classified according to content (e.g., whether it is essential for access), transmission structure (e.g., which channel is used, whether it is provided on-demand), and the like, for example, the system information may be classified into first system information (e.g., a master information block (MIB), primary system information) and second system information (e.g., a system information block (SIB), secondary system information). If necessary, the UE 440 may transmit a signal requesting the system information before receiving the system information. However, the request and provision of the system information may be performed after a random access procedure described below.

In step 405, the UE 440 and the base station 420 perform a random access procedure. The UE 440 may transmit and/or receive at least one message (e.g., a random access preamble, a random access response (RAR) message, etc.) for the random access procedure based on information related to a channel (e.g., channel location, channel structure, structure of supported preambles, etc.) for the random access procedure of the base station 420 obtained through the system information. For example, the UE 440 may transmit a first message (e.g., a preamble, MSG1) through a channel for the random access procedure, receive a second message (e.g., an RAR message, MSG2), transmit a third message (e.g.,

MSG3) including information related to the UE 440 (e.g., identification information) to the base station 420 by using scheduling information included in the second message, and receive a fourth message (e.g., MSG4) for contention resolution and/or connection establishment. In another example, the first message and the third message may be transmitted and received as a single message, or the second message and the fourth message may be transmitted and received as a single message.

In step 407, the UE 440 and the base station 420 perform signaling of control information. Here, the control information may be defined in various layers such as a layer for controlling connection (e.g., a radio resource control (RRC) layer), a layer for processing mapping between logical channels and transport channels (e.g., a media access control (MAC) layer), and a layer for processing physical channels (e.g., a physical (PHY) layer). For example, the UE 440 and the base station 420 may perform at least one of signaling for establishing a connection, signaling for determining configurations related to communication, and signaling for indicating allocated resources.

In step 409, the UE 440 and the base station 420 transmit and/or receive data. In other words, the UE 440 and the base station 420 may process and transmit and/or receive data based on the signaling of control information. For example, when transmitting data, the UE 440 or the base station 420 may perform at least one of channel encoding, rate matching, scrambling, constellation mapping, layer mapping, waveform modulation, antenna mapping, and resource mapping on information bits. Conversely, when receiving data, the UE 440 or the base station 420 may perform at least one of signal extraction from a resource, waveform demodulation per antenna, signal arrangement considering layer mapping, constellation demapping, descrambling, and channel decoding.

C. 6G System Core Technologies

As core implementation technologies of a 6G system, technologies such as artificial intelligence (AI), terahertz (THz) communication, optical wireless technology, free-space optical (FSO) backhaul network, massive MIMO technology, blockchain, 3D networking, quantum communication, unmanned aerial vehicles, cell-free communication, wireless information and energy transfer (WIET), integration of sensing and communication, integration of access and backhaul networks, holographic beamforming, big data analytics, and large intelligent surface (LIS) may be adopted.

C-1. Artificial intelligence

Introducing artificial intelligence (AI) into communication may simplify and enhance real-time data transmission. AI may determine how complex target tasks are performed by using numerous analyses. That is, AI may improve efficiency and reduce processing delay. Time-consuming tasks such as handover, network selection, and resource scheduling may be performed instantly by using AI. AI may also play an important role in M2M, machine-to-human, and human-to-machine communications. In addition, AI may enable rapid communication in a brain-computer interface (BCI). An AI-based communication system may be supported by meta-materials, intelligent structures, intelligent networks, intelligent devices, intelligent cognitive radios, self- sustaining wireless networks, and machine learning.

[Functional Framework]

The following describes a functional framework for AI/ML operations.

Hereinafter, for a more specific description of AI (or AI/ML), terms may be defined as follows.

- Data collection: Data collected from network nodes, management entities, or UEs, serving as the basis for AI model training, data analysis, and inference
- AI model: A data-driven algorithm applying AI techniques that generates a set of outputs including prediction information and/or decision parameters based on a set of inputs
- AI/ML training: An online or offline process of training an AI model by learning functions and patterns that best represent data and enable inference, to obtain a trained AI/ML model
- AI/ML inference: A process of predicting or inducing decisions based on collected data and an AI model by using the trained AI model

The Life Cycle Management (LCM) procedure for an AI/ML model (i.e., model training, model deployment, model inference, model monitoring, model update, etc.) may be classified into functionality-based LCM and model-based LCM. In functionality-based LCM, the AI/ML model may not be identifiable in the network, and the network may indicate activation/deactivation/fallback/switching of the AI/ML functionality. In model-identifier (ID)-based LCM, the AI/ML model may be identifiable in the network, and the network/UE may activate/deactivate/select/switch the AI/ML model through the model ID.

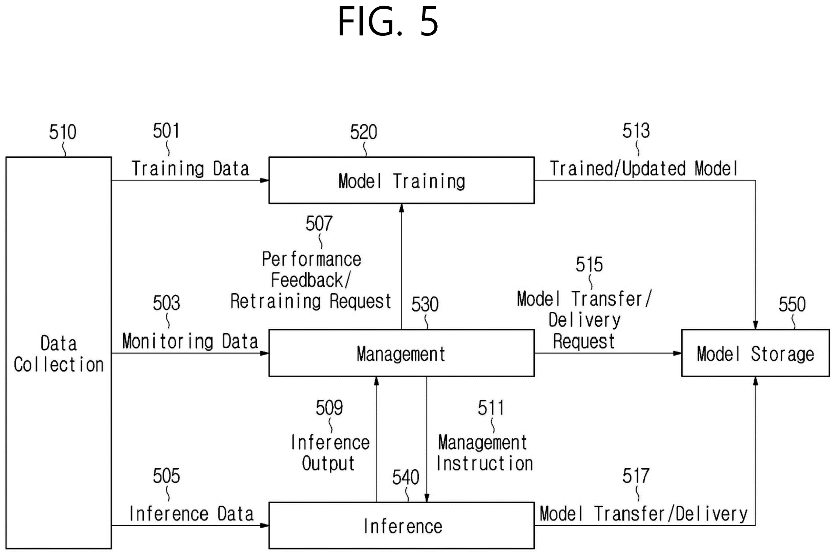

FIG. 5 illustrates an example of a general functional architecture related to both functionality-based LCM and model-based LCM. Some functions or some data/information/command flows (i.e., arrows) illustrated in FIG. 5 may be omitted.

Referring to FIG. 5, a general functional framework may be configured to include a data collection function 510, a model training function 520, a management function 530, an inference function 540, and a model storage function 550.

The data collection function 510 provides input data to the model training function 520, the management function 530, and the inference function 540. The data collection function 510 may perform data preparation based on raw data and may provide processed input data through the data preparation. Examples of raw data may include received data or measurement data from UEs or other network entities, and inference or output of an AI/ML model. The data collection function 510 may be performed by a single entity (e.g., a UE, a network node, etc.) or may be performed by a plurality of entities.

Here, training data 511 refers to data required as input for the AI/ML model training function 520. Monitoring data 512 refers to data required as input for the management 530 of the AI/ML model or the AI/ML functionality. Inference data 513 refers to data required as input for the AI/ML inference function 530.

The model training function 520 performs AI/ML model training, validation, and testing capable of generating model performance metrics that may be used as part of an AI/ML model testing procedure. The model training function 520 may perform data preparation (e.g., data pre-processing and cleaning, forming, and transformation) based on training data 511 transferred from the data collection function 510, if necessary.

Trained/Updated Model 521: If there is a model storage function 550, it is used to transfer a trained, validated and tested AI/ML model to the model storage function 550 or to transfer an updated version of the model to the model storage function 550.

The management function 530 supervises the operation of the AI/ML model or the AI/ML functionality. In addition, the management function 530 may make decisions to ensure appropriate inference operations based on data received from the data collection function 510 (i.e., monitoring data 512) and/or data received from the inference function 540 (i.e., inference output 541).

The management instruction 532 refers to information required as input to manage the inference function 540. The related information may include selection/(de)activation/switching of an AI/ML model or an AI/ML-based functionality, and may also include fallback to non-AI/ML operation (i.e., not relying on an inference process).

The model transfer/delivery request 533 may be used to request one or more models from the model storage 550.

The performance feedback/retraining request 531 refers to information required as input to the model training function 520 (e.g., for the purpose of model retraining or model updating).

The inference function 540 provides an output from a process of applying an AI/ML model or an AI/ML functionality by using data (i.e., inference data 513) provided by the data collection 510 as input. The inference function 540 may perform data preparation (e.g., data pre-processing and cleaning, formatting, and transformation) based on the inference data 513 transferred by the data collection 510. If necessary, the inference function 540 may also perform data preparation (e.g., data pre-processing and cleaning, forming, and transformation) based on the inference data 513 provided by the data collection function 510.

The inference output 541 is data used by the management function 530 to monitor the performance of an AI/ML model or an AI/ML functionality. The inference output 541 may include an inference output of the AI/ML model generated by the inference function 540, and details of the inference output may vary depending on the use case.

The model storage function 550 stores trained/updated models that may be used to perform the inference function 540. The model storage function 550 illustrated in FIG. 5 may serve as a reference point, if applicable, for protocol termination, model transmission/transfer, and related processes. In addition, the model storage function 550 is merely an example and is not intended to limit the actual storage location of the AI/ML model, and it may be omitted.

The model transfer/delivery 551 is used to deliver an AI/ML model to the inference function.

Depending on the capabilities of AI/ML functions between a plurality of nodes, levels of cooperation may be defined as follows, and modifications may be possible through a combination of a plurality of levels or separation of any one level.

Cat 0a) No collaboration framework: The AI/ML algorithm is purely implementation-based and does not require any modification of the wireless interface.

Cat 0b) This level corresponds to a framework without collaboration but involves a modified wireless interface adapted to efficiently implemented AI/ML algorithms.

Cat 1) Node-to-node assistance is involved to improve the AI/ML algorithm of each node. For example, this applies when a specific node receives assistance (for training, adaptation, etc.) from another node, and vice versa. At this level, model exchange between network nodes is not required.

Cat 2) Joint AI/ML operations among a plurality of nodes may be performed. This level requires AI/ML model commands or exchanges between network nodes.

FIG. 5 is a diagram illustrating an overall functional framework for an AI/ML model, and not all functions and/or all data/information/command signals illustrated in FIG. 5 may be performed within a specific node, but only some of them may be performed.

The AI/ML model may be classified into a one-side model or a two-side model depending on whether training and/or inference is performed within a single node or jointly/sequentially among a plurality of nodes.

The one-side model may refer to an AI/ML model in which inference is entirely performed by a single node (e.g., a UE or a network). Here, training of the AI/ML model may also be entirely performed by a single node. The training and inference of the AI/ML model may be performed by the same node, or the training and inference of the AI/ML model may be performed by different nodes, respectively.

The two-side model may refer to an AI/ML model in which joint inference is performed across a plurality of nodes (e.g., a UE and a network). The joint inference means that inference is jointly performed across a plurality of nodes, for example, a first part of the inference may be performed by a first node, and the remaining part of the inference may be performed by a second node. The two-side model may be classified into several types according to the training method of the AI/ML model.

- First type: The AI/ML model may be trained at a single node. In this case, joint training may be performed. Afterward, the trained model may be distributed to other nodes or entities.
- Second type: Joint training of the AI/ML model may be performed respectively at a plurality of nodes or entities (e.g., a network and a UE). The joint training may mean that model generation (e.g., a CSI generation part) and model reconstruction (CSI compression for sub-use cases) are trained within the same loop for forward activation and backward gradient. In this type, the joint training may include both simultaneous training (i.e., model generation training and model reconstruction training are performed simultaneously) and sequential training (i.e., model reconstruction training is performed after model generation training).
- Third type: Separate training of the AI/ML model may be performed respectively at a plurality of nodes (e.g., a network and a UE). The separate training may mean that training is sequentially started at one node and then continued at another node. In this case, when a first node first performs the AI/ML model and shares training data with a second node, the second node may perform the AI/ML model by using the shared training data. For example, training for a CSI generation part may be performed by the UE, and CSI reconstruction may be performed by the network.

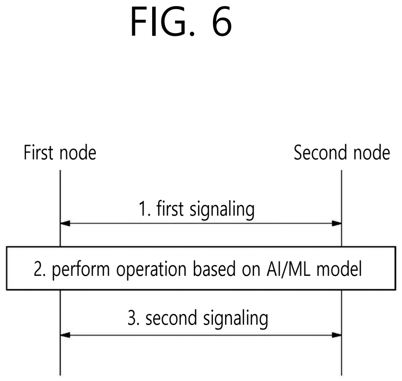

In the present disclosure described below, even without a specific mention (i.e., without an explicit reference such as by/based on/for an AI/ML model), the operation proposed in the present disclosure may be described or interpreted as being based on an AI/ML model, as illustrated in FIG. 6. FIG. 6 illustrates an example of an operation procedure based on an AI/ML model applicable to the present disclosure.

In addition, unless otherwise specifically limited in the description of the present disclosure, the AI/ML model may correspond to a one-side model in which inference is entirely performed by a single node, or a two-side model in which joint inference is performed across a plurality of nodes.

Step 1: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 1 used to perform operations based on an AI/ML model. For example, such signaling may correspond to training data used for AI/ML model training (i.e., generation and/or reconstruction) as illustrated in FIG. 2, or to inference data used for AI/ML model inference, or to feedback for an AI/ML model. If signaling between nodes is not required prior to the AI/ML model-based operation in the present disclosure, step 1 may be omitted. When a one-side model is used in the present disclosure, unidirectional/bidirectional signaling (set) in the present disclosure may correspond to the signaling in step 1. In addition, when a two-side model is used in the present disclosure, unidirectional/bidirectional signaling in the present disclosure may also correspond to the signaling in step 1, and repetitive signaling operations may also correspond to the signaling in step 1.

For example, in AI/ML model-based beam management (BM), when beam(s) with good quality are predicted (i.e., inferred) by the base station based on the AI/ML model, the base station may receive quality/strength information for multiple beams from the UE. Also, beam(s) with good quality are predicted (i.e., inferred) by the UE based on the AI/ML model, the UE may receive a plurality of beams from the base station.

Step 2: In the description of the present disclosure provided below, an operation (e.g., computation, selection, prediction, etc.) performed at a specific node (e.g., a UE, a network, etc.) or a joint operation (e.g., computation, selection, prediction, etc.) performed at a plurality of nodes (e.g., a UE, a network, etc.) may correspond to the operation of step 2, which is based on one or more functions within the functional framework of an AI/ML model, even without explicit mention. For example, this may correspond to training (i.e., generation and/or reconstruction) or inference of the AI/ML model illustrated in FIG. 2. When a one-side model is used, an operation performed by a single node in the present disclosure may correspond to the operation of step 2, in addition, when a two-side model is used, a joint operation performed by a plurality of nodes in the present disclosure may correspond to the operation of step 2.

For example, in AI/ML model-based BM, the base station may use quality/strength information for a plurality of beams received from the UE as inference data and may predict (i.e., infer) beam(s) with good quality based on the AI/ML model. Also, the UE may measure a plurality of beams received from the base station, use the measurement results as inference data, and predict (i.e., infer) beam(s) of good quality based on the AI/ML model.

Step 3: In the description of the present disclosure provided below, signaling (e.g., information/data/channel/-signal, etc.) or a set of signaling between a specific node (e.g., a UE, a network, etc.) and another node may be interpreted, even without explicit mention, as signaling or a set of signaling in step 3 that is generated as a result of an operation based on an AI/ML model. For example, this may correspond to an output resulting from inference of the AI/ML model illustrated in FIG. 2. If signaling between nodes is not required as a result of an operation based on the AI/ML model in the present disclosure, step 3 may be omitted. When a one-side model is used in the present disclosure, unidirectional/bidirectional signaling (set) in the present disclosure may correspond to the signaling in step 3. In addition, when a two-side model is used in the present disclosure, unidirectional/bidirectional signaling in the present disclosure may also correspond to the signaling in step 3, and in addition, repetitive signaling operations may also correspond to the signaling in step 3.

For example, in AI/ML model-based BM, the base station may transmit to the UE one or more beams predicted based on the AI/ML model as candidates to allow the UE to determine an optimal beam. In addition, the UE may report, to the base station, beam(s) predicted based on the AI/ML model as candidates in order to request transmission of candidate beams from the base station for determining an optimal beam.

C-2. THz communication

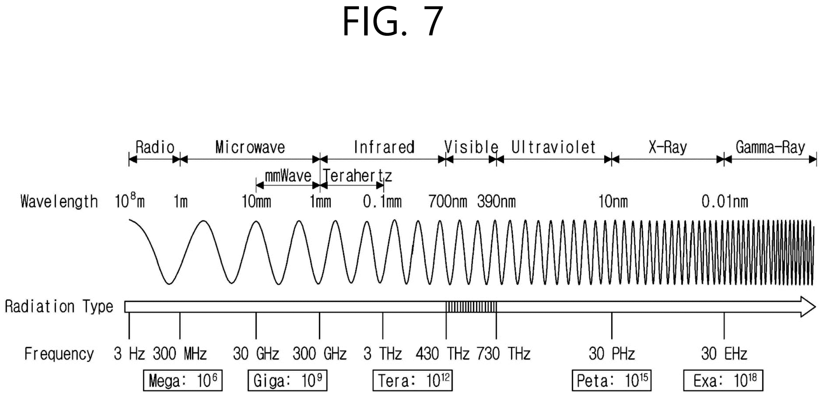

The data transmission rate may be increased by expanding the bandwidth. This may be achieved by using sub-THz communication with a wide bandwidth and applying advanced massive MIMO technology. THz waves, also known as sub-millimeter radiation, generally refer to a frequency band between 0.1 THz and 10 THz with a corresponding wavelength range of 0.03 mm to 3 mm. The 100 GHz-300 GHz frequency range (sub-THz band) is considered the main portion of the THz band for cellular communication. Adding the sub-THz band to the mmWave band increases the capacity of 6G cellular communication. Among the defined THz bands, the 300 GHz-3 THz range belongs to the far-infrared (IR) frequency region. The 300 GHz-3 THz range is part of the optical band but lies at its boundary, immediately following the RF band. Therefore, this 300 GHz-3 THz range exhibits similarity to the RF band. FIG. 7 illustrates an example of an electromagnetic spectrum applicable to the present disclosure. The embodiment of FIG. 7 may be combined with various other embodiments. Key characteristics of THz communication include (i) widely available bandwidth that supports extremely high data transmission rates, and (ii) high path loss occurring at high frequencies (high-directionality antennas are indispensable). The narrow beamwidth generated by high-directionality antennas reduces interference. The short wavelength of THz signals allows a much larger number of antenna elements to be integrated into devices and base stations operating in this band. This enables the use of advanced adaptive array techniques that can overcome range limitations.

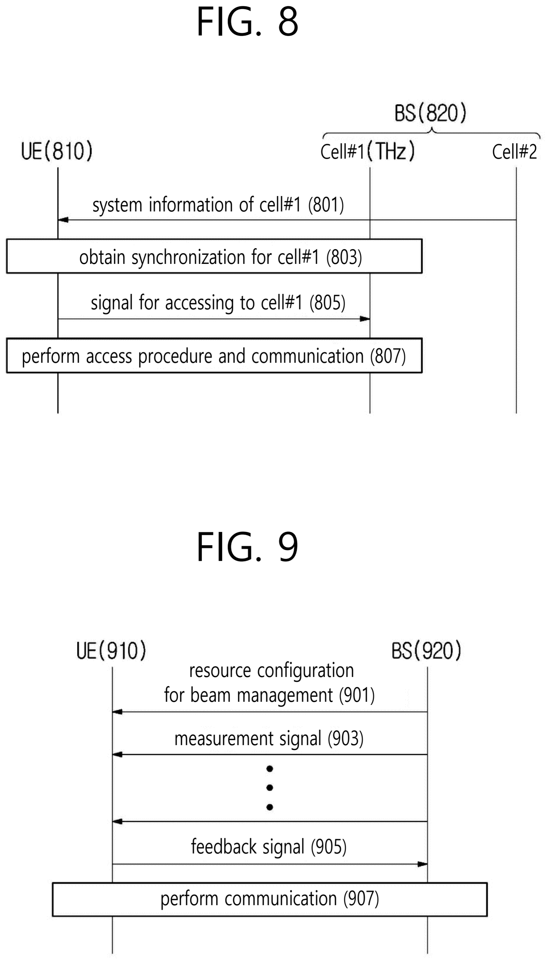

In the THz frequency band, transmitting system information (i.e., information related to attributes, characteristics, and/or capabilities of a base station necessary for service use, such as MIB and SIB) may be inefficient because, in high-frequency bands, the beamwidth becomes narrower, requiring more frequent beam sweeping to cover the entire area of the cell. In particular, when there are few users within the cell, transmitting system information through such a method becomes even more inefficient. Accordingly, a system information transmission procedure such as that illustrated in FIG. 8 may be used.

(System information reception method)

FIG. 8 illustrates an example of a procedure for transmitting system information for THz communication applicable to the present disclosure. Although this example is described in consideration of a THz scenario, it may also be applied to a 6G communication environment where THz is not used. In addition, the procedure illustrated in FIG. 8 may be combined with various embodiments of the present disclosure described below. For example, the embodiments described below may be performed based on the system information obtained through the procedure illustrated in FIG. 8.

Referring to FIG. 8, in step 801, the base station 820 transmits system information of cell #1 through cell #2. That is, the base station 820 provides at least two cells, where cell #1 uses a THz frequency band, and cell #2 uses a frequency band other than the THz frequency band. Here, the system information may include at least one piece of information/-state/parameter/configuration generated at each of the higher layer and the physical layer. For example, at least one piece of information/state/parameter/configuration generated at the higher layer may include at least one of an SFN, control information configuration for SIB1 (e.g., PDCCH configuration for SIB1), information related to cell selection/entry (e.g., cell barring, cell reselection, etc.), and subcarrier spacing, and at least one piece of information/state/parameter/configuration generated at the physical layer may include at least one of an SFN, a half-frame indicator, and an SSB index. However, this is merely an example, and the system information may include information/state/parameter/configuration related to cell #1 and/or cell #2, generated at various types of physical and higher layers. For this purpose, in one example, cell #1 and cell #2 may have a relationship of a secondary cell and a primary cell.

In step 803, the UE 810 obtains synchronization for cell #1. The synchronization may be obtained by detecting a synchronization signal. Generally, synchronization is obtained before receiving system information, however, since the system information of cell #1 is received through cell #2, synchronization acquisition for cell #1 may be performed after the reception of system information. For example, the UE 810 may obtain synchronization based on the system information. However, unlike FIG. 8, in another example, the synchronization acquisition may be performed before step 801.

In step 805, the UE 810 transmits a signal for accessing cell #1. For example, the signal may include information for accessing cell #1 (e.g., a random access preamble). The structure of the signal and the resource (e.g., a channel) for transmitting the signal may be identified through the system information. Subsequently, in step 807, the UE 810 and the base station 820 perform an access procedure for cell #1 and perform communication. In this step, operations according to various embodiments described below may be performed.

The procedure described with reference to FIG. 8 may be performed when the UE 801 initially accesses cell #1 of the base station 820. Alternatively, a similar procedure may be performed when the UE 801 performs a handover to cell #1 of the base station 820. However, in the case of handover, the system information of cell #1 may be received from a cell of another base station rather than from cell #2 of the base station 820.

Communication in the THz band is expected to experience extremely severe path loss, and to overcome this, the UE and the base station must use very sharp beams. The use of sharp beams means that the UE and the base station must perform beam control along with beamforming, and that the number of beams used becomes very large. Accordingly, a considerable amount of time is required to align transmission and reception beams between the base station and the UE. Furthermore, when the beam alignment between the base station and the UE is disturbed due to UE movement or mobility, time for re-aligning the beams is frequently required, which may cause instability of the link. Therefore, a beam management procedure such as that illustrated in FIG. 9 may be used.

(Beam search procedure in a THz communication environment)

FIG. 9 illustrates an example of a beam management procedure applicable to the present disclosure. FIG. 9 shows an example of a procedure for searching for and/or selecting beams for THz communication, but it is not limited to the THz environment, and the present disclosure may also be applied to a 6G communication environment. In addition, the procedure illustrated in FIG. 9 may be combined with various embodiments of the present disclosure described below. Here, the term beam may be interpreted as 'spatial (configuration) information', 'spatial domain filter', 'spatial domain transmission filter', 'spatial domain reception filter', or other terms (e.g., reference signal, synchronization signal block (SSB) index, transmission reception point (TRP), panel, cell, transmission point (TP), base station, or control resource-related information such as control resource set (CORESET)-related information) having an equivalent technical meaning capable of distinguishing beams.

Referring to FIG. 9, in step 901, the base station 920 configures resources for beam management. Here, the resources may include at least one of time-frequency resources, channels, and spatial resources (e.g., antenna ports). For example, the base station 920 may utilize a beam search signal (BSS) that is transmitted spatially separated from existing downlink signals/channels for beam search. Here, the BSS may be transmitted based on dedicated ports for beam search. The dedicated ports may be different from ports used for transmission of existing downlink signals/channels (e.g., synchronization signals such as SSBs, or data channels such as PDSCH). The term BSS is defined for convenience of explanation, and the technical idea according to this embodiment is not limited to the term BSS itself. That is, a signal transmitted based on dedicated ports defined/configured for beam search may be included in the technical idea of this embodiment.

In step 903, the base station 920 transmits measurement signals by using a plurality of transmission beams. For example, the measurement signals may include at least one of reference signals and synchronization signals. In this case, the measurement signals may be transmitted for as many beams as those requiring measurement and may be transmitted using a multi-beam transmission method that forms multiple beams simultaneously to reduce sweeping time. Here, the multi-beam transmission may be performed based on at least one of a multi-panel, a sub-array, and a true time delay (TTD).

In step 905, the UE 910 transmits a feedback signal to the base station 920. The feedback signal indicates at least one beam selected by the UE 910. The UE 910 may select at least one preferred beams based on the measurement signals received in step 903. In step 907, the UE 910 and the base station 920 perform communication. At this time, the UE 910 and the base station 920 may perform communication by using the beam selected in step 905. When channel reciprocity is established, the transmission beam of the UE 910 may also be determined through steps 903 and 905, and therefore, the transmission operation of the UE 910 may be performed by using the beam selected in step 905. If channel reciprocity is not established, a procedure including transmission of measurement signals by the UE 910 and transmission of a feedback signal by the base station 920 may be performed in advance to determine the transmission beam of the UE 910. In step 907, operations according to various embodiments described below may be performed.

C-3. Non-terrestrial networks (NTN)

An NTN may refer to a network or network segment that uses radio frequency (RF) resources mounted on a satellite (or an unmanned aerial system (UAS) platform). The use of NTN services has been considered to provide wireless communication services in areas where wider coverage is required or where the installation of terrestrial base stations is difficult. The NTN service may collectively refer to a wireless communication system that provides service to UEs by installing base stations on non-terrestrial platforms such as satellites (e.g., geostationary orbit, low Earth orbit, or medium Earth orbit satellites), airplanes, unmanned airships, or drones. The satellite described in the present disclosure may move at high speed relative to a specific location on Earth, and a satellite beam directed toward Earth may correspond to an area on Earth where the satellite can provide service to users.

In one example of the present disclosure, an NTN scenario may be classified into a geostationary cell scenario and a moving cell scenario on Earth, depending on the type of cell supported by the satellite. The geostationary cell scenario refers to a scenario in which a cell is permanently maintained or maintained for a specific service duration within a location on the specific surface based on the beam steering function of the satellite. The moving cell scenario refers to a scenario in which the beam steering function of the satellite is not used, and the service is provided through fixed beams, causing the cell on the surface to continuously move.

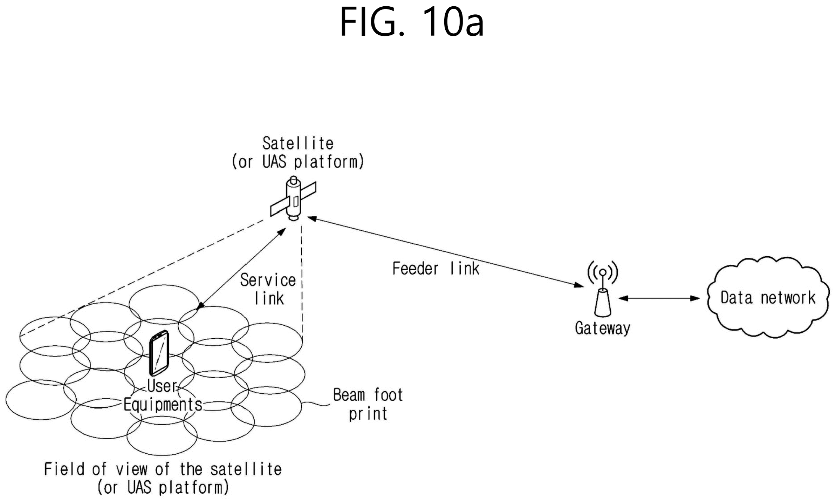

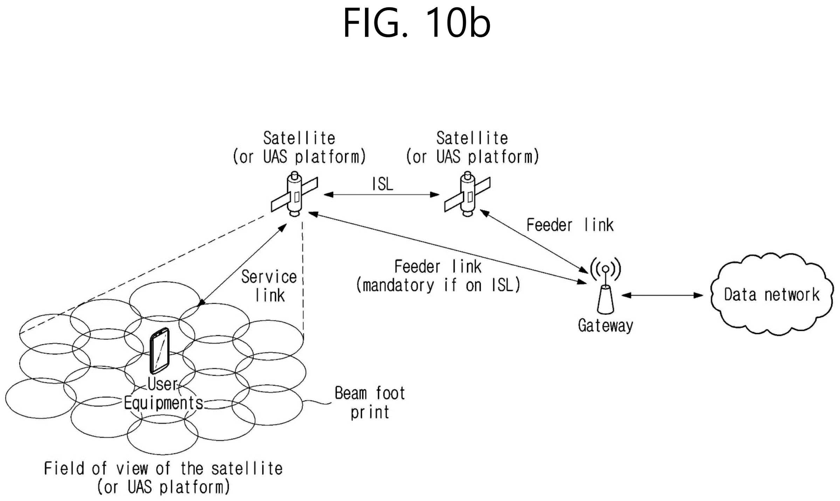

In another example of the present disclosure, an NTN scenario may be classified into a typical NTN scenario based on a transparent payload and a typical NTN scenario based on a regenerative payload, depending on the characteristics of the payload. FIG. 10a illustrates an example of a typical NTN scenario based on a transparent payload applicable to the present disclosure. FIG. 10b illustrates an example of a typical NTN scenario based on a regenerative payload applicable to the present disclosure. The embodiments of FIG. 10a or FIG. 10b may be combined with various embodiments of the present disclosure. Referring to FIG. 10a, a satellite (or a UAS platform) may establish a service link with a UE. The satellite (or UAS platform) may be connected to an NTN gateway through a feeder link. The satellite may be connected to a data network through the gateway. A beam footprint may refer to an area in which signals transmitted by a satellite can be received. Referring to FIG. 10b, a satellite (or a UAS platform) may establish a service link with a UE. The satellite (or UAS platform) connected to the UE may be connected to another satellite (or UAS platform) through inter-satellite links (ISLs). The other satellite (or UAS platform) may be connected to a gateway through a feeder link. Based on a regenerative payload, the satellite may be connected to a data network through another satellite and the gateway. When there is no inter-satellite link (ISL) between satellites, a feeder link between the satellite and the gateway may be required. FIG. 10a and FIG. 10b are merely examples of NTN scenarios, and the NTN may be implemented based on various types of scenarios. For example, a satellite (or a UAS platform) may implement a transparent payload or a regenerative (with on board processing) payload. For example, a satellite (or a UAS platform) may generate multiple beams over a designated service area according to the field of view of the satellite (or UAS platform). For example, the field of view of the satellite (or UAS platform) may vary depending on the onboard antenna diagram and the minimum elevation angle. For example, a transparent payload may include radio frequency filtering, frequency conversion, and amplification. Therefore, a waveform signal repeated by the payload may remain unchanged. For example, a regenerative payload may include radio frequency filtering, frequency conversion and amplification, demodulation/decoding, switching and/or routing, and coding/modulation. For example, the regenerative payload may be substantially equivalent to equipping the satellite (or UAS platform) with all or part of base station functionality.

Hereinafter, procedures for maintaining network service continuity and satellite coverage in a wireless communication system utilizing NTN elements (e.g., initial cell selection, mobility management in idle mode, and mobility management in connected mode) is described.

- Initial cell selection procedure

The UE may search for a first satellite-based NTN cell (or a satellite broadcasting the cell) when power is turned on. At this time, if the UE has satellite orbit information (i.e., ephemeris data) and/or RTT (round-trip time) information that can be used when performing a cell entry procedure (e.g., a random access procedure), the UE may use such information to shorten the cell search procedure and reduce the time required for cell search. To this end, the UE may require (initial) system information including satellite orbit (ephemeris) information for identifying the precise location of the cell, and the (initial) system information may be configured/determined/generated based on orbital plane information already held by the UE. For example, satellite-level orbit parameters for all satellites that can provide service to the UE through the UE uSIM, including satellite ID or index, may be provided in advance. Subsequently, since the system information includes and broadcasts the satellite ID of the serving satellite, the UE may use this to derive orbit data (ephemeris data) related to the serving satellite stored in the uSIM and/or the positional coordinates of the serving satellite. Additionally, to assist with mobility handling, the UE may obtain information related to neighboring satellites through system information and/or dedicated RRC signaling.

Here, the satellite orbit (ephemeris) information transmitted to the UE through system information and/or RRC signaling may be implemented/supported in i) a position and velocity state vector orbit format, and ii) an orbital parameter (ephemeris) format. For example, the position and velocity state vector orbit format may consist of 17 bytes or less (e.g., 132 bits). The field size for position (x, y, z) (in meters) may be 78 bits, and the field size for velocity (vx, vy, vz) (in meters per second) may be 54 bits.

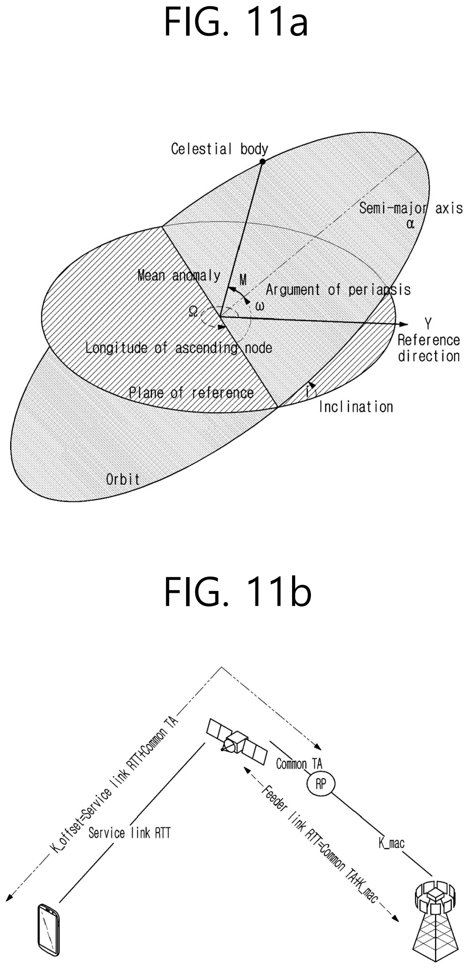

The orbital parameter ephemeris format may consist of 21 bytes or less (e.g., 164 bits). FIG. 11a illustrates an example of components of the orbital parameter ephemeris format. The components of the orbital parameter ephemeris format illustrated in FIG. 11a are as follows.

- Semi-major axis (half of the major axis of the elliptical satellite orbit) "$\alpha$" [m] (e.g., 33 bits)
- Eccentricity "e" (in an elliptical satellite orbit, where 0 < e < 1) (e.g., 20 bits)
- Argument of periapsis (the angle measured from the ascending node to the periapsis (the point closest to the central body), determining the orientation of the ellipse within the orbital plane) "$\omega$" [rad] (e.g., 28 bits)
- Longitude of ascending node (the angle measured counterclockwise from a reference point (e.g., the vernal equinox in the solar system) to the ascending node (the point where the orbit passes from below to above the reference plane)) "$\Omega$" [rad] (e.g., 28 bits)
- Inclination (the tilt of the ellipse relative to the reference plane, measured as the angle between the orbital plane and the reference plane at the ascending node) "i" [rad] (e.g., 27 bits)
- Mean anomaly (an angle that changes continuously over time, mathematically convenient but not corresponding to a geometric angle) "M" = M(t0) at the epoch t0 [JD] (e.g., 28 bits) [rad]
- Mobility management in idle mode

During the idle mode, the location of the UE may be identified at the tracking area level or unit. Here, a tracking area is defined as a set of cells, and each cell may belong to a tracking area identified by a tracking area code (TAC). The TAC may be transmitted through system information of a broadcast channel. Multiple cells may belong to the same tracking area, and the same TAC corresponding to the same tracking area may be broadcast. The location of the UE may be known to the network when the UE is first turned on (i.e., when performing a registration procedure). The registration request message transmitted by the UE for the registration procedure may include the TAC of the cell on which the UE is currently camped. When the UE moves and changes cells, it may determine the tracking area of the new cell by decoding the system information of the changed cell. The UE may move within the same tracking area without performing an update. When the UE enters a new cell using a different TAC, the UE may perform registration in the new cell and transmit the new TAC to update its location to the network. Accordingly, as the tracking area becomes larger, signaling from the UE to the network decreases, thereby minimizing UE power consumption. When the network needs to reach a UE in idle mode (e.g., for an incoming call), the network may page the UE in all cells belonging to the last tracking area where the UE performed registration. If the tracking area is very large and includes many cells, the number of paging messages may increase because the network pages the UE in all cells belonging to the TAC. When the same model is applied to a satellite system and each satellite broadcasts a TAC, the tracking area may sweep across the ground as the satellite orbits the Earth. In this case, even a stationary UE would need to perform registration updates frequently, which could affect the battery life of the UE and increase uplink signaling. To address this issue, the system may be designed so that the tracking area does not change its geographical position on Earth. Instead of the tracking area moving as the satellite moves, the satellite may change its tracking area when entering a new geographical region, and the TAC broadcast by the satellite may be updated to reflect the corresponding new geographical region. At the same time, when the UE detects a new TAC on the broadcast channel, it may perform a tracking area update procedure. Accordingly, if the UE does not change its physical location on Earth, its tracking area may remain fixed.

- Mobility management in connected mode

While the UE is in the connected mode, the mobility management procedure may be handled through a handover. In terrestrial networks or NTN networks, the handover may be triggered by the network (i.e., measurement-based handover triggering) based on measurement values reported by the UE for the signal quality of the current cell and neighboring cells. In the handover procedure, the service interruption time is defined as the time from when the UE stops transmission and reception with the source base station to when the UE resumes transmission and reception with the target base station. Meanwhile, the interruption time may differ between uplink and downlink. In the downlink, the interruption time may be defined as the time from when the network transmits a synchronized RRC reconfiguration message to when the target base station receives an RRC Reconfiguration Complete message. After transmitting the RRC reconfiguration message, the base station can no longer send data and may resume communication only after receiving the RRC Reconfiguration Complete message. In the uplink, the UE may potentially continue transmitting data to the source base station until the synchronized RRC reconfiguration message is received. Then, the interruption time may be defined as the time from when the UE receives the synchronized RRC reconfiguration message to when the target base station receives the RRC Reconfiguration Complete message.

Since the propagation delay value in a satellite-based NTN is much greater than that in a terrestrial system, additional waiting time may occur for mobility-related signals such as measurement reporting, reception of a handover (HO) command, and HO request/acknowledgment (when the target cell is served by another satellite). The geostationary Earth orbit (GEO) scenario is characterized by a much larger propagation delay compared to the low Earth orbit (LEO) scenario, but the latter requires consideration of satellite movement. To prevent extended service interruption, the waiting time related to mobility-related signaling needs to be addressed in both cases. In addition to the measurement-triggered handover described above, handover triggering based on the position of the UE and satellite (or the distance between the UE and the satellite), handover triggering based on the timing advance (TA) of the target cell, handover triggering based on deterministic satellite motion/local time, handover triggering based on the elevation angle of the source/target cell, etc. may be utilized. Additionally or alternatively, the UE may be pre-provided with handover configuration and handover triggering conditions (e.g., the position of the UE/satellite, or the strength of signals transmitted by the UE/satellite). For example, the UE may receive handover configuration and handover triggering conditions through information related to a new cell that will serve as a handover target. Accordingly, the UE may monitor the handover conditions and, when the conditions are satisfied, perform handover to the target cell.

Meanwhile, as described above, since a wireless communication system utilizing NTN elements has a much larger RTT value compared to a terrestrial communication system, various types of offsets and TA values may be configured/defined/indicated/signaled for efficient time and frequency synchronization. Hereinafter, offsets (e.g., K_offset and k mac), TA values, validity duration, and epoch time for time/frequency synchronization in an NTN-based wireless communication system will be described.

- K_offset and k_mac

FIG. 11b illustrates examples of offsets in a link related to a satellite. The K_offset illustrated in FIG. 11b represents an offset value corresponding to the RTT of the uplink time synchronization reference point (RP). Here, K _offset may correspond to the sum of the service link RTT and the common TA (if indicated). The k_mac illustrated in FIG. 11b represents an offset value corresponding to the RTT between the RP and the base station. For example, K_offset may be applied to i) PUSCH transmission timing based on DCI and the DCI-scheduled PUSCH, ii) PUSCH transmission timing based on a random access response (RAR), iii) PUSCH transmission timing based on a configured grant, iv) PUCCH transmission timing according to MsgB, and v) transmission timing of non-periodic SRS/CSI resources. For example, k_mac may be applied to UE actions and assumptions related to downlink configuration indicated by MAC-CE command on the PDSCH. In a beam failure recovery procedure, for PRACH transmission in uplink slot n, the UE may monitor the corresponding PDCCH starting from downlink slot "n + k_mac + 4" within the corresponding RAR window.

The cell-specific K _offset may be signaled through system information related to NTN (e.g., an NTN-specific SIB). A range of cell-specific K_offset values (0 to 1023 ms) may be used to cover all scenarios. A differential UE-specific K _offset may be signaled through MAC CE, and the corresponding differential UE-specific value range may be 0 to 63 ms. The total UE-specific K_offset value equals the cell-specific K_offset value minus the differential UE-specific K_offset value. The k_mac may be provided by the network when the downlink and uplink frame timings are not aligned at the base station. Updating of k_mac is not supported, and its value range may be from 1 to 512 ms. When the UE does not receive a k_mac value from the network, the UE may assume k_mac = 0. In FR1, the reference SCS value for the unit of K offset may be 15 kHz.

- UE-specific TA and common TA

In an NTN-based communication system, the UE may calculate a timing advance (TA) based on the UE's GNSS (global navigation satellite system) capability (e.g., UE location) and higher layer parameters related to satellite ephemeris transmitted from the base station, and this is referred to as a UE-specific TA ( $N_{TA,adj}^{UE}$ ). When the higher layer parameters related to satellite ephemeris are not received from the base station, the UE-specific TA may be set to 0. Then, the TA calculated based on the common TA parameters (e.g., TACommon, TACommonDrift, and/or TACommonDriftVariation) transmitted from the base station as higher layer parameters is referred to as the common TA ( $N_{TA,adj}^{common}$ ). When the common TA parameters are not transmitted from the base station, the common TA may be set to 0. Accordingly, in an NTN-based communication system, the total TA value (T_TA) may be calculated as $N_{TA} + N_{TA,offset} + N_{TA,adj}^{common} + N_{TA,adj}^{UE}$ . Here, N_TA,offset means a TA offset value provided to the UE for each serving cell, and N_TA means a value derived based on a timing advance command.

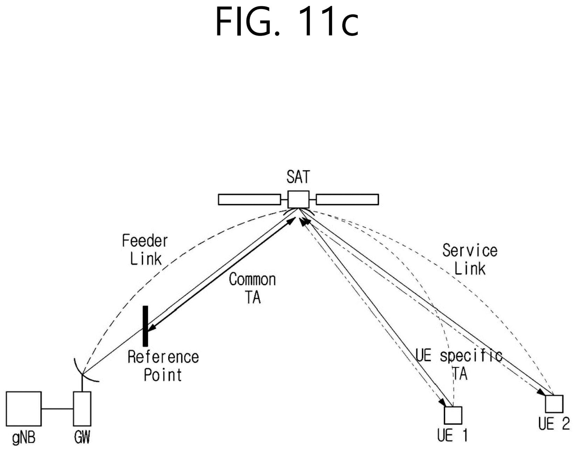

FIG. 11c illustrates examples of timing advance (TA) values in a link related to a satellite. As shown in FIG. 11c, the UE-specific TA is calculated to compensate for the transmission delay over the service link, while the common TA is calculated to compensate for the transmission delay between the RP and the satellite.

- Valid duration and epoch time

The validity duration refers to the (maximum) time interval during which the UE may apply previously obtained assistance information (e.g., serving and/or neighboring satellite ephemeris and common TA parameters, etc.) without obtaining new assistance information (from the epoch time). Configuration information related to the validity duration may be broadcast by the base station for each cell through system information related to NTN (e.g., SIB19). For example, the validity duration range may consist of {5s, 10s, 15s, 20s, 25s, 30s, 35s, 40s, 45s, 50s, 55s, 60s, 120s, 180s, 240s, 900s}, but is not limited thereto. A validity timer configured with the validity duration value may (re)start at the epoch time of the assistance information. If new or additional assistance information is unavailable within the validity duration, the UE may assume that uplink synchronization has been lost.

The serving satellite ephemeris and common TA parameters may be signaled in the same SIB message and may share the same epoch time. When the epoch time is explicitly provided through the SIB, the epoch time of the assistance information (i.e., satellite ephemeris and common TA parameters) corresponds to the start time of the DL subframe indicated by the SFN and the subframe number signaled together with the assistance information. When the epoch time is not explicitly indicated through the SIB, the epoch time of the assistance information may be implicitly known as the end of the SI window in which the NTN-specific system information (e.g., SIB19) is transmitted. When the epoch time is provided through dedicated signaling, the epoch time of the assistance information corresponds to the start time of the DL subframe and may be represented by the SFN and the subframe number.

In the case of a serving cell, when the epoch time is explicitly indicated by the SFN and subframe number, the UE may consider the corresponding frame as the next SFN following the frame in which the message indicating the current SFN or epoch time is received. In the case of a neighboring cell, when the epoch time is explicitly indicated by the SFN and subframe number, the UE may consider the corresponding frame as the frame closest to the frame in which the message indicating the epoch time is received.

C-4. Integrated sensing and communication (ISAC)

Radio sensing is a technology that can obtain information about the characteristics of an environment and/or objects within the environment by identifying instantaneous flux velocity, angle, and distance (range) of objects using radio frequencies. Because the radio frequency sensing function does not require connecting an object to a device through the network, it may provide object-positioning services without the need for dedicated devices. The ability to obtain range, velocity, and angle information from radio frequency signals may enable a wide range of new functions, such as object detection, object recognition (e.g., vehicles, humans, animals, UAVs), high-precision positioning, tracking, and activity recognition. Radio sensing services may provide information to various industries (e.g., unmanned aerial vehicles, smart homes, V2X, factories, railways, public safety, etc.) that enable applications such as intrusion detection, assisted driving and navigation, trajectory tracking, collision avoidance, traffic management, and health or transportation monitoring. In some cases, radio sensing may use non-3GPP-type sensors (e.g., radar, cameras) to additionally support 3GPP-based sensing. For example, the operation of a wireless sensing service, i.e., the sensing operation, may depend on the transmission, reflection, and scattering of wireless sensing signals. Therefore, radio sensing may provide an opportunity to enhance existing communication systems from communication networks into radio communication and sensing networks.

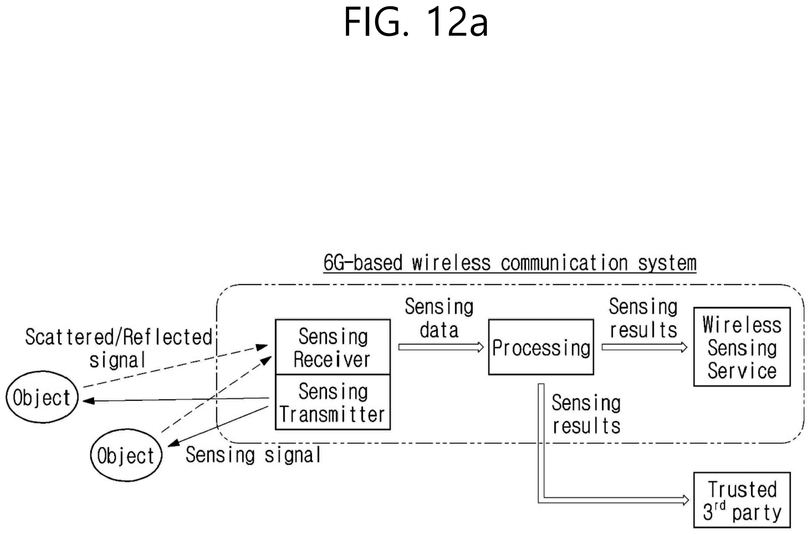

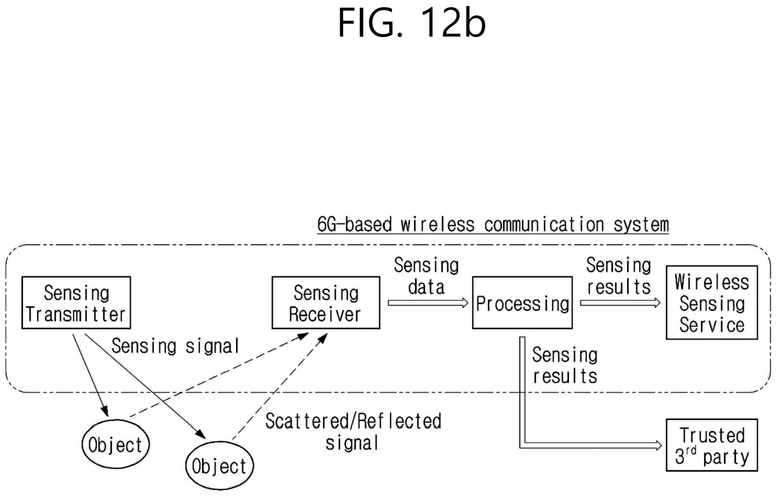

FIG. 12a and FIG. 12b illustrate examples of sensing operations applicable to the present disclosure. The embodiments shown in FIG. 12a and FIG. 12b may be combined with various embodiments of the present disclosure. Specifically, FIG. 12a illustrates an example of sensing (e.g., monostatic sensing) using a sensing receiver and a sensing transmitter located at the same position, and FIG. 12b illustrates an example of sensing (e.g., bistatic sensing) using a separated sensing receiver and sensing transmitter.

For example, in a wireless communication system based on a 6G network according to the present disclosure, referring to FIG. 12a, the sensing transmitter and sensing receiver may be configured to be included in a single base station (i.e., the same base station) or a single UE (i.e., the same UE). In contrast, referring to FIG. 12b, the sensing transmitter and sensing receiver may be configured to be included in different base stations, in different UEs, or respectively in a UE and a base station.

In this regard, based on whether the sensing transmitter and the sensing receiver are included in a base station or a UE, six types of sensing modes may be defined as follows:

- Mode 1: A mode in which the sensing transmitter and sensing receiver are included in a single base station (e.g., a base station-based sensing mode in a monostatic mode)
- Mode 2: A mode in which the sensing transmitter is included in a first base station and the sensing receiver is included in a second base station different from the first base station (e.g., a base station-based sensing mode in a bistatic mode)

- Mode 3: A mode in which the sensing transmitter is included in a base station and the sensing receiver is included in a UE (e.g., a base station-to-UE sensing mode)
- Mode 4: A mode in which the sensing transmitter is included in a UE and the sensing receiver is included in a base station (e.g., a UE-to-base station sensing mode)
- Mode 5: A mode in which the sensing transmitter and sensing receiver are included in a single UE (e.g., a UE-based sensing mode in a monostatic mode)
- Mode 6: A mode in which the sensing transmitter is included in a first UE and the sensing receiver is included in a second UE different from the first UE (e.g., a UE-based sensing mode in a bistatic mode)

In a wireless communication system based on a 6G network according to the present disclosure, one or more of the six types of sensing modes described above may be used independently or in combination.

In connection with the sensing operations illustrated in FIG. 12a and FIG. 12b, a sensing transmitter may transmit a sensing signal for sensing one or more objects (and/or the environment surrounding the objects). For example, the sensing signal may correspond to a radio (frequency) signal defined to be transmittable by a base station or a UE in a wireless communication system based on the 6G network of the present disclosure. A sensing receiver may receive a signal that has been scattered or reflected by one or more objects (and/or the environment surrounding the objects) from the sensing signal transmitted by the sensing transmitter. At the sensing receiver, sensing data may be derived from the scattered/reflected signal, and sensing results may be generated or obtained through processing of the sensing data. Here, the sensing results may include characteristic information (e.g., position, distance, velocity, angle, etc.) of one or more objects (and/or the environment surrounding the objects). The sensing results generated or obtained in this manner may be used for radio sensing services (e.g., detection or tracking of objects and/or environments) provided by the wireless communication system based on the 6G network of the present disclosure, or may be provided/disclosed to a trusted third party.

Additionally, although the sensing operations in FIG. 12a and FIG. 12b are described as representative examples of operations in a wireless communication system based on a 6G network, they may also be extended and applied to cases where UEs/base stations/signals based on previous generations (e.g., 4G, 5G, etc.) are utilized.

Furthermore, with respect to radio sensing described in the present disclosure, in a wireless communication system based on a 6G network according to the present disclosure, the time/frequency resources for sensing operations and the time/frequency resources for general communication (e.g., UL/DL/sidelink-based communication) may be separately scheduled/configured.

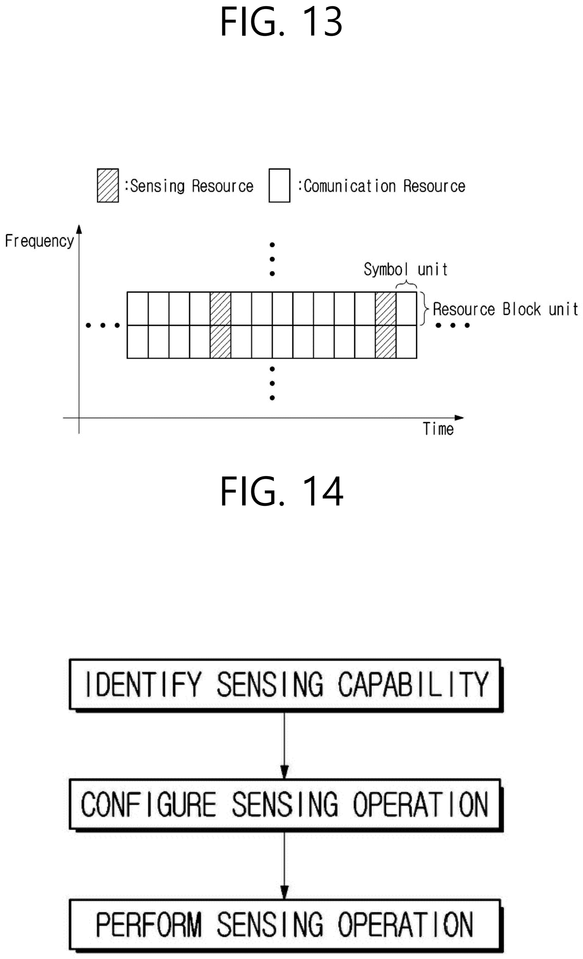

FIG. 13 illustrates an example of time/frequency resources for sensing operations applicable to the present disclosure. The embodiment of FIG. 13 may be combined with various embodiments of the present disclosure.

Referring to FIG. 13, time/frequency resources (hereinafter, sensing resources) for the above-sensing operation (e.g., sensing operation based on FIG. 12a and FIG. 12b) may be configured/allocated separately from time/frequency resources (hereinafter, communication resources) for general communication.

For example, as illustrated in FIG. 13, the sensing resources may be configured or allocated in units of symbols in the time domain and/or in units of resource blocks in the frequency domain. Resources other than those configured or allocated as sensing resources may be used as resources for general communication. That is, the sensing resources and communication resources may be configured or allocated based on a time-division multiplexing (TDM) scheme and/or a frequency-division multiplexing (FDM) scheme in terms of base station/UE operations. Additionally or alternatively, unlike the example shown in FIG. 13, the sensing resources may be configured or allocated based on other units in the time domain (e.g., slot, frame, or absolute time such as ms or μs) and/or other units in the frequency domain (e.g., subcarrier, carrier, or absolute frequency such as MHz or GHz).

Additionally or alternatively, with respect to the configuration/allocation/scheduling of resources for general communication described in the present disclosure, the relationship between such resources and the sensing resources described above may need to be considered. For example, when configuring or allocating resources for general communication according to embodiments of the present disclosure, such resources may be configured/allocated to perform rate matching or puncturing for the resource region corresponding to the sensing resources. For example, when scheduling resources for general communication according to embodiments of the present disclosure, such resources may be scheduled so as not to overlap with the resource region corresponding to the sensing resources. If, in embodiments of the present disclosure, the resources for general communication and the resource region corresponding to the sensing resources are configured/allocated/scheduled to overlap, either or both operations may be dropped, skipped, or postponed based on priority or predefined rules. That is, in embodiments of the present disclosure, it may be preferable that the resources related to general communication (e.g., resources for signals/channels related to UL/DL/sidelink-based data/control) be configured/allocated/scheduled so as not to overlap with the sensing resources described above.

Additionally, with respect to the radio sensing described in the present disclosure, various channel modeling methods may be applied. Channel modeling related to sensing may refer to constructing a path for transmitting and/or receiving sensing signals and/or scattered/reflected signals, considering the object to be sensed and/or the environment to which the object belongs. Since channel modeling may be related to the performance and requirements of sensing in a wireless communication system, it may be an important aspect for verifying the feasibility of the sensing function.

The channel related to sensing may be classified into a channel between an object (e.g., a target of interest) and the sensing transmitter/receiver, and a channel between the environment to which the object belongs and the sensing transmitter/receiver. In this regard, channel modeling related to sensing may be classified based on the sensing mode (e.g., the six types of modes described above), whether the focus is on an object or an environment, and/or the sensing scenarios. For example, channel modeling for a target in a base station/UE-based monostatic sensing mode, channel modeling for a target in a base station/UE-based bistatic sensing mode, channel modeling for an environment in a base station/UE-based monostatic sensing mode, and channel modeling for an environment in a base station/UE-based bistatic sensing mode may each be differently optimized and configured. For example, when various sensing scenarios are classified, channel modeling may be categorized into channel modeling for detection, location, and tracking scenarios, channel modeling for motion recognition, and channel modeling for imaging or environmental reconstruction scenarios. Additionally, channel modeling related to sensing may be based on a statistical channel modeling technique and/or a deterministic channel modeling technique. For example, modeling for sensing in a wireless communication system based on the 6G network of the present disclosure may be based on a stochastic geometry channel modeling technique and/or a hybrid channel modeling technique including ray tracing channel modeling. Here, the stochastic geometry channel model may be based on various statistical characteristics of channel conditions. In addition, the hybrid channel model may be based on both the ray tracing technique and the stochastic technique. In the case of the hybrid approach, channel modeling for objects (e.g., targets of interest) that require high accuracy and consistency may be performed using the ray tracing technique, while channel modeling for the environment may be performed using the stochastic technique.

FIG. 14 illustrates an example of a procedure related to sensing operations applicable to the present disclosure. The embodiment of FIG. 14 may be combined with various embodiments of the present disclosure.

For example, in a wireless communication system based on the 6G network of the present disclosure, in the case of a sensing operation in which a UE participates, the base station may need to identify the capability of the UE related to the sensing operation. In this regard, the UE may be configured to report capability information to the base station indicating whether it supports the sensing operation. Additionally or alternatively, if the UE is predefined by specification to support sensing operations, such a procedure may be omitted. Furthermore, in the case of a sensing operation in which only the base station participates, the base station may be configured to report capability information indicating whether it supports the sensing operation to the entity (e.g., a higher-layer network entity above the base station) that configures or controls its sensing operation.

For example, the base station may perform signaling with the UE to exchange configuration information related to the sensing operation. For example, the base station may configure or indicate to the UE information related to the sensing operation mode (e.g., based on the six types of modes described above), the entity of the sensing operation (e.g., sensing transmitter, sensing receiver), the resources for the sensing operation (e.g., sensing resources as shown in FIG. 13), the utilization target of sensing results (e.g., the type of radio sensing service based on the 6G network, or a trusted third party), and the channel modeling for sensing (e.g., the channel between the base station/UE and the object/environment). For example, the base station may be configured/instructed with such information from network entity at a higher level/layer of the base station.

For example, the base station and/or the UE may perform a sensing operation based on the configured/indicated information. For example, the base station and/or the UE, in the role of a sensing transmitter and/or sensing receiver, may perform procedures such as transmission of a sensing signal, reception of a scattered/reflected signal, derivation of sensing data, acquisition of sensing results through processing of the sensing data, and provision of the sensing results, as illustrated in FIG. 12a and FIG. 12b described above. In one example, in the operation of the base station/UE described in the present disclosure, the sensing results provided through the sensing operation may also be utilized.

D. Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

[Table 1]

| |
|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2]<br>2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3]<br>   • Note: No change for SSB transmission due to cell DTX/DRX.<br>   • Note: The impact to IDLE/INACTIVE UEs due to the above enhancement should be avoided.<br>3. Specify the following techniques in spatial and power domains<br>   • Specify necessary enhancements on CSI and beam management related procedures including measurement and report, and signaling to enable efficient adaptation of spatial elements (e.g. antenna ports, active transceiver chains) [RAN1, RAN2]<br>   • Specify necessary enhancements on CSI related procedures including measurement and report, and signaling to enable efficient adaptation of power offset values between PDSCH and CSI-RS [RAN1, RAN2]<br>   • Note: Above objectives are only for UE specific channels/signals<br>   • Note: Legacy UE CSI/CSI-RS capabilities applies when considering total number of CSI reports and requirements<br>4. Specify mechanism(s) to prevent legacy UEs camping on cells adopting the Rel-18 NES techniques, if necessary [RAN2]<br>5. Specify CHO procedure enhancement(s) in case source/target cell is in NES mode [RAN2]<br>6. Specify inter-node beam activation and enhancements on restricting paging in a limited area [RAN3].<br>7. Specify the corresponding RRM/RF core requirements, if necessary, for the above features [RAN4] |

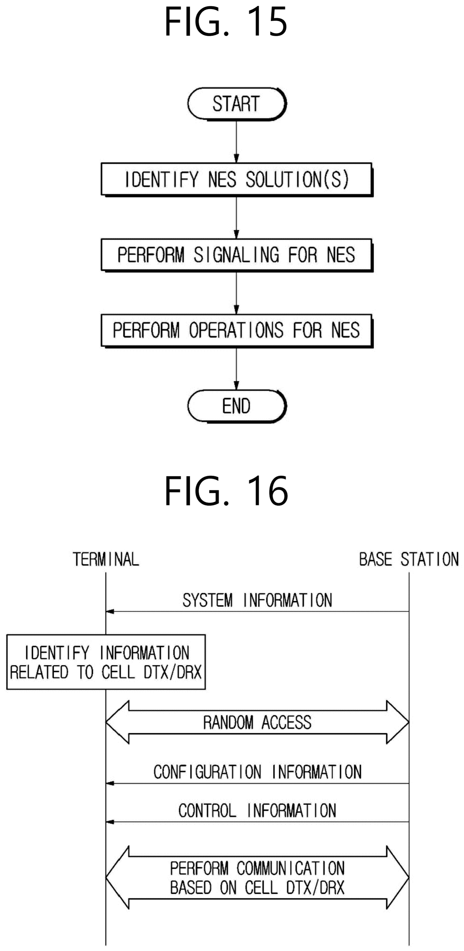

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain. FIG. 15 illustrates an example of an operation procedure of a base station supporting an NES technology applicable to the present disclosure. Referring to FIG. 15, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 12, the NES technology may be performed. Examples of NES solutions that may be performed through a procedure such as that of FIG. 12 are as follows.

- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.

- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.

- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.

- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

Cell DTX/DRX

To operate the base station in a sleep mode for a relatively long duration without frequent wake-ups, base station DTX/DRX has been proposed for Network Energy Saving (NES) purposes. The base station may configure cell DTX and, within an active period of the cell DTX, configure on-durations of C-DRX for UEs, thereby reducing energy consumption by using DTX transmission under low system load conditions. FIG. 16 illustrates an example of a procedure for cell DTX/DRX operation applicable to the present disclosure.

Referring to FIG. 16, the base station transmits system information to the UE, and the UE checks information related to cell DTX/DRX. For example, the system information may include an MIB and an SIB1. In relation to NES technology, the MIB may include information related to cell barring (e.g., cellBarred), and the SIB1 may include information related to a cell barring status (e.g., cellBarredNES). Specifically, when the cellBarred included in the MIB is configured to a value indicating that the cell is not barred (e.g., notBarred), the UE may determine that the corresponding cell is not barred, regardless of whether NES cell DTX/DRX is supported. In contrast, when the cellBarred included in the received MIB is configured to a value indicating that the cell is barred (e.g., barred), a UE that does not support NES cell DTX/DRX may determine that the corresponding cell is barred. However, when the UE has the capability to support NES cell DTX/DRX, the UE checks the SIB1 to determine the cell barring status. If cellBarred in the MIB is configured to barred and cellBarredNES is absent in the SIB1, a UE supporting NES cell DTX/DRX may treat the corresponding cell as barred and perform cell reselection to another cell. On the other hand, if cellBarred in the MIB is configured to barred and cellBarredNES is included in the SIB1, a UE supporting NES cell DTX/DRX may determine that the corresponding cell is not barred.

In the case of FIG. 16, it is assumed that the UE has the capability to support NES cell DTX/DRX, and either cellBarred in the MIB is configured to notBarred, or cellBarred in the MIB is configured to barred and cellBarredNES is included in the SIB1. Accordingly, the UE may perform a random access procedure to connect to the base station and may subsequently perform communication. At this time, the base station performs cell DTX/DRX operation and transmits configuration information related to the cell DTX/DRX operation to the UE. The configuration information related to the cell DTX/DRX operation (e.g., CellDTXDRX-Config) includes at least one parameter related to the cell DTX/DRX, and may include, for example, at least one of an on-duration timer, a cycle start offset, a slot offset, a configuration type (e.g., DTX, DRX, or DTX-DRX), and an activation state (e.g., active, inactive) of DTX/DRX. In addition, the configuration information may further include information (e.g., DCI-related information) for receiving and interpreting control information related to the cell DTX/DRX.

Subsequently, the base station transmits control information related to the cell DTX/DRX to the UE. The control information related to the cell DTX/DRX may include DCI having a designated format (e.g., format 2_9). When an operation for a serving cell according to at least one of the cell DTX operation and the cell DRX operation is configured by configuration information (e.g., cellDTXDRX-Config), the UE may identify a search space set (e.g., a Type3-PDCCH CSS set) for monitoring a PDCCH that delivers control information of the designated format during an active time through a higher layer parameter (e.g., SearchSpace), and may obtain a location of information for the serving cell within the control information through another higher layer parameter (e.g., positionInDCI-cellDTRX). Then, the UE may obtain the control information based on the identified search space set and the obtained location.

The control information related to the cell DTX/DRX may be used to indicate activation or deactivation of cell DTX and/or cell DRX and/or to provide an NES mode indicator, and for example, may include at least one block including a cell DTX/DRX indicator and an NES mode indicator. In this case, when the serving cell is configured as a supplementary uplink (SUL) carrier, the indication of activation or deactivation of the cell DRX by the cell DTX/DRX indicator may be applied to both the uplink (UL) carrier and the SUL carrier.

Subsequently, the UE and the base station may perform communication based on the cell DTX/DRX. Specifically, the base station may turn on or off transmission and reception of signals according to the configuration related to the cell DTX/DRX, and accordingly, the UE may selectively monitor signals from the base station. During DTX-OFF, the base station enters a sleep mode to reduce energy consumption. In this case, the base station DTX cycle may be aligned with the UE DRX cycle. The base station DTX-ON may fully cover the UE DRX-ON. Furthermore, for NES purposes, the base station may align transmissions over Xn/NG and Uu. The DTX/DRX mechanism triggers switching of reference signal resource set groups, and the base station may perform a dormancy-like behavior of transmitting SSB, SIB, and CSI-RS sparingly or not transmitting at all to reduce energy consumption. The UE may sparsely receive or not receive downlink signals/channels according to the configuration of the base station. Once the base station DTX/DRX operation is triggered, during the DTX/DRX OFF duration, the UE may discontinuously receive corresponding CSI-RS, SSB, or PDCCH.

CSI Measurement and Reporting

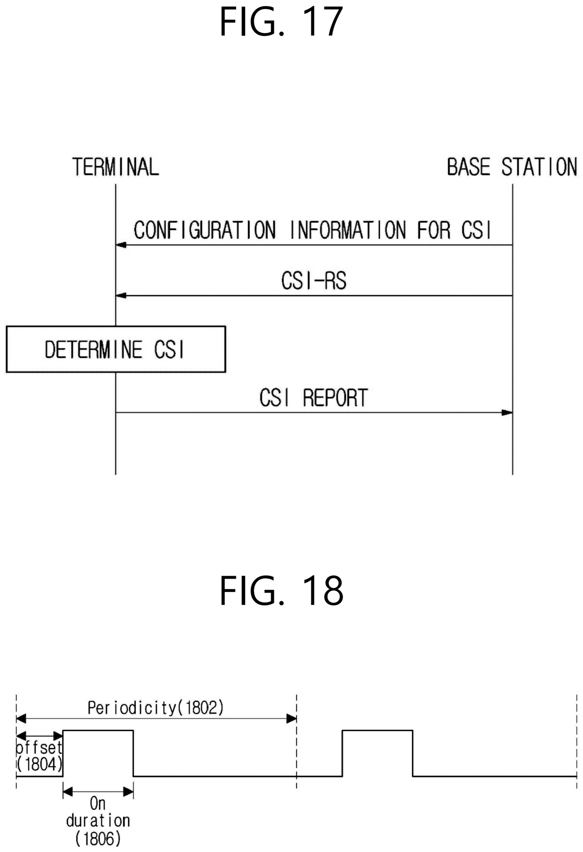

FIG. 17 illustrates an example of a procedure for CSI measurement and reporting applicable to the present disclosure.

Referring to FIG. 17, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

Specific embodiments of the present disclosure

The present disclosure relates to a technology for operating a device that assists communication between a base station and a UE in consideration of a NES operation of the base station in a wireless communication system. In the present disclosure, a device that provides a function for assisting communication between the base station and the UE refers to a device that relays, transfers, or reflects wireless signals, and may be referred to as an 'assistance node', an 'intermediate node', or a term having an equivalent technical meaning. For example, the device may be understood as a network controlled repeater (NCR) or an IAB node. That is, the present disclosure proposes various embodiments for appropriately controlling the state of the NCR and/or IAB node according to the NES operation of the base station when using the NCR and/or IAB node. In other words, the present disclosure intends to propose a technology for efficient operation of the NCR and/or IAB in a deployment scenario environment where the NCR and/or IAB is installed, when the base station performs spatial/power domain adaptation and/or cell DTX/DRX operations for NES. Hereinafter, in the present disclosure, '/' means 'and', 'or', or 'and/or', depending on the context.

The base station may operate technologies such as controlling on/off of a UE for a certain duration on a time axis for NES purposes, adjusting transmission and reception resources for UE-common or UE-specific signals/channels, changing an amount of frequency domain resources, adjusting transmission power, or turning on/off antenna ports (APs), transmission reception points (TRPs), etc., in a spatial domain. In the present disclosure, the listed technologies are referred to as 'NES technology' or 'NES_tech', and a state in which at least one of the NES_techs is applied is referred to as an 'NES mode' or 'NES state'. The base station may indicate to the UE which NES_tech(s) are applied for each NES_tech or NES_tech group [Approach 1], or may pre-configure NES_tech or NES_tech group(s) corresponding to each code point of a specific indicator [Approach 2]. Here, the specific indicator may be indicated through DCI or MAC CE, or may be configured through higher layer signaling.

In the case of Approach 1, when at least one NES_tech is applied to the UE, the corresponding state may be defined as an NES mode or an NES state, and furthermore, may be treated as different NES modes or different NES states depending on which NES_tech is applied. The NES mode or NES state may be used as a concept indicating whether at least one NES technology is applied, or in addition, indicating which NES technology(ies) are applied. When the NES mode or NES state further indicates which NES technology(ies) are applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the indicator, the corresponding state may be defined as an NES mode or an NES state. In another example, when a 2-bit indicator is used, '00' may indicate that there is no corresponding NES _tech, '01' may indicate that at least one NES _tech_A is applied, '10' may indicate that at least one NES_tech_B is applied, and ' 11' may indicate that at least one NES_tech_C is applied. In this case, when a code point other than '00' is indicated through the indicator, the corresponding state may be defined as an NES mode or an NES state. Furthermore, the UE may determine NES state #1 when '01' is detected, NES state #2 when '10' is detected, and NES state #3 when ' 11' is detected. Accordingly, it may be distinguished, for each code point, whether the state is an NES state and/or which NES state it is.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

Specifically, at least one of the following CSI frameworks may be introduced.

- Framework#1: A plurality of CSI-RS resource sets are associated with one channel measurement resource (CMR) or one interference measurement resource (IMR) in CSI-ReportConfig. Here, the CMR may be configured by a resourcesForChannelMeasurement parameter, and the IMR may be configured by a csi-IM-ResourcesForInterference parameter or an nzp-CSI-RS-ResourcesForInterference parameter. For example, for the CMR, CSI-RS resource set #1 and CSI-RS resource set #2 are associated, CSI-RS resources belonging to CSI-RS resource set #1 may be configured with 16 antenna ports (APs), and CSI-RS resources belonging to CSI-RS resource set #2 may be configured with 8 APs.
- Framework#2: When one CSI-RS resource set associated with one CMR or one IMR is configured in CSI-ReportConfig, at least one CSI-RS resource having different properties such as the number of APs and/or power offset may be configured within the CSI-RS resource set. For example, for CSI-RS resource set #1 configured as a CMR, CSI-RS resource #1 belonging to CSI-RS resource set #1 is configured with 16 APs, and CSI-RS resource #2 belonging to the same set may be configured with 8 APs. For example, for CSI-RS resource set #1 configured as a CMR, CSI-RS resource #1 belonging to CSI-RS resource set #1 is configured with power offset #1, and CSI-RS resource #2 belonging to the same set may be configured with power offset #2.
- Framework#3: When one CSI-RS resource set associated with one CMR or one IMR is configured in CSI-ReportConfig, some or all CSI-RS resources in the set may be configured with a plurality of numbers of APs and/or power offset values. For example, for CSI-RS resource set #1 configured as a CMR, CSI-RS resource #1 belonging to CSI-RS resource set #1 is configured with up to 16 APs, and CSI reporting using at least one AP among them may be configured. Alternatively, CSI-RS resource #2 belonging to the same CSI-RS resource set #1 is configured with a plurality of power offset values, and CSI reporting using all or part of the power offsets may be configured.

For the CSI frameworks described above, a CSI reporting method may be defined through at least one of the following options.

- Option #1: CSIs considering a plurality of numbers of APs values and/or a plurality of power offset values configured in one CSI reporting may all be included in one CSI reporting. Alternatively, CSIs considering a plurality of numbers of APs values and/or a plurality of power offset values determined through configuration/indication of the base station may be included in one CSI reporting. In this case, the number of APs values and/or power offset values configured/indicated through the base station may be a part of the number of APs values and/or power offset values configured in the CSI reporting.
- Option #2: Even if a plurality of numbers of APs values and/or a plurality of power offset values are configured in one CSI reporting, CSIs considering the number of single AP value and/or a single power offset value through configuration/indication of the base station may be included in one CSI reporting.
- Option #3: Even if a plurality of numbers of APs values and/or a plurality of power offset values are configured in one CSI reporting, CSIs considering a part of the number of APs values and/or a part of power offset values through judgment/decision/selection of the UE based on a criterion pre-configured by the base station or predefined may be included in one CSI reporting.

In configuration for CSI reporting (e.g., CSI-ReportConfig), L sub-configurations greater than 1 may be configured, and each sub-configuration may correspond to one of a spatial domain adaptation pattern or a power domain adaptation pattern.

Here, the spatial domain adaptation pattern may correspond to a specific number of APs or an AP on/off pattern, or may correspond to a specific CSI-RS power value (e.g., a CSI-RS power value determined by a powerControlOffsetSS parameter which is a power offset value between SSS and CSI-RS, since turning off a part of antenna elements corresponding to one AP may affect the CSI-RS power value). For example, when applying Framework #2, for CSI-RS index #n1 belonging to a resource set, the number of A1 APs or a P1 power value is configured, and for CSI-RS index #n2 belonging to the same resource set, the number of A2 APs or a P2 power value may be configured. In this case, sub-configuration index #s1 is associated with CSI-RS index #n1, and sub-configuration index #s2 is associated with CSI-RS index #n2, thereby allowing spatial domain adaptation patterns to be configured differently for each sub-configuration. When applying Framework #3, when CSI-RS index #n1 belonging to a resource set is configured with the number of A1 APs (or a P1/P2 power value), sub-configuration index #s1 is associated with the number of A1 APs (or the P1 power value), and sub-configuration index #s2 is associated with the number of A2 APs less than the number of A1 APs (or the P2 power value) configuring CSI-RS index #n1, thereby allowing spatial domain adaptation patterns to be configured differently for each sub-configuration.

In addition, the power domain adaptation pattern may mean that a power offset value (e.g., a power offset value determined by a powerControlOffset parameter which is a power offset value between PDSCH and CSI-RS, or a powerControlOffsetSS parameter which is a power offset value between SSS and CSI-RS) is varied. For example, when applying Framework #2, for CSI-RS index #n1 belonging to a resource set, a P1 power value is configured, and for CSI-RS index #n2 belonging to the same resource set, a P2 power value may be configured. In this case, sub-configuration index #s1 is associated with CSI-RS index #n1, and sub-configuration index #s2 is associated with CSI-RS index #n2, thereby allowing power domain adaptation patterns to be configured differently for each sub-configuration.

In addition, when applying Framework #3, for CSI-RS index #n1 belonging to a resource set, a P1 power value and a P2 power value may be configured. In this case, sub-configuration index #s1 is associated with the P1 power value, and sub-configuration index #s2 is associated with the P2 power value, thereby allowing power domain adaptation patterns to be configured differently for each sub-configuration.

By utilizing one of the options #1/2/3 described above, the UE may feedback to the base station a CSI reporting including CSI(s) corresponding to N sub-configurations, where N is between 1 and L among the L sub-configurations.

For the purpose of NES of a base station, a cell discontinuous transmission (DTX) configuration and/or a cell discontinuous reception (DRX) configuration may be configured. A periodic cell DTX pattern and/or cell DRX pattern may be configured in a UE-specific, UE group-common, or cell-common manner. The cell DTX pattern and/or cell DRX pattern may be configured as illustrated in FIG. 18. FIG. 18 illustrates examples of a cell DTX pattern and/or a cell DRX pattern according to an embodiment of the present disclosure. Referring to FIG. 18, the pattern may include at least one of periodicity 1802, start slot/offset 1804, and on duration 1806.

The UE may obtain at least one cell DTX and/or cell DRX configuration for a serving cell. Specifically, through L1/L2 signaling (e.g., UE-specific DCI, UE group-common DCI, or MAC CE), activation/deactivation for at least one cell DTX and/or cell DRX configuration may be indicated.

During an inactive section of the cell DTX, at least one downlink signal/channel assumed not to be transmitted from the base station may be predefined or configured. In addition, during an inactive section of the cell DRX, at least one uplink signal/channel that may not be transmitted from the UE to the base station may be predefined or configured.

Rel-18 network controlled repeater (NCR) for NR

Coverage is a fundamental aspect of cellular network deployment. Mobile operators use various types of network nodes during deployment to provide comprehensive coverage. A conventional full-stack cell deployment is one option, but it may not always be possible (e.g., due to lack of backhaul availability) or economically viable.

As a result, new types of network nodes have been considered to increase deployment flexibility for mobile network operators. For example, an integrated access and backhaul (IAB) was introduced in Rel-16 and was enhanced in Rel-17 as a new type of network node that does not require a wired backhaul. In addition, another type of network node is an RF repeater that simply amplifies and transfers all received signals. RF repeater has been widely deployed in 2G, 3G, and 4G to complement the coverage provided by conventional full-stack cells. In Rel-17, RAN4 specified the RF and EMC requirements for RF repeaters for NR targeting both FR1 and FR2.

Although RF repeater provides a cost-effective means to extend network coverage, it has limitations. RF repeater only performs amplification and transfer operations without considering various factors that may improve performance. Such factors may include information on semi-static and/or dynamic downlink/uplink configurations, adaptive transmitter/receiver spatial beamforming, and on/off states.

A network controlled repeater is an enhanced version of a conventional RF repeater, equipped with a function to receive and process side control information from the network. Through such side control information, the network controlled repeater may perform amplification and transfer operations in a more efficient manner. Potential advantages may include mitigation of unnecessary noise amplification, improved transmission and reception through better spatial directivity, and simplified network integration.

The study on NR network controlled repeater focuses on the following scenarios and assumptions.

- The network controlled repeater is an in-band RF repeater used for network coverage extension in the FR1 and FR2 bands, and during the study period, FR2 deployment may be prioritized for both outdoor and O2I scenarios.
- It applies only to single-hop fixed network controlled repeater.
- The network controlled repeater is transparent to the UE.
- The network controlled repeater may maintain both a gNB-to-repeater link and a repeater-to-UE link simultaneously.

Here, cost efficiency is a key consideration for the network controlled repeater.

The following aspects of control information required for the network controlled repeater, including the maximum transmission power assumption [RAN1], will be studied.

- Beamforming information
- Timing information for aligning the transmission/reception boundary of the network controlled repeater
- Information on UL-DL TDD configuration
- ON-OFF information for efficient interference management and energy efficiency improvement
- Power control information for efficient interference management (second priority)
- L1/L2 signals (including configuration) for transferring side control information will be studied. In addition, identification and authentication of the network controlled repeater will be studied from the perspective of network controlled repeater management.

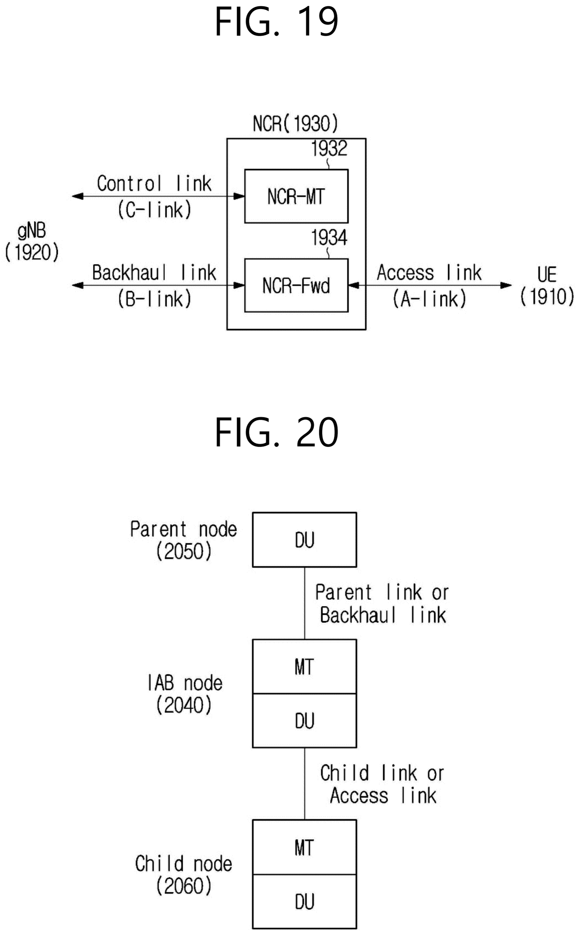

FIG. 19 illustrates an example of a structure of an NCR applicable to the present disclosure. FIG. 19 exemplifies a topology in which an NCR 1930 performs transmission and reception between a gNB 1920 and a UE 1910. The NCR 1930 is a type of wireless device including the structure illustrated in FIG. 3 and may include functional components illustrated in FIG. 19. Referring to FIG. 19, the NCR 1930 may include an NCR-MT 1932 and an NCR-Fwd 1934. The NCR 1930 may be connected to the gNB 1920 and the UE 1910.

The NCR-Fwd 1934 may receive a signal transmitted from the gNB 1920 at the RF stage and may forward it to the UE 1910, and may also receive a signal transmitted from the UE 1910 at the RF stage and may forward it to the gNB 1920. The NCR-Fwd 1934 merely transfers signals between the gNB 1920 and the UE 1910, and may not have a function of generating a signal/channel by itself, transmitting the generated signal/channel to the gNB 1920/UE 1910, or receiving and detecting a signal/channel from the gNB 1920/UE 1910. To forward a received signal, the NCR-Fwd 1934 may adjust the transmit/receive beam direction, DL/UL direction, ON/OFF state, transmission power, and the like at the RF stage. However, such operations of the NCR-Fwd 1934 may not be performed by the decision of the NCR 1930 itself and may be controlled by the gNB 1920.

The NCR-MT 1932 may include an RF layer and L1, L2, and/or L3. For example, the NCR-MT 1932 may be composed of an RF layer and L1 or L1/L2 only, or the NCR-MT 1932 may be composed of an RF layer and L1/L2/L3. The NCR-MT 1932 may detect and receive a signal/channel transmitted from the gNB 1920, and the NCR-MT 1932 may generate and transmit a signal/channel to be transmitted to the gNB 1920. In addition, the NCR-MT 1932 may receive from the gNB 1920 information (e.g., side control information) necessary for controlling the operation of the NCR-Fwd 1934. The NCR-MT 1932 may not perform transmission and reception with the UE 1910. A summary of the functions of the NCR-MT 1932 and the NCR-Fwd 1934 is shown below in [Table 2].

[Table 2]

| Components | Description |
|---|---|
| NCR-MT | The NCR-MT is defined as a function entity to communicate with a gNB via Control link (C-link) to enable the information exchanges (e.g. side control information). The C-link is based on NR Uu interface.<br>Note: Side control information is at least for the control of NCR-Fwd |
| NCR-Fwd | The NCR-Fwd is defined as a function entity to perform the amplify-and-forwarding of UL/DL RF signal between gNB and UE via backhaul link and access link. The behavior of the NCR-Fwd will be controlled according to the received side control information from gNB. |

Integrated access and backhaul (IAB)

FIG. 20 illustrates an example of a structure of an IAB node applicable to the present disclosure. The IAB node 2040 of FIG. 20 is a type of wireless device including the structure illustrated in FIG. 3 and may include functional components illustrated in FIG. 20. Referring to FIG. 20, the IAB node 2040 may be connected to a parent node 2050 and a child node 2060. The child node 2060 may be a UE. The IAB node 2040 includes a DU 2042 and an MT 2044, the parent node 2050 includes a DU 2062, and the child node 2060 includes a DU 2062 and an MT 2064. A link between the MT 2044 of the IAB node 2040 and the DU 2062 of the parent node 2050 is called a parent link, and a link between the DU 2042 of the IAB node 2040 and the MT 2064 of the child node 2060 is called a child link. Depending on the interpretation or viewpoint, the link between the IAB node 2040 and the parent node 2050 may be referred to as a backhaul link, and the link between the IAB node 2040 and the child node 2060 may be referred to as an access link.

When the IAB-DU 2042 and the IAB-MT 2044 of the IAB node 2040 are subject to a half-duplex constraint, proper transmission/reception by one side may not be guaranteed during transmission/reception by the other side, and vice versa. At the same frequency, if the IAB node 2040 supports enhanced frequency or spatial multiplexing capability, additional multiplexing modes may be supported. That is, simultaneous operations of IAB-MT Rx / IAB-DU Rx, IAB-MT Tx / IAB-DU Tx, IAB-MT Rx / IAB-DU Tx, and IAB-MT Tx / IAB-DU Rx may be possible. The IAB node 2040 may report duplex constraint conditions between the IAB-DU 2042 and the IAB-MT 2044 co-located with each other through F1AP. The IAB node 2040 may indicate, through F1AP, whether FDM is required for the enhanced multiplexing operation.

The scheduler of the IAB-DU 2042 or the IAB-donor-DU (e.g., DU 2062) shall comply with the gNB-DU resource configuration received through F1AP, which defines the usage of scheduling resources to describe the duplex constraint conditions mentioned above.

The resource configuration assigns each symbol of each DU cell with a hard, soft, or unavailable attribute. For symbols configured as hard, transmission/reception may occur, but scheduling may not occur for symbols configured as unavailable, except in certain special cases. For symbols configured as soft, scheduling may occur conditionally depending on an explicit availability indication of the parent node 2050 through DCI format 2_5 or an implicit availability determination of the IAB node 2040. The implicit determination of availability is made by the IAB node 2040 based on whether the operation of the IAB-DU 2042 would affect the co-located IAB-MT 2044.

The resource configuration may be shared between adjacent IAB nodes 2040 and IAB donors to facilitate interference management, dual connectivity, and enhanced multiplexing.

To facilitate switching from IAB-MT 2044 operation to IAB-DU 2042 operation, or vice versa, guard symbols may be used to overcome potentially misaligned symbol boundaries between the IAB-MT 2044 operation and the IAB-DU 2042 operation (e.g. The IAB-MT 2044 Rx boundary is not aligned. With the IAB-DU 2042 Tx boundary). Specifically, the IAB node 2040 may indicate to the parent node the desired number of guard symbols, while the parent node may indicate to the IAB node 2040 the actual number of guard symbols provided for a specific transition.

An IAB node 2040 that supports enhanced multiplexing capabilities (e.g., IAB-MT Rx / IAB-DU Rx, IAB-MT Tx / IAB-DU Tx, IAB-MT Rx / IAB-DU Tx, and IAB-MT Tx / IAB-DU Rx) may provide information of the parent node 2050 through MAC-CE to facilitate scheduling for enhanced multiplexing operations by the IAB node 2040. For example, information such as the Tx/Rx beam recommendation of the IAB-MT 2044, the desired Tx PSD range of the IAB-MT 2044, the desired IAB-DU 2042 Tx power adjustment of the parent node 2050, and the uplink transmission timing mode of the IAB-MT 2044 may be provided. Accordingly, the parent node 2050 may provide to the IAB node 2040, through MAC-CE, information such as a limited IAB-DU 2042 Tx beam, the IAB-DU 2042 Tx power adjustment of the actual parent node 2050, and the uplink transmission timing mode of the IAB-MT 2044, to facilitate enhanced multiplexing at the IAB node 2040 and/or the parent node 2050.

[Embodiment #1] NCR and/or IAB operation method corresponding to NES operation through spatial domain adaptation of base station

The base station may perform spatial domain adaptation as a type of NES operation. The spatial domain adaptation may be applied according to one of a plurality of patterns. In this case, depending on various embodiments, the operation of a device (e.g., an NCR, an IAB node, etc.) operating according to the proposed technology may differ depending on which spatial domain adaptation pattern is applied by the base station. Specifically, the spatial domain adaptation pattern may affect the transmission beam, reception beam, or restricted beam of the device.

[Table 3] shows the description of NCR extracted from document R1-2304197.

[Table 3]

| |
|---|
| 20. Network controlled repeater<br>An NCR includes an NCR-MT entity and an NCR-Fwd entity [19, TS 38.300].<br>Throughout this specification, unless otherwise noted, statements using the term "UE" in Clauses 4 through 13 are equally applicable to the NCR-MT.<br>A procedure for the NCR-MT to perform cell search, system information acquisition, random access procedure, UCI reporting, or PDCCH monitoring is same as a corresponding one for a UE. A procedure for the NCR-MT to perform PDSCH reception, CSI-RS measurements and CSI determination, PUSCH transmission, or SRS transmission is same as a corresponding one for a UE as described in [6, TS 38.214]. |

(continued)

The NCR-Fwd transmits or receives only after the NCR-MT receives on the control link an indication for one or more beams [20, TS 38.106] for the NCR-Fwd to use for transmissions or receptions over corresponding one or more time resources on the access link.

When the NCR-MT performs a link recovery procedure as described in Clause 6, the NCR-Fwd does not transmit or receive until the link recovery procedure is complete [11 TS 38.321].

The NCR can be provided, through the NCR-MT, tdd-UL-DL-ConfigurationCommon and, additionally, tdd-UL-DL-ConfigurationDedicated. The NCR-Fwd receives on the backhaul link or transmits on the access link only in symbols

indicated as downlink by tdd-UL-DL-ConfigurationCommon or tdd-UL-DL-ConfigurationDedicated. The NCR-Fwd receives on the access link or transmits on the backhaul link only in symbols indicated as uplink by tdd-UL-DL-ConfigurationCommon or tdd-UL-DL-ConfigurationDedicated.

When the NCR simultaneously receives via both the control link and the backhaul link in a set of symbols, a TCI state for receptions on the backhaul link is same as a TCI state for receptions on the control link in the set of symbols. When the NCR simultaneously transmits via both the control link and the backhaul link in a set of symbols, a spatial filter for transmissions on the backhaul link is same as a spatial filter for transmissions on the control link in the set of symbols.

When the NCR does not simultaneously receive on the control link and the backhaul link

- if the NCR does not support determination of a TCI state for receptions on the backhaul link based on an indication of a TCI state by the serving cell, or if the NCR does not receive an indication of a TCI state, for receptions on the backhaul link [11, TS 38.321]

- if the NCR does not receive an indication of a unified TCI state for receptions by the NCR-MT, receptions on the backhaul link use same QCL parameters as the ones for PDCCH receptions in a CORESET with the lowest controlResourceSetId

- else, receptions on the backhaul link use the QCL parameters provided by an indicated unified TCI state for receptions by the NCR-MT

- else receptions on the backhaul link use QCL parameters provided by a TCI state in a MAC CE [11, TS 38.321]. When the NCR does not simultaneously transmit on the control link and the backhaul link

- if the NCR does not support determination of a spatial filter for transmissions on the backhaul link based on an indication of a unified TCI state or SRI by the serving cell, or if the NCR-MT does not receive an indication of a unified TCI state or SRI for determining a spatial filter, for transmissions on the backhaul link

- if the NCR does not receive an indication of a unified TCI state for transmissions by the NCR-MT, transmissions on the backhaul link use a same spatial filter as the one associated with the PUCCH resource with the smallest pucch-ResourceId in PUCCH-ResourceSet

- else, transmissions on the backhaul link use a spatial filter corresponding to an indicated unified TCI state for transmissions by the NCR-MT.

- else transmissions on the backhaul link use a spatial filter corresponding to a unified TCI state or SRI provided by a MAC CE [11, TS 38.321].

The NCR-Fwd uses a same beam for transmissions and receptions on the access link during respective time resources associated with the beam.

As shown in [Table 3], when the NCR performs simultaneous reception through a C-link and a B-link, the TCI state, reception beam direction, or RX spatial filter applied to the C-link may also be applied to the B-link to perform the reception operation. On the other hand, when the NCR does not use both the C-link and the B-link simultaneously and performs the reception operation using only the B-link, one of the following methods may be applied.

[Method #1-1a] The NCR may receive a signal of the B-link using the same QCL parameters as those applied for PDCCH reception within the CORESET having the lowest index. This method may be applied when the NCR has not received a unified TCI indication for reception by the NCR-MT.

[Method #1-1b] The NCR may receive a signal of the B-link using the same QCL parameters as those provided in the indicated unified TCI state. This method may be applied when the NCR has received a unified TCI indication for reception by the NCR-MT.

[Method #1-1c] The NCR may receive a signal of the B-link using the same QCL parameters as those provided in a TCI state indicated through MAC CE, or in a specific TCI state (e.g., a specific TCI state indicated through DCI) among the TCI states indicated through MAC CE. This method may be applied when the NCR supports L1/L2 signaling for a TCI state through the serving cell and for the B-link and has received such an indication.

When spatial domain adaptation is applied for NES of the base station, for example, when antenna port on/off, antenna port on/off pattern change, change in the number of antenna elements corresponding to antenna ports, or change in specific CSI-RS power values is applied, it may be required that the reception operation of NCR through only the B-link differs for each spatial domain adaptation pattern. In this case, according to the methods described above, the following embodiments may be applied.

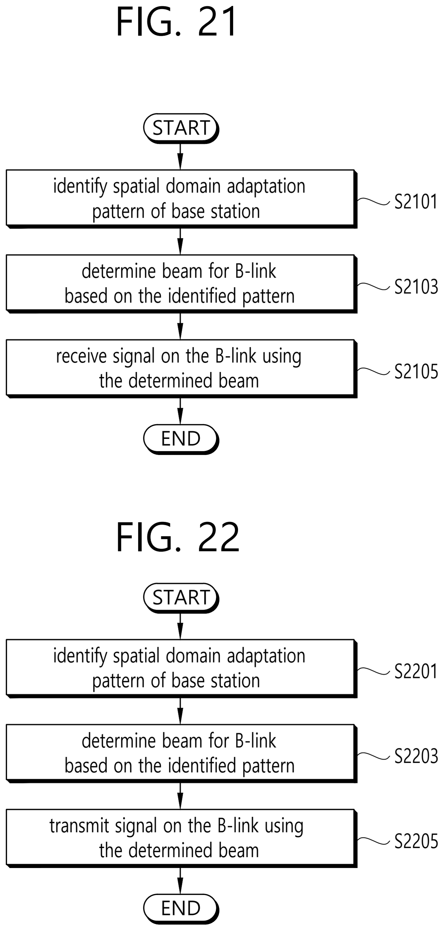

FIG. 21 illustrates an example of a procedure for receiving a signal based on a spatial domain adaptation pattern of a base station according to an embodiment of the present disclosure. FIG. 21 exemplifies a method performed by a device (e.g., an NCR) operating according to the proposed technology.

Referring to FIG. 21, in step S2101, the device identifies the spatial domain adaptation pattern of the base station. The device may identify the spatial domain adaptation pattern of the base station based on explicit signaling or implicit signaling. Alternatively, the device may identify the spatial domain adaptation pattern of the base station based on information related to CSI reporting (e.g., activated sub-configuration).

In step S2103, the device determines a beam for the B-link based on the identified pattern. The device may identify a reception beam corresponding to the pattern identified in step S2101, that is, a reception beam corresponding to a QCL parameter or a TCI state. The QCL parameter or TCI state corresponds to a characteristic (e.g., transmission beam) of a signal transmitted from the base station, and the reception beam corresponding to the characteristic of the signal transmitted from the base station may be determined based on at least one of a beam management procedure pre-performed, a pre-configuration, or a predefined rule.

In step S2105, the device receives a signal on the B-link using the determined beam. For example, when the device receives a signal from the base station using only the B-link among the C-link and the B-link, the device may process the signal using the reception beam determined in step S2103. Accordingly, the device may use a reception beam corresponding to the spatial domain adaptation pattern of the base station.

As described with reference to FIG. 21, the reception beam used for the B-link may vary depending on the spatial domain adaptation pattern of the base station. Hereinafter, various embodiments for determining a reception beam based on the spatial domain adaptation pattern of the base station are described.

When applying [Method #1-1a] for NES, that is, when following the method of receiving a signal of the B-link using the same parameters as the QCL parameters applied for PDCCH reception within the CORESET having the lowest index, the NCR may be operated according to the following embodiments.

Embodiment #1-1a-1) According to an individual configuration or a predefined rule, different CORESET indexes may be related to respective spatial domain adaptation patterns. According to Embodiment #1-1a-1, when a certain spatial domain adaptation pattern is applied, the NCR may receive a signal of the B-link using the same parameters as the QCL parameters applied for PDCCH reception within the CORESET having the smallest index (e.g., CORESET index 0), and when another spatial domain adaptation pattern is applied, the NCR may receive a signal of the B-link using the same parameters as the QCL parameters applied for PDCCH reception within the CORESET having the second smallest index (e.g., CORESET index 1).

Embodiment #1-1a-2) For a CORESET having a specific index (e.g., the lowest index), a plurality of TCI states or unified TCI states may be configured, and different TCI states may be applied depending on the spatial domain adaptation. According to Embodiment #1-1a-2, a plurality of TCI states (e.g., TCI state #A/B) may be preconfigured for the CORESET having the lowest index, and when a certain spatial domain adaptation pattern is applied, the NCR may receive a signal of the B-link using the same parameters as the QCL parameters corresponding to TCI state #A, while when another spatial domain adaptation pattern is applied, the NCR may receive a signal of the B-link using the same parameters as the QCL parameters corresponding to TCI state #B.

When applying [Method #1-1b] for NES, that is, in the option of receiving a signal of the B-link using the same parameters as the QCL parameters provided in the indicated unified TCI state, the NCR may be operated according to the following embodiments.

Embodiment #1-1b-1) In the process of indicating a unified TCI state through DCI, a plurality of unified TCI states corresponding to one code-point may be preconfigured. According to Embodiment #1-1b-1, when a certain spatial domain adaptation pattern is applied, the NCR may receive a signal of the B-link using one of the indicated plurality of TCI states, and when another spatial domain adaptation pattern is applied, the NCR may receive a signal of the B-link using another one of the indicated plurality of TCI states.

Embodiment #1-1b-2) Only one unified TCI state is configured, and an association relationship between the one unified TCI state and another unified TCI state may be predefined. According to Embodiment #1-1b-2, when a certain spatial domain adaptation pattern is applied, the NCR may receive a signal of the B-link using the QCL parameters configured in the indicated one TCI state, and when another spatial domain adaptation pattern is applied, the NCR may receive a signal of the B-link using the QCL parameters configured in another TCI state related to the indicated one TCI state.

Embodiment #1-1b-3) Depending on the spatial domain adaptation, the indicated unified TCI state may be followed, or the QCL parameters configured for a CORESET with a specific index, as in [Method #1-1a], may be applied. According to Embodiment #1-1b-3, when a certain spatial domain adaptation pattern is applied, the NCR may receive a signal of the B-link using the QCL parameters configured in the indicated one TCI state, and when another spatial domain adaptation pattern is applied, the NCR may receive a signal of the B-link using the same parameters as the QCL parameters applied for PDCCH reception within the CORESET having a specific index (e.g., the lowest index).

When applying [Method #1-1c] for NES, that is, in the option of receiving a signal of the B-link using the same parameters as the QCL parameters provided in a TCI state indicated through MAC CE, or in a specific TCI state (e.g., a specific TCI state indicated through DCI) among the TCI states indicated through MAC CE, the NCR may be operated according to the following embodiments.

Embodiment #1-1c-1) In the process of indicating a TCI state through MAC CE, a plurality of TCI states corresponding to one code-point configured within the MAC CE or a DCI field may be preconfigured. According to Embodiment #1-1c-1, when a certain spatial domain adaptation pattern is applied, the NCR may receive a signal of the B-link using one of the indicated plurality of TCI states, and when another spatial domain adaptation pattern is applied, the NCR may receive a signal of the B-link using another one of the indicated plurality of TCI states.

Embodiment #1-1c-2) Only one TCI state is configured, and an association relationship between the one TCI state and another TCI state may be predefined. According to Embodiment #1-1c-2, when a certain spatial domain adaptation pattern is applied, the NCR may receive a signal of the B-link using the QCL parameters configured in the indicated one TCI state, and when another spatial domain adaptation pattern is applied, the NCR may receive a signal of the B-link using the QCL parameters configured in another TCI state related to the indicated one TCI state

Embodiment #1-1c-3) Depending on the spatial domain adaptation, either the indicated TCI state may be followed, or the QCL parameters configured for a CORESET with a specific index, as in [Method #1-1a], may be applied. According to Embodiment #1-1c-3, when a certain spatial domain adaptation pattern is applied, the NCR may receive a signal of the B-link using the QCL parameters configured in the indicated one TCI state, and when another spatial domain adaptation pattern is applied, the NCR may receive a signal of the B-link using the same parameters as the QCL parameters applied for PDCCH reception within the CORESET having a specific index (e.g., the lowest index).

As shown in [Table 3], when the NCR performs simultaneous transmission through the C-link and the B-link, the TX spatial filter or transmission beam direction applied to the C-link may also be applied to the B-link. On the other hand, when the NCR does not perform simultaneous transmission through the C-link and the B-link and performs a transmission operation only through the B-link, one of the following methods may be applied.

[Method #1-2a] The NCR transmits a signal of the B-link using the same filter as the TX spatial filter applied for transmission of the PUCCH resource having the lowest index. For example, this method may be applied when the NCR has not received a unified TCI indication for transmission by the NCR-MT.

[Method #1-2b] The NCR transmits a signal of the B-link using the TX spatial filter corresponding to the indicated unified TCI state. For example, this method may be applied when the NCR has received a unified TCI indication for transmission by the NCR-MT.

[Method #1-2c] The NCR transmits a signal of the B-link using the TX spatial filter corresponding to a TCI state indicated through MAC CE, a unified TCI state, a specific TCI state (e.g., a specific TCI state indicated through DCI) among the TCI states indicated through MAC CE, an SRI, or a specific SRI (e.g., a specific SRI indicated through DCI) among the SRIs indicated through MAC CE. For example, this method may be applied when the NCR supports L1/L2 signaling for a TCI state or an SRI through the serving cell and for the B-link and has received such an indication.

When spatial domain adaptation is applied for NES of the base station, for example, when antenna port on/off, antenna port on/off pattern change, change in the number of antenna elements corresponding to antenna ports, or change in specific CSI-RS power values is applied, it may be required that the transmission operation of the NCR through only the B-link differs for each spatial domain adaptation operation. In this case, according to the methods described above, the following embodiments may be applied.

FIG. 22 illustrates an example of a procedure for transmitting a signal based on a spatial domain adaptation pattern of a base station according to an embodiment of the present disclosure. FIG. 22 exemplifies a method performed by a device (e.g., an NCR) operating according to the proposed technology.

Referring to FIG. 22, in step S2201, the device identifies the spatial domain adaptation pattern of the base station. The device may identify the spatial domain adaptation pattern of the base station based on explicit signaling or implicit signaling. Alternatively, the device may identify the spatial domain adaptation pattern of the base station based on information related to CSI reporting (e.g., activated sub-configuration).

In step S2203, the device determines a beam for the B-link based on the identified pattern. The device may identify a transmission beam, that is, a TX spatial filter, corresponding to the pattern identified in step S2201. The TX spatial filter and/or transmission beam may be determined based on at least one of a beam management procedure pre-performed, a pre-configuration, or a predefined rule.

In step S2205, the device transmits a signal on the B-link using the determined beam. For example, when the device transmits a signal to the base station using only the B-link among the C-link and the B-link, the device may process (e.g., perform transmit beamforming) the signal using the transmission beam determined in step S2203. Accordingly, the device may use a transmission beam corresponding to the spatial domain adaptation pattern of the base station.

As in the embodiment described with reference to FIG. 22, the transmission beam used for the B-link may vary depending on the spatial domain adaptation pattern of the base station. Hereinafter, various embodiments for determining a transmission beam based on the spatial domain adaptation pattern of the base station are described.

When applying [Method #1-2a] for NES, that is, when following the method of transmitting a signal of the B-link using the same TX spatial filter as that applied for transmission of the PUCCH resource having the lowest index, the NCR may be operated according to the following embodiments.

Embodiment #1-2a-1) According to an individual configuration or a predefined rule, different PUCCH resource indexes may be related to respective spatial domain adaptations. According to Embodiment #1-2a-1, when a certain spatial domain adaptation pattern is applied, the NCR may transmit a signal of the B-link using the same TX spatial filter as that applied for transmission of the PUCCH resource having the lowest index, and when another spatial domain adaptation pattern is applied, the NCR may transmit a signal of the B-link using the same filter as the TX spatial filter applied for transmission of the PUCCH resource having the second lowest index.

Embodiment #1-2a-2) For a PUCCH resource having a specific index (e.g., the lowest index), a plurality of QCL parameters (e.g., a plurality of TCI states, a plurality of unified TCI states, a plurality of RSs, or a plurality of spatial relation information parameters) may be configured, and different QCL parameters may be applied depending on the spatial domain adaptation. According to Embodiment #1-2a-2, for the PUCCH resource having the lowest index, a plurality of RSs (e.g., CSI-RS index #A and/or CSI-RS index #B) may be preconfigured, and when a certain spatial domain adaptation pattern is applied, the NCR may transmit a signal of the B-link using the same filter as the TX spatial filter corresponding to CSI-RS index #A, and when another spatial domain adaptation pattern is applied, the NCR may transmit a signal of the B-link using the same filter as the TX spatial filter corresponding to CSI-RS index #B.

When applying [Method #1-2b] for NES, that is, when following the method of transmitting a signal of the B-link using the TX spatial filter corresponding to the indicated unified TCI state, the NCR may be operated according to the following embodiments.

Embodiment #1-2b-1) In the process of indicating a unified TCI state through DCI, a plurality of unified TCI states corresponding to one code-point may be preconfigured. According to Embodiment #1-2b-1, when a certain spatial domain adaptation pattern is applied, the NCR may transmit a signal of the B-link using one of the indicated plurality of TCI states, and when another spatial domain adaptation pattern is applied, the NCR may transmit a signal of the B-link using another one of the indicated plurality of TCI states.

Embodiment #1-2b-2) Only one unified TCI state is configured, and an association relationship between the one unified TCI state and another unified TCI state may be predefined. According to Embodiment #1-2b-2, when a certain spatial domain adaptation pattern is applied, the NCR may transmit a signal of the B-link using the TX spatial filter corresponding to the indicated one TCI state, and when another spatial domain adaptation pattern is applied, the NCR may transmit a signal of the B-link using the TX spatial filter corresponding to another TCI state related to the indicated one TCI state.

Embodiment #1-2b-3) Depending on the spatial domain adaptation, either the indicated unified TCI state may be followed, or [Method #1-2a] described above (e.g., using the TX spatial filter applied for transmission of a PUCCH resource with a specific index) may be applied. According to Embodiment #1-2b-3, when a certain spatial domain adaptation pattern is applied, the NCR may transmit a signal of the B-link using the TX spatial filter corresponding to the indicated one TCI state, and when another spatial domain adaptation pattern is applied, the NCR may transmit a signal of the B-link using the same TX spatial filter as that applied for transmission of the PUCCH resource having a specific index (e.g., the lowest index).

When applying [Method #1-2c] for NES, that is, when following the method of transmitting a signal of the B-link using the TX spatial filter corresponding to a unified TCI state indicated through MAC CE, a specific TCI state (e.g., a specific TCI state indicated through DCI) among the TCI states indicated through MAC CE, an SRI, or a specific SRI (e.g., a specific SRI indicated through DCI) among the SRIs indicated through MAC CE, the NCR may be operated according to the following embodiments.

Embodiment #1-2c-1) In the process of indicating a TCI state or an SRI through MAC CE, a plurality of TCI states or a plurality of SRIs corresponding to one code-point within the MAC CE or a DCI field may be preconfigured. According to Embodiment #1-2c-1, when a certain spatial domain adaptation pattern is applied, the NCR may transmit a signal of the B-link using one of the indicated plurality of TCI states or SRIs, and when another spatial domain adaptation pattern is applied, the NCR may transmit a signal of the B-link using another one of the indicated plurality of TCI states or SRIs.

Embodiment #1-2c-2) One TCI state or SRI is configured, and an association relationship between the one TCI state or SRI and another TCI state or SRI may be preconfigured. According to Embodiment #1-2c-2, when a certain spatial domain adaptation pattern is applied, the NCR may transmit a signal of the B-link using the TX spatial filter corresponding to the indicated one TCI state or SRI, and when another spatial domain adaptation pattern is applied, the NCR may transmit a signal of the B-link using the TX spatial filter corresponding to another TCI state or SRI associated with the indicated one TCI state or SRI.

Embodiment #1-2c-3) Depending on the spatial domain adaptation, the indicated TCI state or SRI may be followed, or [Method #1-2a] described above (e.g., using the TX spatial filter applied for transmission of a PUCCH resource with a specific index) may be applied. According to Embodiment #1-2c-3, when a certain spatial domain adaptation pattern is applied, the NCR may transmit a signal of the B-link using the TX spatial filter corresponding to the indicated one TCI state or SRI, and when another spatial domain adaptation pattern is applied, the NCR may transmit a signal of the B-link using the same filter as the TX spatial filter applied for transmission of the PUCCH resource having a specific index (e.g., the lowest index).

[Table 4] shows a description of the IAB nodes extracted from TS 38.213.

[Table 4]

| |
|---|
| The IAB-node can be provided by the parent node a set of RS resource indexes that indicate quasi co-location properties of an IAB-DU cell where simultaneous transmission/reception from the IAB-MT and transmission from the IAB-DU cells is restricted by Child IAB-DU Restricted Beam Indication MAC CE as described in [11, TS 38.321]. The IAB-DU does not transmit on a cell if the IAB node is operating in a non-TDM multiplexing mode using an indicated RS resource index on a symbol or RB set configured as soft in an IAB-DU cell<br>- when it is not indicated as available by resourceAvailability<br>- when the IAB-MT is operating on an associated carrier, if that indication is provided<br>- when the current IAB-DU transmission mode corresponds to an associated multiplexing mode, if that indication is provided<br>- when one of the associated TCI states, RS resource indexes, or SRI of the IAB-MT, if provided, is simultaneously used for reception or transmission of the IAB-MT<br>- when simultaneous transmission/reception by the IAB-MT and transmission from the IAB-DU cell occur in non-overlapping frequency resources, if such indication is provided, or when simultaneous transmission/reception by the IAB-MT and transmission from the IAB-DU cell occur in overlapping frequency resources<br>- in a given slot, if that indication is provided |

As shown in [Table 4], when the IAB-MT performs transmission and/or reception while the IAB-DU performs transmission, a restriction on the transmission beam of the IAB-DU may be indicated through MAC CE. The restriction on the transmission beam may be understood as being indicated to minimize performance degradation of the transmission and/or reception operation of the IAB-MT due to self-interference or power consumption caused by the transmission operation of the IAB-DU within the IAB node.

When spatial domain adaptation (e.g., AP on/off, AP on/off pattern variation, change in the number of antenna elements corresponding to APs, or variation in specific CSI-RS power values) is applied for NES of the base station, the transmission and reception operations of the IAB-MT (e.g., transmission and/or reception beam direction) may vary for each spatial domain adaptation operation. In consideration of this, the restriction on the IAB-DU transmission beam also needs to operate differently depending on the spatial domain adaptation.

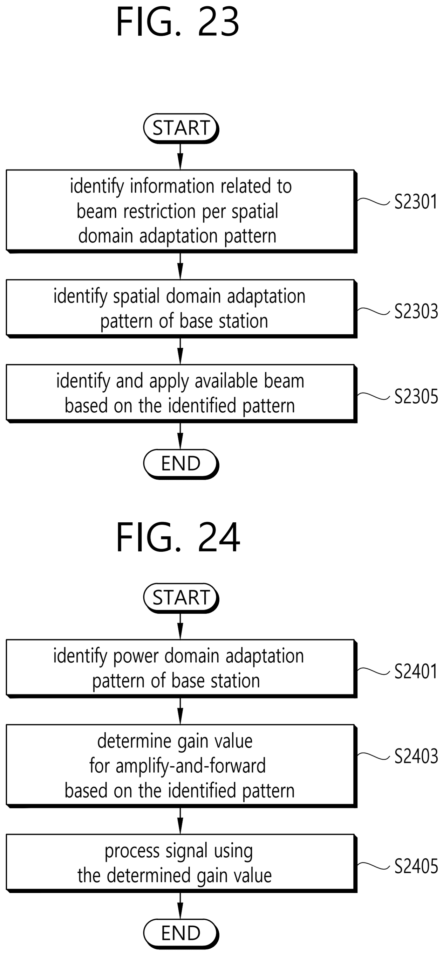

FIG. 23 illustrates an example of a procedure for applying a restriction on a beam based on a spatial domain adaptation pattern of a base station according to an embodiment of the present disclosure. FIG. 23 exemplifies a method performed by a device (e.g., an IAB node) operating according to the proposed technology.

Referring to FIG. 23, in step S2301, the device identifies information related to beam restrictions per spatial domain adaptation pattern. For example, the device may receive control information indicating beams corresponding to spatial domain adaptation patterns. Alternatively, the device may receive control information related to at least one beam applied according to a change in the spatial domain adaptation pattern. Alternatively, the device may determine at least one beam applied according to a change in the spatial domain adaptation pattern based on a predefined rule.

In step S2303, the device identifies the spatial domain adaptation pattern of the base station. The device may identify the spatial domain adaptation pattern of the base station based on explicit signaling or implicit signaling. Alternatively, the device may identify the spatial domain adaptation pattern of the base station based on information related to CSI reporting (e.g., activated sub-configuration).

In step S2305, the device identifies and applies available beams based on the identified pattern. That is, since the beams restricted may differ depending on the spatial domain adaptation pattern, based on the information related to beam restrictions per spatial domain adaptation pattern identified in step S2301, the device may determine at least one remaining beam as an available beam other than beams restricted according to the spatial domain adaptation pattern identified in step S2301. Then, the device may transmit a signal using the available beam.

As in the embodiment described with reference to FIG. 23, the beams restricted may vary depending on the spatial domain adaptation pattern of the base station. Hereinafter, various embodiments for determining the beams to be restricted based on the spatial domain adaptation pattern of the base station are described.

According to one embodiment, in the process of indicating a restriction on the IAB-DU transmission beam through MAC CE, a plurality of RS resource indexes corresponding to the same time interval may be indicated through the MAC CE. For example, when RS resource index #1 and RS resource index #2 are indicated through the MAC CE/DCI for a specific slot/symbol, the IAB-DU may not attempt transmission using RS resource index #1 for that slot/symbol when a certain spatial domain adaptation pattern is applied, and may not attempt transmission using RS resource index #2 for that slot/symbol when another spatial domain adaptation pattern is applied.

According to another embodiment, when only RS resource index #1 is indicated through the MAC CE in the same manner as before, and RS resource index #2 is identified through another method, the IAB-DU may not attempt transmission using RS resource index #1 for that slot/symbol when a certain spatial domain adaptation pattern is applied, and may not attempt transmission using RS resource index #2 for that slot/symbol when another spatial domain adaptation pattern is applied. Here, RS resource index #2 may be indicated through separate L1/L2 signaling, may be separately configured, or may be pre-related to RS resource index #1 according to a predefined rule or configuration.

According to the embodiments described above, it is required to identify the spatial domain adaptation pattern of the base station. In this case, a change in the spatial domain adaptation pattern may be determined as follows. If which N sub-configuration(s) among L sub-configurations are activated/triggered can be changed by configuration/indication of the base station, performing a different spatial domain adaptation operation may mean at least one of the following cases.

- A device (e.g., an NCR, an IAB node, etc.) or UE operating according to the proposed technology may regard that different spatial domain adaptation operations have been performed by the base station before and after receiving the corresponding configuration/indication.
- When the actually activated/triggered sub-configuration combination has changed, if the (maximum) number of APs corresponding to the activated/triggered sub-configuration combination before receiving the configuration/indication is different from the (maximum) number of APs corresponding to the activated/triggered sub-configuration combination after receiving the configuration/indication, the device (e.g., an NCR, an IAB node, etc.) or UE operating according to the proposed technology may regard that different spatial domain adaptation operations have been performed by the base station.
- When the actually activated/triggered sub-configuration combination has changed, if the (maximum) CSI-RS power value corresponding to the activated/triggered sub-configuration combination before receiving the configuration/indication is different from the (maximum) CSI-RS power value corresponding to the activated/triggered sub-configuration combination after receiving the configuration/indication, the device (e.g., an NCR, an IAB node, etc.) or UE operating according to the proposed technology may regard that different spatial domain adaptation operations have been performed by the base station.
- When the actually activated/triggered sub-configuration combination has changed, if the smallest or largest index value among the activated/triggered sub-configurations before receiving the configuration/indication is different from the smallest or largest index value among the activated/triggered sub-configurations after receiving the configuration/indication, the device (e.g., an NCR, an IAB node, etc.) or UE operating according to the proposed technology may regard that different spatial domain adaptation operations have been performed by the base station.

[Embodiment #2] Operation scheme of NCR and/or IAB corresponding to NES operation through power domain adaptation of a base station

When an NCR is installed in consideration of cell coverage extension, if the base station increases or decreases its transmission power for NES, it may be desirable that the gain in the amplify-and-forward operation of the NCR-Fwd also changes according to the transmission power of the base station to ensure the same level of cell coverage. Therefore, in consideration of the power domain adaptation operation of the base station, the present disclosure proposes embodiments for differently configuring/indicating the gain control of the NCR-Fwd according to an increase or decrease in the transmission power of the base station.

FIG. 24 illustrates an example of a procedure for transferring a signal based on a power domain adaptation pattern of a base station according to an embodiment of the present disclosure. FIG. 24 exemplifies a method performed by a device (e.g., an NCR) operating according to the proposed technology.

Referring to FIG. 24, in step S2401, the device identifies the power domain adaptation pattern of the base station. The device may identify the power domain adaptation pattern of the base station based on explicit signaling or implicit signaling. Alternatively, the device may identify the power domain adaptation pattern of the base station based on information related to CSI reporting (e.g., activated sub-configuration).

In step S2403, the device determines a gain value for amplify-and-forward based on the identified pattern. For example, although not illustrated in FIG. 24, the device may receive configuration information related to gain values corresponding to the power domain adaptation patterns of the base station and may determine the gain value corresponding to the power domain adaptation pattern identified in step S2401 based on the configuration information. Alternatively, the device may determine the gain value corresponding to the identified power domain adaptation pattern based on a predefined rule.

In step S2405, the device processes the signal using the determined gain value. That is, when performing the amplify-and-forward operation for the transmission signal of the base station, the device may amplify the signal according to the gain value determined in step S2403.

As in the embodiment described with reference to FIG. 24, the gain value for the amplify-and-forward operation may be controlled according to the power domain adaptation pattern of the base station. Hereinafter, various embodiments for determining the gain value based on the power domain adaptation pattern of the base station are described.

According to one embodiment, the gain value in the amplify-and-forward operation of the NCR-Fwd linked to the transmission power value of the base station, power up/down, or power domain adaptation may be controlled by an individual configuration or rule (e.g., a predefined rule that reflects the variation amount of transmission power in the gain), and the gain value in the amplify-and-forward operation of the NCR-Fwd may change according to the actual transmission power value or power domain adaptation applied by the base station. For example, when the NCR recognizes that a certain spatial domain adaptation is currently applied by the base station, it may apply to the amplify-and-forward operation of the NCR-Fwd the gain value preconfigured to be linked with the corresponding spatial domain adaptation, and when the NCR recognizes that another spatial domain adaptation is applied at a specific time point, it may apply to the amplify-and-forward operation of the NCR-Fwd the gain value preconfigured or determined by a predefined rule to be linked with the corresponding different spatial domain adaptation.

[Table 5] shows the description of the IAB nodes extracted from TS 38.213.

[Table 5]

For a serving cell of an IAB-MT, the IAB-MT can be provided a set of TCI states or a set of RS resource indexes corresponding to a SS/PBCH block or to a CSI-RS resource index for a slot where a PDSCH EPRE adjustment is indicated by DL Tx Power Adjustment MAC CE as described in [11, TS 38.321]. The PDSCH EPRE can be derived from a downlink CSI-RS EPRE as described in [6, TS 38.214] and a power offset provided by the DL Tx Power adjustment field in DL TX Power Adjustment MAC CE as described in [11, TS 38.321]. The downlink CSI-RS EPRE refers to the CSI-RS indicated by Reference CSI-RS ID in DL Tx Power Adjustment MAC CE as described in [11, TS 38.321]. The DL TX Power Adjustment provides the offset between PDSCH EPRE and CSI-RS EPRE. For a downlink DM-RS and/or PT-RS associated with a PDSCH, the IAB-MT may assume that the ratio of PDSCH EPRE to DM-RS EPRE, and/or PT-RS EPRE to PDSCH EPRE, is obtained as for a "UE" in [6, TS 38.214]. If no TCI state or RS resource index is provided to the IAB-MT, the IAB-MT may assume that a same PDSCH EPRE adjustment applies to all TCI states or RS resource indexes configured for the IAB-MT. A PDSCH EPRE adjustment provided by DL Tx Power Adjustment MAC CE may be associated with

- multiplexing mode of the IAB-node, if provided, and/or

- when simultaneous reception by the IAB-MT and transmission/reception by an IAB-DU cell occur in non-overlapping frequency resources, if provided, or when simultaneous reception by the IAB-MT and transmission/reception by an IAB-DU cell occur in overlapping frequency resources, if provided, and/or

- slots indicated by slot index, if provided.

As shown in [Table 5], when the IAB-MT performs reception while the IAB-DU performs transmission and/or reception, TX power adjustment of the base station may be indicated through MAC CE. The indication of TX power adjustment is intended to minimize performance degradation caused by the transmission operation of the base station on the transmission and reception operations of the IAB-DU. Therefore, the present disclosure proposes embodiments for differently configuring/indicating the DL TX power adjustment value according to an increase or decrease in the transmission power of the base station.

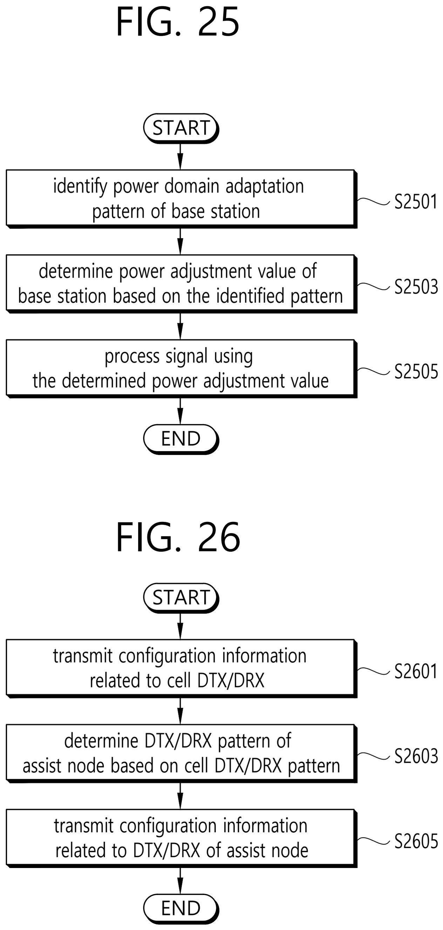

FIG. 25 illustrates an example of a procedure for processing a downlink signal based on a power domain adaptation pattern of a base station according to an embodiment of the present disclosure. FIG. 25 exemplifies a method performed by a device (e.g., an IAB node) operating according to the proposed technology.

Referring to FIG. 25, in step S250 1, the device identifies the power domain adaptation pattern of the base station. The device may identify the power domain adaptation pattern of the base station based on explicit signaling or implicit signaling. Alternatively, the device may identify the power domain adaptation pattern of the base station based on information related to CSI reporting (e.g., activated sub-configuration).

In step S2503, the device determines a power adjustment value of the base station based on the identified pattern. Here, the power adjustment value relates to the power value applied to the downlink signal of the base station. For example, although not illustrated in FIG. 25, the device may receive control information related to power adjustment values corresponding to the power domain adaptation patterns of the base station and may determine the power adjustment value corresponding to the power domain adaptation pattern identified in step S2501 based on the control information. Alternatively, the device may determine the power adjustment value corresponding to the identified power domain adaptation pattern based on a predefined rule.

In step S2505, the device processes the downlink signal using the determined power adjustment value. When receiving a downlink channel, for example, a PDSCH, the device may process the signal based on the power adjustment value applied by the base station. Specifically, the device may determine the energy per resource element (EPRE) of the PDSCH based on the power adjustment value and may demodulate and decode the PDSCH based on the EPRE.

As in the embodiment described with reference to FIG. 25, the power adjustment value for the downlink channel may vary depending on the power domain adaptation pattern of the base station. Hereinafter, various embodiments for determining the power adjustment value based on the power domain adaptation pattern of the base station are described.

According to one embodiment, the DL TX power adjustment value linked to the transmission power value, power up/down, or power domain adaptation of the base station may be controlled by an individual configuration or rule (e.g., a predefined rule that reflects the variation amount of transmission power in the DL TX power adjustment value), and the DL TX power adjustment value may change according to the actual transmission power value or power domain adaptation applied by the base station. For example, the power adjustment value may correspond to a power offset value applied to a sub-configuration of CSI reporting for power domain adaptation.

According to one embodiment, the IAB node may receive the PDSCH while assuming the DL TX power adjustment value preconfigured to be linked with the spatial domain adaptation pattern currently recognized as applied by the base station, and when recognizing that another spatial domain adaptation pattern is applied at a specific time point, the IAB node may receive the PDSCH while assuming the DL TX power adjustment NES value preconfigured or determined by a predefined rule to be linked with the corresponding different spatial domain adaptation pattern. This embodiment may be applied when the power of the CSI-RS configured as a reference CSI-RS changes (e.g., when the spatial/power domain adaptation linked to the CSI report configuration associated with the CSI-RS changes).

According to the embodiments described above, it is required to identify the power domain adaptation pattern of the base station. In this case, a change in the power domain adaptation pattern may be determined as follows. If which N sub-configuration(s) among L sub-configurations are activated/triggered can be changed by configuration/indication of the base station, performing a different power domain adaptation operation may mean at least one of the following cases.

- A device operating according to the proposed technology (e.g., an NCR, an IAB node, etc.) or UE may regard that different power domain adaptation operations have been performed by the base station before and after receiving the corresponding configuration/indication.
- When the actually activated/triggered sub-configuration combination has changed, if the power/maximum power/-power offset/maximum power offset value corresponding to the activated/triggered sub-configuration combination before receiving the configuration/indication is different from the power/maximum power/power offset/maximum power offset value corresponding to the activated/triggered sub-configuration combination after receiving the configuration/indication, the device (e.g., an NCR, an IAB node, etc.) or UE operating according to the proposed technology may regard that different power domain adaptation operations have been performed by the base station.
- When the actually activated/triggered sub-configuration combination has changed, if the power/maximum power/-power offset/maximum power offset value corresponding to the activated/triggered sub-configuration combination before receiving the configuration/indication is different from the power/maximum power/power offset/maximum power offset value corresponding to the activated/triggered sub-configuration combination after receiving the configuration/indication, the device (e.g., an NCR, an IAB node, etc.) or UE operating according to the proposed technology may regard that different power domain adaptation operations have been performed by the base station.
- When the actually activated/triggered sub-configuration combination has changed, if the smallest or largest index value among the activated/triggered sub-configurations before receiving the configuration/indication is different from the smallest or largest index value among the activated/triggered sub-configurations after receiving the configuration/indication, the device (e.g., an NCR, an IAB node, etc.) or UE operating according to the proposed technology may regard that different power domain adaptation operations have been performed by the base station.

According to another embodiment, even if the base station applies power/spatial domain adaptation, it may not apply the corresponding adaptation when transmitting a signal toward the NCR and/or IAB. That is, whether the power/spatial domain adaptation is applied may be preconfigured for each transmission beam (e.g., RS resource index) of the base station, and only for the transmission beams for which the application is permitted, the NCR, IAB, or UE may regard that the power/spatial domain adaptation indicated/configured by the base station has been applied.

[Embodiment #3] Operation scheme of NCR and/or IAB corresponding to NES operation through cell DTX/DRX of a base station

Embodiment #3-1) A DTX/DRX pattern of a device operating according to the proposed technology may be determined based on the cell DTX/DRX of the base station. When the cell DTX and/or cell DRX of the base station is configured/indicated, the UE/NCR/IAB node may not expect transmission and/or reception from the base station during a non-active duration. Therefore, operating the NCR/IAB node in an ON state during the non-active duration may be inefficient in terms of system energy or power consumption.

FIG. 26 illustrates an example of a procedure for configuring a DTX/DRX pattern of a device controlled by a base station based on a cell DTX/DRX pattern of the base station according to an embodiment of the present disclosure. FIG. 26 exemplifies a method performed by the base station.

Referring to FIG. 26, in step S2601, the base station transmits configuration information related to the cell DTX/DRX. The configuration information related to the cell DTX/DRX may include information related to a cycle, offset, on-duration, type (e.g., DTX, DRX, or DTXDRX), and active state of the cell DTX/DRX. Accordingly, the base station may perform an NES operation based on the cell DTX/DRX.

In step S2603, the base station determines the DTX/DRX pattern of the device based on the cell DTX/DRX pattern. The cell DTX/DRX pattern may affect the operation of nodes connected to the base station. Therefore, it is desirable to control the state of a node connected to the base station to an OFF state during the non-active duration according to the cell DTX/DRX. Therefore, the base station may configure DTX/DRX for the device and determine the DTX/DRX pattern of the device such that the device also operates in a non-active state during the non-active duration of the cell DTX/DRX.

In step S2605, the base station transmits configuration information related to the DTX/DRX of the device. The configuration information related to the DTX/DRX indicates the DTX/DRX operation of the device and includes information related to the DTX/DRX pattern. For example, the configuration information related to the DTX/DRX may include information related to a cycle, offset, and on-duration of the DTX/DRX.

In correspondence with the embodiment described with reference to FIG. 26, the device may receive configuration information related to the cell DTX/DRX and configuration information related to DTX/DRX. Accordingly, the device may identify active and non-active durations according to the DTX/DRX pattern determined based on the configuration information and may control its communication operation based on those periods. In this case, the DTX/DRX for the device may be configured such that the device also operates in a non-active state during the non-active duration of the cell DTX/DRX.

As in the embodiment described with reference to FIG. 26, the non-active duration of the cell DTX/DRX of the base station and the DTX/DRX of the device may be synchronized. Here, the synchronization may be understood as a relationship in which one of the non-active duration of the cell DTX/DRX of the base station and the non-active duration of the DTX/DRX of the device includes the other.

According to various embodiments, a DTX and/or DRX pattern may be individually configured/indicated per IAB node/NCR entity or per group of IAB nodes/NCR entities. Here, the DTX and/or DRX pattern may include parameters such as periodicity, start slot/offset, and on-duration. For example, an NCR/IAB node configured with a specific DTX or DRX pattern may not perfrom transmission or reception (e.g., transmission or reception related to a predefined or configured specific signal/channel) through the access link during an inactive duration. To this end, the base station may configure DTX/DRX for the IAB node/NCR entity, and in this case, may configure the inactive duration of the DTX/DRX to include the inactive duration of the cell DTX/DRX.

Embodiment #3-2) The activation of beams allocated to the NCR may be controlled according to the cell DTX/DRX pattern of the base station.

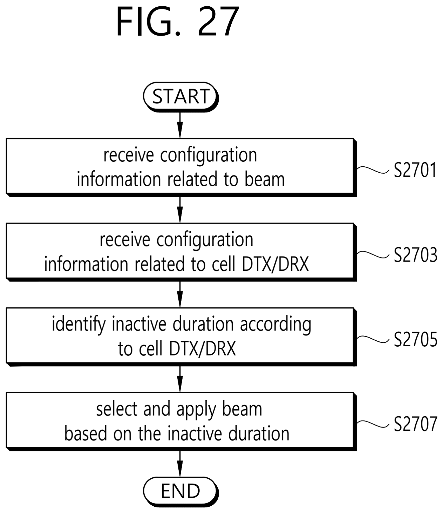

FIG. 27 illustrates an example of a procedure for applying a beam configured based on a cell DTX/DRX pattern of a base station according to an embodiment of the present disclosure. FIG. 27 exemplifies a method performed by a device (e.g., an NCR) operating according to the proposed technology.

Referring to FIG. 27, in step S2701, the device receives configuration information related to a beam. The configuration information may include information related to resources for the forwarding operation of the device and, specifically, may include a resource (e.g., at least one slot, at least one symbol, etc.) and a beam index used for the corresponding resource. Additionally, although not illustrated in FIG. 27, the device may receive additional control information for activation of the beam configured by the configuration information.

In step S2703, the device receives configuration information related to the cell DTX/DRX. The configuration information related to the cell DTX/DRX may include information related to the cycle, offset, on-duration, type, and active state of the cell DTX/DRX. Accordingly, the base station may perform an NES operation based on the cell DTX/DRX.

In step S2705, the device identifies the inactive duration according to the cell DTX/DRX. The device may identify the inactive duration based on the configuration information received in step S2703. The inactive duration may be determined based on parameters such as the cycle, offset, and on-duration included in the configuration information. During the inactive duration, at least part of the operation of the base station may be turned off.

In step S2707, the device selects and applies a beam based on the inactive duration. The beam to be used by the device has been configured according to the configuration information received in step S2701. Here, the configured beam may be treated differently during the inactive duration of the base station according to the cell DTX/DRX, compared to the active duration. For example, the device may ignore the beam configured by the configuration information or treat it as if no configuration exists. Furthermore, when the inactive duration ends, the device may maintain the corresponding beam in an inactive state or switch it to an active state. Here, when the corresponding beam is deactivated, another beam may be activated, or transmission by the device may be suspended.

[Table 6] shows the description of NCR extracted from R1-2304197.

[Table 6]

The NCR can be provided by ncr-PeriodicFwdResourceSetToAddModList a list of sets of resources for transmissions or receptions on the access link. A set of resources, from the list of sets of resources, is provided by NCR-PeriodicFwdResourceSet and occurs with a periodicity provided by ncr-periodicity. A resource from the set of resources is provided by NCR-PeriodicFwdResource and includes a pair of a time resource provided by ncr-PeriodicTimeResource and a beam [20, TS 38.106] with an index provided by ncr-beamIndex. The time resource starts at a slot that is offset by slotOffsetPeriodic slots from the start of the period for the set of resources and at a symbol that is offset by symbolOffset from the start of the slot, and has a duration provided by durationInSymbols for a SCS provided by ncr-referenceSCS.

The NCR can be provided by ncr-SemiPersistentFwdResourceSetToAddModList a list of sets of resources for transmissions or receptions on the access link and a MAC CE command can indicate a set of resources for the NCR to use or to stop using based on a corresponding identity provided by ncr-SemiPersistentFwdResourceSetId [11, TS 38.321]. The NCR uses or stops using the set of resources starting from the first slot that is after slot $k+3\,N_{slot}^{subframe,\mu}$ where k is the slot where the NCR-MT would transmit a PUCCH with HARQ-ACK information associated with the PDSCH providing the MAC CE command and $\mu$ is the SCS configuration for the PUCCH transmission. The set of resources is provided by NCR-SemiPersistentFwdResourceSet and occurs with a periodicity provided by ncr-periodicity. A resource from the set of resources is provided by NCR-SemiPersistentFwdResource and includes a pair of a time resource provided by ncr-SemiPersistentTimeResource and a beam with an index provided by ncr-beamIndex, where beamIndex can be updated by the MAC CE command. The time resource starts at a slot that is offset by slotOffsetSemiPersistent slots from the start of the period for the set of resources and at a symbol that is offset by symbolOffset from the start of the slot, and has a duration provided by durationInSymbols for a SCS provided by ncr-referenceSCS.

The NCR-MT can be configured to monitor PDCCH according to USS sets for detection of a DCI format 2_8 with CRC scrambled by an NCR-RNTI. A time resource and a corresponding beam index for transmissions or receptions on the access link are indicated by corresponding fields in DCI format 2_8 [4, TS 38.212]. When the NCR detects more than one DCI formats 2_8 that indicate beam indexes for time resources overlapping in a set of symbols, the NCR uses for the set of symbols a beam index that is indicated by a DCI format 2_8 that the NCR-MT detects in a most recent PDCCH monitoring occasion. The time resource starts at a slot that is offset by slotOffsetAperiodic slots from a reference slot and at a symbol that is offset by symbolOffset from the start of the slot, and has a duration provided by durationInSymbols for a SCS provided by ncr-referenceSCS. The reference slot is a slot that is after a slot of a PDCCH reception that provides the DCI format 2_8 by a number of slots indicated by XXX.

If
- a first time resource provided by NCR-SemiPersistentFwdResourceSet is indicated by a MAC CE command and is associated with a first beam index, and
- a second time resource is provided by NCR-PeriodicFwdResourceSet and is associated with a second beam index, and
- the first time resource overlaps with the second time resource in a set of symbols, and the NCR applies the first beam index for transmissions or receptions on the access link in the set of symbols.

If
- a first time resource is provided by NCR-PeriodicFwdResourceSet or NCR-SemiPersistentFwdResourceSet and is associated with a first beam index, and
- a second time resource is indicated by DCI format 2_8 and is associated with a second beam index provided by the DCI format 2_8, and
- the first time resource overlaps with the second time resource in a set of symbols,
the NCR applies, for transmissions or receptions on the access link in the set of symbols,
- the first beam index if NCR-PeriodicFwdResourceSet or NCR-SemiPersistentFwdResourceSet includes priorityFlag, and
- the second beam index if NCR-PeriodicFwdResourceSet or NCR-SemiPersistentFwdResourceSet does not include priorityFlag.

(continued)

| The NCR does not expect overlapping time resources provided by either NCR-PeriodicFwdResourceSet or NCR-SemiPersistentFwdResourceSet to be associated with different beam indexes. |
|---|

As shown in [Table 6], a beam index to be used for access link communication on a slot/symbol basis by NCR-Fwd may be configured or indicated through a periodic (P) scheme according to RRC configuration, a semi-persistent (SP) scheme through MAC-CE activation/deactivation, or an aperiodic (AP) scheme through DCI indication.

During an inactive duration of cell DTX and/or cell DRX, NCR-Fwd may ignore the beam index configured/indicated through the periodic/semi-persistent/aperiodic scheme, or may assume that no beam index is configured/indicated even if such configuration/indication exists, that is, NCR-Fwd may be regarded as being in a power-off state. In other words, during the inactive duration of cell DTX and/or cell DRX, the NCR may configure NCR-Fwd to be in a power-off state.

However, the operation of ignoring the corresponding beam index or assuming that no beam index is configured/indicated may not be applied to an interval in which transmission or reception of an SSB and/or PRACH is configured. In other words, the operation of treating the corresponding beam index as inactive, that is, ignoring or assuming that no beam index is configured/indicated, may be performed in remaining intervals other than intervals in which transmission or reception of a synchronization signal is configured or intervals in which transmission or reception of a random access preamble is configured.

Alternatively, when a beam index is indicated through a semi-persistent scheme, NCR-Fwd may assume that the corresponding beam index is automatically deactivated during an inactive duration without separate deactivation, and if there is no separate activation signaling, the corresponding beam index may be regarded as deactivated even during a subsequent active duration. That is, the beam index deactivated by the inactive duration may be switched to an active state through signaling for separate activation.

In the embodiments described above, the inactive duration of cell DTX and/or cell DRX may be understood as an inactive duration of a DTX and/or DRX pattern individually configured/indicated per IAB node/NCR entity or per a group of IAB nodes/NCR entities.

According to another embodiment, as a list for beam index configuration (e.g., ncr-PeriodicFwdResourceSet-ToAddModList and/or ncr-SemiPersistentFwdResourceSetToAddModList), a plurality of lists may be configured in advance, and a specific list may be applied according to a predetermined rule or separate configuration/indication. For example, a base station may pre-configure list #1 and list #2 and may indicate, through separate DCI or MAC-CE, which list is to be applied, and NCR-Fwd may interpret beam index information to be used for an access link per slot/symbol based on the indicated list. Alternatively, the base station may pre-configure list #1 and list #2, and NCR-Fwd may interpret beam index information to be used for an access link per slot/symbol such that list #1 is applied during an on-duration or active duration of cell DTX and/or cell DRX, and list #2 is applied during an inactive duration. In other words, the NCR may use beams included in list #1 during the on-duration or active duration, deactivate beams included in list #1 during the inactive duration, and use beams included in list #2. As another example, the base station may pre-configure list #1 and list #2, and NCR-Fwd may interpret beam index information to be used for an access link per slot/symbols such that when a certain spatial/power adaptation pattern is applied, list #1 is used, and when another spatial/power adaptation pattern is applied, list #2 is used.

In the case of beam index indication through DCI, a plurality of beam indexes corresponding to one code point may be configured in advance, and a specific value may be applied according to a predetermined rule or separate configuration/indication. For example, when beam index #1 and beam index #2 corresponding to one code point are pre-configured and the corresponding code point is configured/indicated, the base station may indicate, through separate DCI, group-common DCI, or MAC-CE, which beam index is to be applied, and NCR-Fwd may interpret beam index information to be used for an access link per slot/symbol based on the indicated beam index. Alternatively, for the indicated beam index #1 and beam index #2, NCR-Fwd may interpret beam index information to be used for an access link per slot/symbol such that, according to a predefined rule, beam index #1 is applied during the on-duration or active duration of cell DTX and/or cell DRX, and beam index #2 is applied during the inactive duration. As another example, for the indicated beam index #1 and beam index #2, NCR-Fwd may interpret beam index information to be used for an access link per slot/symbol such that when a certain spatial/power adaptation pattern is applied, beam index #1 is used, and when another spatial/power adaptation pattern is applied, beam index #2 is used.

Meanwhile, in beam index indication through the semi-persistent/aperiodic scheme, PDCCH monitoring associated with MAC CE indicating activation/deactivation of the semi-persistent scheme and/or PDCCH monitoring associated with DCI for the aperiodic scheme may be exceptionally allowed even during the inactive duration.

Example #3-3) The availability of resources configured for an IAB node may be controlled according to the cell DTX/DRX pattern of a base station.

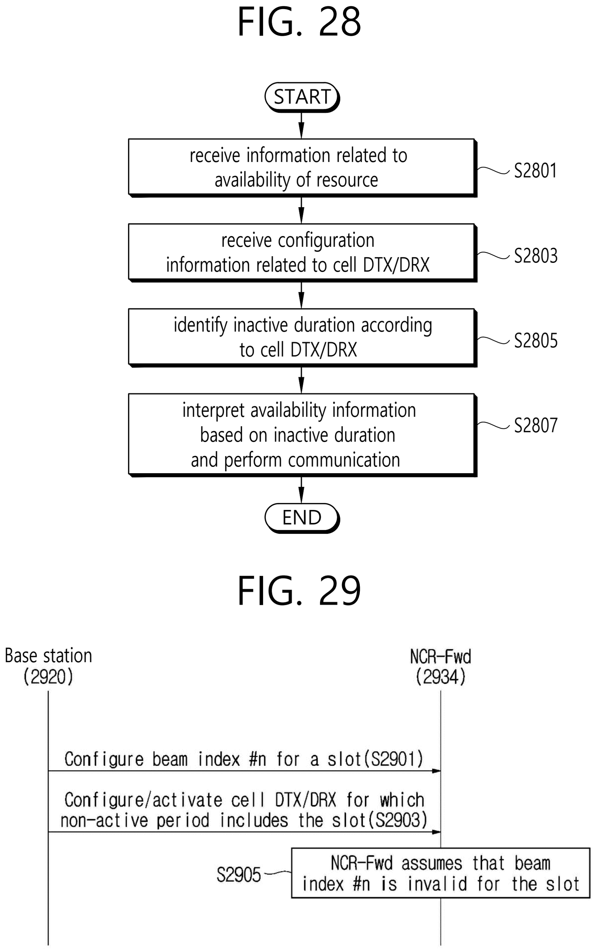

FIG. 28 illustrates an example of a procedure for determining resource availability based on a cell DTX/DRX pattern of a base station according to an embodiment of the present disclosure. FIG. 28 exemplifies a method performed by a device (e.g., an IAB node) operating according to the proposed technique.

Referring to FIG. 28, in step S2801, the device receives information related to resource availability. The information related to availability indicates at least one symbol and/or at least one RB available for signal transmission of the device. The information related to availability may be provided through a combination of higher layer configuration information and physical layer control information.

In step S2803, the device receives configuration information related to cell DTX/DRX. The configuration information related to cell DTX/DRX may include information related to a cycle, offset, on-duration, type, and active state of the cell DTX/DRX. Accordingly, the base station may perform an NES operation based on the cell DTX/DRX.

In step S2805, the device identifies an inactive duration according to the cell DTX/DRX. The device may identify the inactive duration based on the configuration information received in step S2803. The inactive duration may be determined based on the cycle, offset, and on-duration included in the configuration information. During the inactive duration, at least a part of the operations of the base station may be turned off.

In step S2807, the device interprets the availability information based on the inactive duration and performs communication. By the information received in step S2801, resources available to the device have been configured. Here, the configured resources may be treated differently during the inactive duration of the base station according to the cell DTX/DRX, compared to during the active duration. For example, the device may ignore the resources configured by the configuration information or may treat them as if they were not configured. Furthermore, when the inactive duration ends, the device may maintain the corresponding resources in an unavailable state or switch them to an available state. Here, when the corresponding resources are in an unavailable state, other resources may be switched to an available state, or communication of the device may be suspended.

As shown in [Table 7] below, the availability of resources used by the IAB-DU may be configured/indicated through RRC configuration and/or DCI (e.g., DCI format 2_5) indication. [Table 7] shows a description related to the IAB node extracted from TS 38.213.

[Table 7]

| |
|---|
| When a downlink, uplink, or flexible symbol is configured as soft, the IAB-DU cell can respectively transmit, receive or either transmit or receive in the symbol only if<br><br>- the IAB-MT does not transmit or receive during the symbol of the IAB-DU cell, or<br><br>- with respect to all serving cells, the IAB-MT would transmit or receive during the symbol of the IAB-DU cell, and the transmission or reception during the symbol of the IAB-DU cell is not changed due to a use of the symbol by the IAB-DU, or<br><br>- the IAB-MT detects a DCI format 2_5 with an AI index field value indicating the soft symbol as available if the IAB-MT is not configured with an SCG, or<br><br>- the IAB-MT detects two DCI formats 2_5 with an AI index field indicating the soft symbol as available from the MCG and SCG, respectively, or<br><br>- the IAB-MT detects a DCI format 2_5 with an AI index field value indicating the soft symbol as available from one cell group and with respect to all serving cells of the other cell group<br><br>  - the IAB-MT does not transmit or receive during the symbol of the IAB-DU cell, or<br><br>  - the IAB-MT would transmit or receive during the symbol of the IAB-DU cell, and the transmission or reception during the symbol of the IAB-DU cell does not change due to a use of the symbol by the IAB-DU.<br><br>When the IAB-MT receives a DCI format 2_5 from a serving cell in a cell group, the IAB-MT applies the information of the DCI format 2_5 to all serving cells of the cell group.<br><br>When a symbol is configured as unavailable, the IAB-DU neither transmits nor receives in the symbol.<br><br>With reference to slots of an IAB-DU cell, the IAB-DU can be provided an indication of hard, soft or unavailable type per RB set for symbols configured as downlink, uplink or flexible in a slot by Frequency-Domain HSNA Configuration List [16, TS 38.473]. The RB set size and the number of RB sets are configured by RB Set Configuration [16, TS 38.473]. The IAB-node can assume the RB set size for the IAB-DU cell is larger than or equal to the IAB-MT's smallest RBG size of the configured BWPs of the FDM required IAB-MT's serving cell(s) as indicated in Multiplexing Info [16, TS 38.473] of the DU cell. If an indication of hard, soft or unavailable type is not provided for an RB set of a symbol in a slot, the IAB-DU applies the configuration of hard, soft or unavailable type provided by HSNA Slot Configuration List in gNB-DU Cell Resource Configuration [16, TS 38.473] for the RB set of the symbol in the slot. If an indication of hard, soft, or unavailable type is provided for an RB set in a symbol of a slot, the IAB-DU applies the configuration of hard, soft, or unavailable type provided by Frequency-Domain HSNA Configuration List [16, TS 38.473] unless the symbol is configured as soft type in HSNA Slot Configuration List in gNB-DU Cell Resource Configuration [16, TS 38.473] and the IAB-DU cell can transmit or receive in the symbol.<br><br>When an RB set of a downlink, uplink, or flexible symbol is configured as hard, the IAB-DU cell can respectively transmit, receive, or either transmit or receive on the RB set in the symbol. An RB set of a symbol is equivalent to being configured as |

hard if an IAB-DU would transmit a SS/PBCH block, PDCCH for Type0-PDCCH CSS sets configured by pdcchConfigSIB1, or a periodic CSI-RS in the RB set of the symbol, or would receive a PRACH or a SR in the RB set of the symbol.

When an RB set of a downlink, uplink, or flexible symbol is configured as soft, the IAB-DU cell can respectively transmit, receive or either transmit or receive on the RB set in the symbol only if

- the IAB-MT does not transmit or receive on the RB set during the symbol of the IAB-DU cell, or

- with respect to all serving cells, the IAB-MT would transmit or receive on the RB set during the symbol of the IAB-DU cell, and the transmission or reception on the RB set or any RB set that is configured as unavailable or configured as soft and not indicated as available during the symbol of the IAB-DU cell is not changed due to a use of the RB set in the symbol by the IAB-DU, or

- the IAB-MT detects a DCI format 2_5 with an AI index field value indicating the soft RB set as available if the IAB-MT is not configured with an SCG, or

- the IAB-MT detects two DCI formats 2_5 with an AI index field value indicating the soft RB set as available from the MCG and SCG, respectively, or

- the IAB-MT detects a DCI format 2_5 with an AI index field value indicating the soft RB set as available from one cell group and with respect to all serving cells of the other cell group, the IAB-MT would transmit or receive on the RB set during the symbol of the IAB-DU cell, and the transmission or reception on the RB set during the symbol of the IAB-DU cell does not change due to a use of the RB set in the symbol by the IAB-DU.

When an RB set of a downlink, uplink, or flexible symbol is configured as unavailable, the IAB-DU neither transmits nor receives in the RB set in the symbol.

If an IAB-node is provided an AvailabilityIndicator, the IAB-node is provided an AI-RNTI by ai-RNTI and a payload size of a DCI format 2_5 by dci-PayloadSizeAI. The IAB-node is also provided a search space set configuration, by SearchSpace, for monitoring PDCCH.

For each cell of an IAB-DU in a set of cells of the IAB-DU, the IAB-DU can be provided:

- an identity of the IAB-DU cell by iab-DU-CellIdentity

- a location of an availability indicator (AI) index field in DCI format 2_5 by positionInDCI-AI or by positionInDCI-AI-r17

- a set of availability combinations by availabilityCombinations-r16 or by availabilityCombinationsRBGroups-r17, where each availability combination in the set of availability combinations includes

- resourceAvailability-r16 indicating availability of soft symbols in one or more slots for the IAB-DU cell, or one resourceAvailability-r17 indicating availability of soft resources in all RB sets in one or more slots for the IAB-DU cell, or one or multiple RB set groups by rb-SetGroups-r17 with each RB set groups by RB-SetGroup-r17 indicating resourceAvailability-r17 for soft resources in one or more slots for the associated rb-Sets-r17, and

- a mapping for the soft symbol, and/or for soft resources, availability combinations provided by resourceAvailability-r16 or resourceAvailability-r17 to a corresponding AI index field value in DCI format 2_5 provided by availabilityCombinationId-r16 or availabilityCombinationId-r17, respectively

With reference to a slot of an IAB-DU cell, if the IAB-DU is not provided an indication of hard, soft or unavailable type per RB set by Frequency-Domain HSNA Configuration List [16, TS 38.473], the indication of availability for the slot is based solely on availabilityCombinations-r16.

The IAB-DU can assume a same SCS configuration for availabilityCombinations-r16 or availabilityCombinationsRBGroups-r17 for a cell as an SCS configuration provided by gNB-DU Cell Resource Configuration for the cell.

An AI index field value in a DCI format 2_5 indicates to an IAB-DU a soft symbol or a soft RB set in an RB set group availability in each slot for a number of slots starting from the earliest slot of the IAB-DU which overlaps in time with the slot of the IAB-MT where the IAB-MT detects the DCI format 2_5. The number of slots is equal to or larger than a PDCCH monitoring periodicity for DCI format 2_5 as provided by SearchSpace. The AI index field includes  bits where maxAIindex is the maximum of the values provided by corresponding availabilityCombinationId. An availability for a soft symbol or a soft RB set in an RB set group in a slot is identified by a corresponding value resourceAvailability as provided in Table 14-3.

Table 14-3: Mapping between values of resourceAvailability elements and types of soft symbol or soft RB set availability in a slot

| Value | Indication |
|-------|------------|
| 0 | No indication of availability for soft symbols or soft RB sets in an RB set group |
| 1 | DL soft symbols or soft RB sets in an RB set group are indicated available<br>No indication of availability for UL and Flexible soft symbols or soft RB sets in an RB set group |
| 2 | UL soft symbol or soft RB sets in an RB set group are indicated available<br>No indication of availability for DL and Flexible soft symbols or soft RB sets in an RB set group |
| 3 | DL and UL soft symbols or soft RB sets in an RB set group are indicated available<br>No indication of availability for Flexible soft symbols or soft RB sets in an RB set group |
| 4 | Flexible soft symbols or soft RB sets in an RB set group are indicated available<br>No indication of availability for DL and UL soft symbols or soft RB sets in an RB set group |
| 5 | DL and Flexible soft symbols or soft RB sets in an RB set group are indicated available<br>No indication of availability for UL soft symbols or soft RB sets in an RB set group |
| 6 | UL and Flexible soft symbols or soft RB sets in an RB set group are indicated available<br>No indication of availability for DL soft symbols or soft RB sets in an RB set group |
| 7 | DL, UL, and Flexible soft symbols or soft RB sets in an RB set group are indicated available |

If a PDCCH monitoring periodicity for DCI format 2_5 is smaller than a duration of an availability combination of soft symbols over a number of slots that the IAB-MT obtains at a PDCCH monitoring occasion for DCI format 2_5 by a corresponding AI index field value, and the IAB-MT detects more than one DCI formats 2_5 indicating an availability combination of soft symbols or of soft RB sets in RB set groups in a slot, the IAB-MT expects that each of the more than one DCI formats 2_5 indicates a same value for the availability combination of the soft symbols or of soft RB sets in an RB set group in the slot. An IAB-MT monitors PDCCH candidates for a DCI format 2_5 with CRC scrambled by AI-RNTI in one or both of the following search space sets:

- a Type3-PDCCH CSS set configured by SearchSpace in PDCCH-Config with searchSpaceType = common;

- a USS set configured by SearchSpace in PDCCH-Config with searchSpaceType = ue-Specific.

According to one embodiment, during an inactive duration of cell DTX and/or cell DRX, the IAB node may ignore the configured/indicated availability information or may assume that no availability information is configured/indicated even if such information exists. That is, the IAB node may regard the availability information as unavailable or as no indication during the inactive duration. Here, the inactive duration may be understood as an inactive duration of a DTX and/or DRX pattern configured/indicated per IAB node or NCR entity, or per a group of IAB nodes/NCR entities.

According to another embodiment, as a list for availability information, a plurality of lists may be configured in advance, and a specific list may be applied according to a predetermined rule or separate configuration/indication. For example, a base station may pre-configure list #1 and list #2 and may indicate, through separate DCI or MAC-CE, which list is to be applied, and the IAB node may interpret availability information to be used for an access link per slot/symbol based on the indicated list. Alternatively, the base station may pre-configure list #1 and list #2, and the IAB node may interpret availability information to be used for an access link per slot/symbol such that list #1 is applied during the on-duration or active duration of cell DTX and/or cell DRX, and list #2 is applied during the inactive duration.

In the case of availability information indication through DCI, a plurality of availability indication values corresponding to one code point may be configured in advance, and a specific value may be applied according to a predetermined rule or separate configuration/indication. For example, when availability information #1 and availability information #2 corresponding to one code point are pre-configured and the corresponding code point is indicated, the base station may indicate, through separate DCI, group-common DCI, or MAC-CE, which availability information is to be applied, and the IAB node may interpret availability information per slot/symbol based on the indicated availability information. Alternatively, for the indicated availability information #1 and availability information #2, according to a predefined rule, the IAB node may apply availability information #1 during the on-duration or active duration of cell DTX and/or cell DRX, and apply availability information #2 during the inactive duration, and NCR-Fwd may interpret beam index information to be used for an access link per slot/symbol accordingly.

Meanwhile, in the indication of availability information through the DCI (e.g., DCI format 2_5), PDCCH monitoring associated with the corresponding DCI may be exceptionally allowed even during the inactive duration.

As shown in [Table 4], when the IAB-MT performs transmission and reception operations while the IAB-DU performs transmission operation simultaneously, a constraint on the transmission beam of the corresponding IAB-DU may be indicated through MAC CE, and the constraint may be differently indicated per slot/symbol. If a specific beam constraint is indicated for a certain slot/symbol, but the corresponding slot/symbol belongs to, or at least partially overlaps with, the inactive duration, the IAB node may ignore the specific beam constraint indicated for the corresponding slot/symbol. Alternatively, the IAB node may regard that the beam constraint indication for the corresponding slot/symbol has not been received. Alternatively, the IAB node may regard that the restricted beam or RS resource index for the corresponding slot/symbol has not been indicated.

As shown in [Table 5], when the IAB-MT performs a reception operation while the IAB-DU simultaneously performs transmission and reception operations, TX power control of the base station may be indicated through MAC CE, and information related to the DL TX power control may be differently indicated per slot/symbol. If information related to DL TX power control is indicated for a certain slot/symbol, but the corresponding slot/symbol belongs to, or at least partially overlaps with, the inactive duration, the IAB node may ignore the specific DL TX power control information indicated for the corresponding slot/symbol. Alternatively, the IAB node may regard that the indication of DL TX power control information for the corresponding slot/symbol has not been received. Alternatively, the IAB node may regard that the DL TX power control information for the corresponding slot/symbol has not been indicated.

In applying the proposed techniques for the NCR and IAB node described above, whether to apply may be determined differently depending on the periodicity of the cell DTX/DRX or DTX/DRX pattern, or the length of the inactive duration. For example, the proposed techniques may be applied only when the periodicity or the length of the inactive duration is longer than N slots, and otherwise, the conventional method may be applied. Here, the value of N may be predefined or configured/indicated.

[Embodiment #4] NES Request Scheme of NCR or IAB Node

According to a determination that NES operation of an NCR or an IAB node is required, the NCR or the IAB node may request the NES operation through an uplink signal/channel. That is, a device (e.g., NCR or IAB node) operating according to the proposed technique may transmit a message to the base station requesting the NES operation. The message may include information indicating that the NES operation is requested, information indicating the type of the requested NES operation, and information related to a cause for requesting the NES operation. For example, the NES request may be transmitted as UCI information or through an SRS/PRACH. Accordingly, a parent node (i.e., base station) may enable or disable one of the NES operations such as spatial/power domain adaptation and/or cell DTX/DRX through DCI or MAC CE.

FIG. 29 illustrates an example of a procedure for beam management between a base station and an NCR according to an embodiment of the present disclosure. FIG. 29 exemplifies signal exchange between the base station 2920 and NCR-Fwd 2934.

Referring to FIG. 29, in step S2901, the base station 2920 transmits configuration information to NCR-Fwd 2934 indicating beam index #n for a slot. That is, the base station 2920 pre-configures, for NCR-Fwd 2934, the beam index to be used for access link communication for a specific slot.

In step S2903, the base station 2920 transmits information to NCR-Fwd 2934 for configuration and/or activation of cell DTX/DRX. Here, the configuration information indicates a non-active duration of the cell DTX/DRX, and the non-active duration may include the slot indicated in step S2901. That is, the base station 2920 additionally configures/indicates cell DTX and/or cell DRX, and the corresponding slot may belong to the non-active duration.

In step S2905, NCR-Fwd 2934 assumes that beam index #n is invalid in the corresponding slot. Accordingly, NCR-Fwd 2934 may regard that beam index #n corresponding to the pre-configured slot is not configured and may not perform transmission and/or reception through the access link during the corresponding slot.

In preparation for the base station turning antennas on and off or adjusting power values for the purpose of NES, values of the number of a plurality of APs or a plurality of power offset values may be related to one CSI report configuration. Specifically, a plurality of sub-configurations may be configured within one CSI report configuration, and each sub-configuration may be related to a specific number of APs or a specific power offset value. In addition, the base station may save energy by reducing transmission and/or reception during the non-active duration by distinguishing between on-duration or active duration and non-active duration through cell DTX and/or cell DRX configuration/instruction. The present disclosure enables efficient operation of the NCR and IAB by proposing an NCR and IAB operation method supporting base station NES in a deployment environment where NCR and/or IAB are installed.

In the embodiments described above, the device operating according to various embodiments of the present disclosure has been described as a device assisting communication between a base station and a UE, such as an NCR or an IAB. However, the operations according to the embodiments described above may also be applied to the operation of a UE, rather than a third device other than the base station and the UE. That is, the device operating according to the embodiments described above, that is, according to the proposed technique, may be understood as a UE.

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

**INDUSTRIAL APPLICABILITY**

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

**Claims**

1. A method performed by a device in a wireless communication system, the method comprising:

   receiving, from the base station, first configuration information related to a cell discontinuous transmission (DTX) or a cell discontinuous reception (DRX);
   receiving, from the base station, second configuration information related to a DTX or a DRX of the device;
   checking an active duration and an inactive duration according to a pattern of the DTX or the DRX; and
   controlling a communication operation based on the active duration and the inactive duration,
   wherein the inactive duration according to the pattern of the DTX or the DRX is configured to include an inactive duration according to a pattern of the cell DTX or the cell DRX.

2. The method of claim 1, the step of controlling the communication operation comprising:
   stopping a transmission or reception operation through an access link during the inactive duration according to the pattern of the DTX or the DRX.

3. The method of claim 1, further comprising:

   receiving, from the base station, third configuration information including information related to a beam used in an access link;
   processing at least one beam configured by the third configuration information into a deactivation state during the inactive duration of the cell DTX or the cell DRX; and
   performing communication using at least one beam configured by the third configuration information during the active duration of the cell DTX or the cell DRX.

4. The method of claim 3, the step of processing the at least one beam into the deactivation state comprising:
   configuring the device to a power-off state during the inactive duration of the cell DTX or the cell DRX.

5. The method of claim 4, the step of processing the at least one beam into the deactivation state comprising:
   processing the at least one beam into the deactivation state in a remaining duration excluding a duration in which a transmission or reception of a synchronization signal or a random access preamble is configured within the inactive duration of the cell DTX or the cell DRX.

**6.** The method of claim 5,
wherein the at least one beam processed into the deactivation state is switched to an activation state by a signaling for an activation, after the inactive duration of the cell DTX or the cell DRX.

**7.** The method of claim 3,
wherein the third configuration information includes information related to a first list including the at least one beam used during the active duration of the cell DTX or the cell DRX, and information related to a second list including at least another beam used during the inactive duration of the cell DTX or the cell DRX.

**8.** The method of claim 7, the step of processing the at least one beam into the deactivation state comprising:

deactivating the at least one beam included in the first list; and
activating the at least another beam included in the second list.

**9.** The method of claim 1, further comprising:

receiving, from the base station, information including information related to an availability of a resource configured for the device;
processing the resource as unavailable when the resource is included in the inactive duration of the cell DTX or the cell DRX.

**10.** The method of claim 9, wherein the information related to the availability of configuration information includes information related to a first list including the resource used during the active duration of the cell DTX or the cell DRX, and information related to a second list including another resource used during the inactive duration of the cell DTX or the cell DRX.

**11.** A device in a wireless communication system, comprising:

a transceiver; and
a processor connected to the transceiver,
wherein the processor is configured to:

receive, from the base station, first configuration information related to a cell discontinuous transmission (DTX) or a cell discontinuous reception (DRX);
receive, from the base station, second configuration information related to a DTX or a DRX of the device;
check an active duration and an inactive duration according to a pattern of the DTX or the DRX; and
control a communication operation based on the active duration and the inactive duration,
wherein the inactive duration according to the pattern of the DTX or the DRX is configured to include an inactive duration according to a pattern of the cell DTX or the cell DRX.

**12.** A communication device comprising:

at least one processor; and
at least one computer memory connected to the at least one processor and storing instructions that direct operations when executed by the at least one processor, the operations comprising:

receiving, from the base station, first configuration information related to a cell discontinuous transmission (DTX) or a cell discontinuous reception (DRX);
receiving, from the base station, second configuration information related to a DTX or a DRX of the device;
checking an active duration and an inactive duration according to a pattern of the DTX or the DRX; and
controlling a communication operation based on the active duration and the inactive duration,
wherein the inactive duration according to the pattern of the DTX or the DRX is configured to include an inactive duration according to a pattern of the cell DTX or the cell DRX.

**13.** A non-transitory computer-readable medium storing at least one instruction, the at least one instruction being executable by a processor, the at least one instruction causing a device to:

receive, from the base station, first configuration information related to a cell discontinuous transmission (DTX) or a cell discontinuous reception (DRX);

receive, from the base station, second configuration information related to a DTX or a DRX of the device;

check an active duration and an inactive duration according to a pattern of the DTX or the DRX; and

control a communication operation based on the active duration and the inactive duration,

wherein the inactive duration according to the pattern of the DTX or the DRX is configured to include an inactive duration according to a pattern of the cell DTX or the cell DRX.

# FIG. 1

Non-Terrestrial Network

Split gNB in NG-RAN

Mobile IAB

MT | DU

gNB-CU-UP

gNB-CU-UP — gNB-CU-UP

CU | DU

Donor node

gNB-DU

UE-to-UE relay

UE-to-Network relay

Sidelink Relay

Network Controlled Repeater

EP 4 716 310 A1

# FIG. 2

# FIG. 3

200

208

202    206

First Device

Processor(s)    Transceiver(s)

Memory(s)

204

# FIG. 4

Terminal (410)    Base Station (420)

synchronization (401)

System information acquisition (403)

random access (405)

control information signaling (405)

data transmission/reception (407)

# FIG. 5

# FIG. 6

First node                                    Second node

1. first signaling

2. perform operation based on AI/ML model

3. second signaling

EP 4 716 310 A1

FIG. 7

# FIG. 8

BS(820)

UE(810)　　　　　　　Cell#1(THz)　　　Cell#2

system information of cell#1 (801)

obtain synchronization for cell#1 (803)

signal for accessing to cell#1 (805)

perform access procedure and communication (807)

# FIG. 9

UE(910)　　　　　　　　　　　　BS(920)

resource configuration
for beam management (901)

measurement signal (903)

feedback signal (905)

perform communication (907)

# FIG. 10a

Satellite
(or UAS platform)

Service
link

Feeder link

Gateway

Data network

User
Equipments

Beam foot
print

Field of view of the satellite
(or UAS platform)

EP 4 716 310 A1

# FIG. 10b

EP 4 716 310 A1

# FIG. 11a

# FIG. 11b

# FIG. 11c

# FIG. 12a

6G-based wireless communication system

# FIG. 12b

EP 4 716 310 A1

6G-based wireless communication system

Sensing Transmitter — Sensing signal — Object — Object — Scattered/Reflected signal — Sensing Receiver — Sensing data — Processing — Sensing results — Wireless Sensing Service — Sensing results — Trusted 3rd party

# FIG. 13

:Sensing Resource  :Comunication Resource

Frequency

Symbol unit

Resource Block unit

Time

# FIG. 14

IDENTIFY SENSING CAPABILITY

CONFIGURE SENSING OPERATION

PERFORM SENSING OPERATION

# FIG. 15

```
            ┌─────────┐
            │  START  │
            └────┬────┘
                 │
                 ▼
    ┌────────────────────────────┐
    │  IDENTIFY NES SOLUTION(S)   │
    └────────────┬───────────────┘
                 │
                 ▼
    ┌────────────────────────────┐
    │  PERFORM SIGNALING FOR NES  │
    └────────────┬───────────────┘
                 │
                 ▼
    ┌────────────────────────────┐
    │ PERFORM OPERATIONS FOR NES  │
    └────────────┬───────────────┘
                 │
                 ▼
            ┌─────────┐
            │   END   │
            └─────────┘
```

# FIG. 16

TERMINAL                                    BASE STATION

SYSTEM INFORMATION

┌──────────────────────────┐
│ IDENTIFY INFORMATION      │
│ RELATED TO CELL DTX/DRX   │
└──────────────────────────┘

⟵ RANDOM ACCESS ⟶

CONFIGURATION INFORMATION

CONTROL INFORMATION

⟵ PERFORM COMMUNICATION
BASED ON CELL DTX/DRX ⟶

# FIG. 17

# FIG. 18

# FIG. 19

# FIG. 20

# FIG. 21

START

identify spatial domain adaptation
pattern of base station ⌇ S2101

determine beam for B-link
based on the identified pattern ⌇ S2103

receive signal on the B-link using
the determined beam ⌇ S2105

END

# FIG. 22

START

identify spatial domain adaptation
pattern of base station ⌇ S2201

determine beam for B-link
based on the identified pattern ⌇ S2203

transmit signal on the B-link using
the determined beam ⌇ S2205

END

# FIG. 23

```
        ( START )
            │
            ▼
┌─────────────────────────┐
│  identify information    │
│  related to beam         │      S2301
│  restriction per spatial │
│  domain adaptation       │
│  pattern                 │
└─────────────────────────┘
            │
            ▼
┌─────────────────────────┐
│  identify spatial domain │      S2303
│  adaptation pattern of   │
│  base station            │
└─────────────────────────┘
            │
            ▼
┌─────────────────────────┐
│  identify and apply      │      S2305
│  available beam based on │
│  the identified pattern  │
└─────────────────────────┘
            │
            ▼
        (  END  )
```

# FIG. 24

```
        ( START )
            │
            ▼
┌─────────────────────────┐
│  identify power domain   │      S2401
│  adaptation pattern of   │
│  base station            │
└─────────────────────────┘
            │
            ▼
┌─────────────────────────┐
│  determine gain value    │
│  for amplify-and-forward │      S2403
│  based on the identified │
│  pattern                 │
└─────────────────────────┘
            │
            ▼
┌─────────────────────────┐
│  process signal using    │      S2405
│  the determined gain     │
│  value                   │
└─────────────────────────┘
            │
            ▼
        (  END  )
```

# FIG. 25

START

identify power domain adaptation
pattern of base station — S2501

determine power adjustment value of
base station based on the identified pattern — S2503

process signal using
the determined power adjustment value — S2505

END

# FIG. 26

START

transmit configuration information
related to cell DTX/DRX — S2601

determine DTX/DRX pattern of
assist node based on cell DTX/DRX pattern — S2603

transmit configuration information
related to DTX/DRX of assist node — S2605

END

# FIG. 27

START

receive configuration
information related to beam — S2701

receive configuration
information related to cell DTX/DRX — S2703

identify inactive duration according
to cell DTX/DRX — S2705

select and apply beam
based on the inactive duration — S2707

END

# FIG. 28

```
              ( START )
                  │
                  ▼
┌─────────────────────────────────┐
│   receive information related to │ ── S2801
│      availability of resource    │
└─────────────────────────────────┘
                  │
                  ▼
┌─────────────────────────────────┐
│      receive configuration       │ ── S2803
│  information related to cell     │
│            DTX/DRX               │
└─────────────────────────────────┘
                  │
                  ▼
┌─────────────────────────────────┐
│  identify inactive duration      │ ── S2805
│     according to cell DTX/DRX    │
└─────────────────────────────────┘
                  │
                  ▼
┌─────────────────────────────────┐
│  interpret availability          │ ── S2807
│  information based on inactive    │
│  duration and perform            │
│  communication                   │
└─────────────────────────────────┘
                  │
                  ▼
              (  END  )
```

# FIG. 29

```
Base station                                 NCR-Fwd
  (2920)                                      (2934)
    │                                            │
    │  Configure beam index #n for a slot(S2901) │
    │───────────────────────────────────────────▶│
    │                                            │
    │  Configure/activate cell DTX/DRX for which │
    │  non-active period includes the slot(S2903)│
    │───────────────────────────────────────────▶│
    │                                            │
    │                 ┌──────────────────────────────┐
    │         S2905 ──│   NCR-Fwd assumes that beam   │
    │                 │ index #n is invalid for the  │
    │                 │            slot              │
    │                 └──────────────────────────────┘
    │                                            │
    │                                            │
```

## INTERNATIONAL SEARCH REPORT

| International application No. |
| --- |
| **PCT/KR2024/095785** |

| A. | CLASSIFICATION OF SUBJECT MATTER |
| --- | --- |

**H04W 52/02**(2009.01)i; **H04W 72/044**(2023.01)i; **H04W 72/23**(2023.01)i; **H04W 52/52**(2009.01)i; **H04W 76/28**(2018.01)i; **H04W 84/04**(2009.01)i

According to International Patent Classification (IPC) or to both national classification and IPC

| B. | FIELDS SEARCHED |
| --- | --- |

Minimum documentation searched (classification system followed by classification symbols)

H04W 52/02(2009.01); H04W 76/20(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀(cell) DTX/DRX, 비-활성 구간(non-active period), 빔(beam), 자원 (resource), 불활성화(deactivation), IAB, NCR

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2016-0083089 A (INTEL IP CORPORATION) 11 July 2016 (2016-07-11) See paragraphs [0014], [0022], [0024]-[0026] and [0037]. | 1-2,11-13 |
| Y | | 9-10 |
| A | | 3-8 |
| Y | KR 10-2021-0045406 A (GUANGDONG OPPO MOBILE TELECOMMUNICATIONS CORP., LTD.) 26 April 2021 (2021-04-26) See claims 5 and 9. | 9-10 |
| A | HUAWEI. (TP to Netw_Energy_NR BLCR for TS 38.473, 38.470 and 38.300) Network energy saving techniques. R3-232902, 3GPP TSG-RAN WG3 Meeting #120. Incheon, Korea. 12 May 2023. See section 2.3. | 1-13 |
| A | LENOVO. Discussion on NES related issues. R3-233045, 3GPP TSG-RAN WG3 #120. Incheon. 12 May 2023. See sections 2.1-2.3. | 1-13 |

✓ Further documents are listed in the continuation of Box C.    ✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 August 2024** | **23 August 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/095785**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2021-0119406 A (ZTE CORPORATION) 05 October 2021 (2021-10-05)<br>See paragraphs [0020]-[0025]; and figure 2. | 1-13 |

Form PCT/ISA/210 (second sheet) (July 2022)

### INTERNATIONAL SEARCH REPORT
Information on patent family members

| International application No. |
| --- |
| **PCT/KR2024/095785** |

| Patent document cited in search report | | | Publication date (day/month/year) | Patent family member(s) | | | Publication date (day/month/year) |
| --- | --- | --- | --- | --- | --- | --- | --- |
| KR | 10-2016-0083089 | A | 11 July 2016 | CN | 106465263 | A | 22 February 2017 |
| | | | | CN | 106465263 | B | 29 November 2019 |
| | | | | CN | 110213837 | A | 06 September 2019 |
| | | | | CN | 110213837 | B | 12 September 2023 |
| | | | | EP | 3092854 | A1 | 16 November 2016 |
| | | | | EP | 3092854 | A4 | 27 December 2017 |
| | | | | EP | 3092854 | B1 | 12 December 2018 |
| | | | | EP | 3402302 | A1 | 14 November 2018 |
| | | | | EP | 3402302 | B1 | 11 December 2019 |
| | | | | ES | 2715661 | T3 | 05 June 2019 |
| | | | | HU | E041724 | T2 | 28 May 2019 |
| | | | | JP | 2016-540444 | A | 22 December 2016 |
| | | | | JP | 6370908 | B2 | 08 August 2018 |
| | | | | KR | 10-1943172 | B1 | 28 January 2019 |
| | | | | US | 10075988 | B2 | 11 September 2018 |
| | | | | US | 10225880 | B2 | 05 March 2019 |
| | | | | US | 2015-0195867 | A1 | 09 July 2015 |
| | | | | US | 2017-0111956 | A1 | 20 April 2017 |
| | | | | WO | 2015-103628 | A1 | 09 July 2015 |
| KR | 10-2021-0045406 | A | 26 April 2021 | AU | 2021-436721 | A1 | 25 March 2021 |
| | | | | CN | 112534882 | A | 19 March 2021 |
| | | | | EP | 3840483 | A1 | 23 June 2021 |
| | | | | EP | 3840483 | A4 | 25 August 2021 |
| | | | | EP | 3840483 | B1 | 02 August 2023 |
| | | | | JP | 2022-501869 | A | 06 January 2022 |
| | | | | JP | 7238095 | B2 | 13 March 2023 |
| | | | | KR | 10-2476538 | B1 | 13 December 2022 |
| | | | | TW | 202021391 | A | 01 June 2020 |
| | | | | TW | I821368 | B | 11 November 2023 |
| | | | | US | 11924907 | B2 | 05 March 2024 |
| | | | | US | 2021-0176814 | A1 | 10 June 2021 |
| | | | | WO | 2020-034218 | A1 | 20 February 2020 |
| KR | 10-2021-0119406 | A | 05 October 2021 | CN | 113396615 | A | 14 September 2021 |
| | | | | CN | 113396615 | B | 26 April 2024 |
| | | | | EP | 3918848 | A1 | 08 December 2021 |
| | | | | EP | 3918848 | A4 | 26 January 2022 |
| | | | | MX | 2021008048 | A | 08 September 2021 |
| | | | | US | 2021-0352588 | A1 | 11 November 2021 |
| | | | | WO | 2020-034608 | A1 | 20 February 2020 |

Form PCT/ISA/210 (patent family annex) (July 2022)